# EUROPEAN PATENT SPECIFICATION

(11) **EP 3 051 535 B1**
(45) Date of publication and mention of the grant of the patent: **30.12.2020**
(21) Application number: 14849876.9
(22) Date of filing: 12.09.2014
(51) Int. Cl.: G11B 20/10, G11B 27/00, G11B 27/10, H04N 5/85, H04N 5/91, H04N 5/93, H04N 19/36, H04N 19/85, G09G 5/00, G11B 27/11

(54) **REPRODUCTION DEVICE, REPRODUCTION METHOD, AND RECORDING MEDIUM**
WIEDERGABEVORRICHTUNG, WIEDERGABEVERFAHREN UND AUFZEICHNUNGSMEDIUM
DISPOSITIF DE REPRODUCTION, PROCÉDÉ DE REPRODUCTION ET SUPPORT D'ENREGISTREMENT

(30) Priority: 27.09.2013 JP 2013202437
(43) Date of publication of application: 03.08.2016
(73) Proprietor: Sony Corporation, Tokyo 108-0075 (JP)
(72) Inventor: YAMAMOTO, Kazuo, Tokyo 108-0075 (JP); TAKAHASHI, Kuniaki, Tokyo 108-0075 (JP)
(74) Representative: Witte, Weller & Partner Patentanwälte mbB
(86) International application number: PCT/JP2014/074246
(87) International publication number: WO 2015/045916

(56) References cited:
- EP-A1- 3 013 041
- WO-A1-2012/153224
- WO-A1-2013/046096
- WO-A2-2012/147022
- JP-A- 2007 534 238
- US-A1- 2011 154 426
- US-A1- 2012 054 664

## Description

### Technical Field

The present technology relates to a reproduction device, a reproduction method, and a recording medium, and more particularly, to a reproduction device, a reproduction method, and a recording medium configured to display content having a large brightness dynamic range with appropriate brightness.

### Background Art

There is a Blu-ray (registered trademark) Disc (hereinafter, as appropriate, referred to as a BD) serving as a recording medium of content such as a movie. Hitherto, in authoring a video recorded on a BD, a dynamic range of the master video is compressed on the premise that the video is viewed on a monitor with a standard brightness (100 nit = 100 cd/m²).

The video that is to be the master is taken by a high-quality camera and includes a dynamic range that is equivalent to or greater than a dynamic range that can be displayed on a monitor with the standard brightness. It goes without saying that the dynamic range of the master video is deteriorated by being compressed.

### Citation List

### Patent Literature

Patent Literature 1: JP 2009-58692A
Patent Literature2: JP 2009-89209A
Patent Literature 3 WO 2013/046096 A1
Patent Literature 4 US 2012/0054664 A1

### Summary of Invention

### Technical Problem

Owing to technological progresses in displays such as organic electroluminescence (EL) displays and liquid crystal displays (LCDs), monitors with brightness, such as 500 nit and 1000 nit, that is brighter than standard monitors are commercially available. Content that can take advantage of the performance of such monitors having such a wide dynamic range is in demand.

It is desirable to display content having a large brightness dynamic range with appropriate brightness.

### Solution to Problem

The present invention is defined by reproduction device as defined in claim 1 and a reproduction method as defined in claim 6.

### Advantageous Effects of Invention device.

The second acquisition unit may acquire the brightness adjustment data from a server connected through a network.

The recording medium may be a Blu-ray disc. A URL of the server may be described in a PlayList file or another file recorded on the recording medium.

The reading unit may read identification information of the recording medium from the recording medium. The second acquisition unit may transmit the identification information of the recording medium and the identification information of the display device to the server and acquire the brightness adjustment data managed in association with the identification information of the recording medium and the identification information of the display device in the server.

The reading unit may read identification information of the recording medium from the recording medium. The first acquisition unit may acquire specification information indicating the specification of the display device from the display device. The second acquisition unit may transmit the identification information of the recording medium, the identification information of the display device, and the specification information to the server and acquire the brightness adjustment data according to the specification of the display device indicated by the specification information among the brightness adjustment data managed in association with the identification information of the recording medium in the server.

The second coded data may include the brightness characteristic information as auxiliary information. The second acquisition unit may acquire the brightness characteristic information together with the brightness adjustment data when the brightness characteristic information is managed in the server,. The output unit may output the brightness characteristic information acquired by the second acquisition unit when the brightness characteristic information is acquired by the second acquisition unit, and the output unit may output the brightness characteristic information included in the second coded data when the brightness characteristic information is not acquired by the second acquisition unit.

The second acquisition unit may acquire the brightness adjustment data recorded in association with the identification information of the display device among the plurality of pieces of brightness adjustment data recorded on the recording medium.

The first acquisition unit may acquire specification information indicating the specification of the display device from the display device. The second acquisition unit may acquire the brightness adjustment data according to the specification of the display device indicated by the specification information when there is no brightness adjustment data recorded in association with the identification information of the display device.

According to another aspect of the present technology, there is provided a reproduction device including: a reading unit configured to read first coded data from a recording medium recording the first coded data between the first coded data of a standard video which is a video in a first brightness range and second coded data of an extended video which is a video in a second brightness range broader than the first brightness range; a first acquisition unit configured to perform communication with a display device capable of displaying the extended video and acquire identification information of the display device; a second acquisition unit configured to acquire brightness conversion definition data according to a specification of the display device used to convert the standard video into the extended video based on the identification information of the display device; a decoding unit configured to decode the first coded data; a conversion unit configured to convert the standard video obtained by decoding the first coded data into the extended video based on the brightness conversion definition data; and an output unit configured to output data of the extended video obtained by performing brightness conversion together with brightness characteristic information representing a characteristic of the brightness of the extended video to the display device.

The second acquisition unit may acquire the brightness conversion definition data from a server connected through a network.

The recording medium may be a Blu-ray disc. A URL of the server may be described in a PlayList file or another file recorded on the recording medium.

The reading unit may read identification information of the recording medium from the recording medium. The second acquisition unit may transmit the identification information of the recording medium and the identification information of the display device to the server and thereby acquire the brightness conversion definition data managed in association with the identification information of the recording medium and the identification information of the display device in the server.

The reading unit may read identification information of the recording medium from the recording medium. The first acquisition unit may acquire specification information indicating the specification of the display device from the display device. The second acquisition unit may transmit the identification information of the recording medium, the identification information of the display device, and the specification information to the server and thereby acquire the brightness conversion definition data according to the specification of the display device indicated by the specification information among the brightness conversion definition data managed in association with the identification information of the recording medium in the server.

The first coded data may include the brightness characteristic information as auxiliary information. In this case, the second acquisition unit acquires the brightness characteristic information together with the brightness conversion definition data when the brightness characteristic information is managed in the server, and the output unit outputs the brightness characteristic information acquired by the second acquisition unit when the brightness characteristic information is acquired by the second acquisition unit, and the output unit outputs the brightness characteristic information included in the first coded data when the brightness characteristic information is not acquired by the second acquisition unit.

The second acquisition unit may acquire the brightness conversion definition data recorded in association with the identification information of the display device among the plurality of pieces of brightness conversion definition data recorded on the recording medium.

The first acquisition unit may acquire specification information indicating the specification of the display device from the display device. The second acquisition unit may acquire the brightness conversion definition data according to the specification of the display device indicated by the specification information when there is no brightness conversion definition data recorded in association with the identification information of the display device.

According to an aspect of the present technology, second coded data is read from a recording medium recording the second coded data between first coded data of a standard video which is a video in a first brightness range and the second coded data of an extended video which is a video in a second brightness range broader than the first brightness range, communication is performed with a display device capable of displaying the extended video and identification information of the display device is acquired, brightness adjustment data according to a specification of the display device used to adjust brightness of the extended video is acquired based on the identification information of the display device; the brightness of the extended video obtained by decoding the second coded data is adjusted based on the brightness adjustment data, and data of the extended video after the brightness adjustment together with brightness characteristic information representing a characteristic of the brightness of the extended video are output to the display device.

According to another aspect of the present technology, first coded data is read from a recording medium recording the first coded data between the first coded data of a standard video which is a video in a first brightness range and second coded data of an extended video which is a video in a second brightness range broader than the first brightness range, communication is performed with a display device capable of displaying the extended video and identification information of the display device is acquired, brightness conversion definition data according to a specification of the display device used to convert the standard video into the extended video is acquired based on the identification information of the display device, the standard video obtained by decoding the first coded data is converted into the extended video based on the brightness conversion definition data, and data of the extended video obtained by performing brightness conversion together with brightness characteristic information representing a characteristic of the brightness of the extended video are output to the display device.

Here, a network refers to a construction configured with at least two connected devices and in which information can be delivered from a certain device to another device. Devices performing communication via the network may be independent devices or may be internal blocks configuring one device.

The communication may be not only wireless communication and wired communication but also communication in which wireless communication and wired communication are combined. That is, wireless communication is performed in certain sections and wired communication is performed in other sections. Further, communication from a certain device to another device is performed as wired communication and communication from the other device to the certain device may be performed as wireless communication.

### Advantageous Effects of Invention

According to the present technology, it is possible to display content having a large brightness dynamic range with appropriate brightness.

The advantageous effects described herein are not necessarily limited, but may be any advantageous effect described in the present disclosure.

### Brief Description of Drawings

[FIG. 1] FIG. 1 is a diagram illustrating an exemplary configuration of a recording/reproduction system according to an embodiment of the present technology.
[FIG. 2] FIG. 2 is a diagram illustrating an example of signal processing in mode-i.
[FIG. 3] FIG. 3 is a diagram illustrating a flow of signals processed in mode-i.
[FIG. 4] FIG. 4 is a diagram illustrating an example of a flow of signal processing in mode-ii.
[FIG. 5] FIG. 5 is a diagram illustrating a flow of signals processed in mode-ii.
[FIG. 6] FIG. 6 is a diagram illustrating a configuration of an access unit of an HEVC.
[FIG. 7] FIG. 7 is a diagram illustrating syntax of Tone mapping information.
[FIG. 8] FIG. 8 is a diagram illustrating examples of information used as tone mapping definition information and HDR information.
[FIG. 9] FIG. 9 is a diagram illustrating an example of a tone curve drawn with the tone mapping information of tone_map_model_id = 0.
[FIG. 10] FIG. 10 is a diagram illustrating an example of a step function drawn with the tone mapping information of tone_map_model_id = 2.
[FIG. 11] FIG. 11 is a diagram illustrating an example of a polygonal line function drawn with the tone mapping information of tone_map_model_id = 3.
[FIG 12] FIG. 12 is a diagram illustrating an example of each pieces of information included in the HDR information.
[FIG. 13] FIG. 13 is a diagram illustrating an example of a management structure of an AV stream in BD-ROM format.
[FIG. 14] FIG. 14 is a diagram illustrating a structures of Main Path and Sub Paths.
[FIG. 15] FIG. 15 is a diagram illustrating an example of a management structure of a file.
[FIG. 16] FIG. 16 is a diagram illustrating syntax of a PlayList file.
[FIG. 17] FIG. 17 is a diagram illustrating syntax of a Clip Information file.
[FIG. 18] FIG. 18 is a diagram illustrating syntax of ProgramInfo () in FIG. 17.
[FIG. 19] FIG. 19 is a diagram illustrating syntax of StreamCodingInfo in FIG. 18.
[FIG. 20] FIG. 20 is a block diagram illustrating an exemplary configuration of a recording device.
[FIG. 21] FIG. 21 is a block diagram illustrating an exemplary configuration of a coding processing unit in FIG. 20.
[FIG. 22] FIG. 22 is a diagram illustrating an example of signal processing performed by the HDR-STD conversion unit.
[FIG. 23] FIG. 23 is a diagram illustrating an example of tone mapping.
[FIG. 24] FIG. 24 is a block diagram illustrating an exemplary configuration of the reproduction device.
[FIG. 25] FIG. 25 is a block diagram illustrating an exemplary configuration of a decoding processing unit in FIG. 24.
[FIG. 26] FIG. 26 is a block diagram illustrating an exemplary configuration of the display device.
[FIG. 27] FIG. 27 is a flowchart for describing recording processing of a recording device.
[FIG. 28] FIG. 28 is a flowchart for describing coding processing of mode-i performed in step S2 in FIG. 27.
[FIG. 29] FIG. 29 is a flowchart for describing coding processing of mode-ii performed in step S3 in FIG. 27.
[FIG. 30] FIG. 30 is a flowchart for describing Data Base information generation processing performed in step S4 in FIG. 27.
[FIG. 31] FIG. 31 is a flowchart for describing reproduction processing of the reproduction device.
[FIG. 32] FIG. 32 is a flowchart for describing decoding processing of mode-i performed in step S44 in FIG. 31.
[FIG. 33] FIG. 33 is a flowchart for describing decoding processing of mode-ii performed in step S45 in FIG. 31.
[FIG. 34] FIG. 34 is a flowchart for describing display processing of the display device.
[FIG. 35] FIG. 35 is a diagram illustrating another exemplary configuration of the recording/reproduction system.
[FIG. 36] FIG. 36 is a diagram illustrating an example of a database.
[FIG. 37] FIG. 37 is a diagram illustrating an example of processing when a recording mode is mode-i.
[FIG. 38] FIG. 38 is a diagram illustrating an example of each piece of information when the recording mode is mode-i.
[FIG. 39] FIG. 39 is a diagram illustrating an example of processing when the recording mode is mode-ii.
[FIG. 40] FIG. 40 is a diagram illustrating an example of each piece of information when the recording mode is mode-ii.
[FIG. 41] FIG. 41 is a block diagram illustrating an exemplary hardware configuration of an information processing device.
[FIG 42] FIG. 42 is a block diagram illustrating an exemplary functional configuration of the information processing device.
[FIG. 43] FIG. 43 is a block diagram illustrating an exemplary functional configuration of a management server.
[FIG. 44] FIG. 44 is a block diagram illustrating an exemplary configuration of the reproduction device.
[FIG. 45] FIG. 45 is a block diagram illustrating an exemplary configuration of a decoding processing unit in FIG. 44.
[FIG. 46] FIG. 46 is a flowchart for describing tone mapping table generation processing of the information processing device.
[FIG. 47] FIG. 47 is a flowchart for describing tone mapping table registration processing of the management server.
[FIG. 48] FIG. 48 is a flowchart for describing tone mapping table supply processing of the management server.
[FIG. 49] FIG. 49 is a flowchart for describing reproduction processing of the reproduction device.
[FIG. 50] FIG. 50 is a flowchart for describing decoding processing performed in steps S147 and S152 in FIG. 49 when the recording mode is mode-i.
[FIG. 51] FIG. 51 is a flowchart for describing decoding processing performed in steps S147 and S152 in FIG. 49 when the recording mode is mode-ii.
[FIG. 52] FIG. 52 is a flowchart for describing display processing of the display device.
[FIG. 53] FIG. 53 is a diagram illustrating an example of other processing when the recording mode is mode-i.
[FIG. 54] FIG. 54 is a diagram illustrating an example of other processing when the recording mode is mode-ii.
[FIG. 55] FIG. 55 is a block diagram illustrating an exemplary configuration of the recording device in the recording/reproduction system illustrated in FIGS. 53 and 54.
[FIG. 56] FIG. 56 is a flowchart for describing recording processing of the recording device.
[FIG. 57] FIG. 57 is a flowchart for describing reproduction processing of the reproduction device.
[FIG. 58] FIG. 58 is a flowchart for describing reproduction processing of the reproduction device.
[FIG. 59] FIG. 59 is a flowchart for describing the reproduction processing of the reproduction device continued from FIG. 58.
[FIG. 60] FIG. 60 is a diagram illustrating an example of other processing in the recording/reproduction system.
[FIG. 61] FIG. 61 is a flowchart for describing decoding processing of the reproduction device in the recording/reproduction system in FIG. 60.

### Description of Embodiments

Hereinafter, modes for carrying out the present technology will be described. The description will be made in the following order.
1. Recording/reproduction system
2. HEVC
3. BD format
4. Configuration of each device
5. Operation of each device
6. Example in which tone mapping table is prepared in server
7. Example in which tone mapping table is prepared on optical disc
8. Example in which tone mapping table is prepared in management server or on optical disc
9. Example in which display of HDR video is realized based on data acquired from management server
10. Modification examples

### <1. Recording/reproduction system>

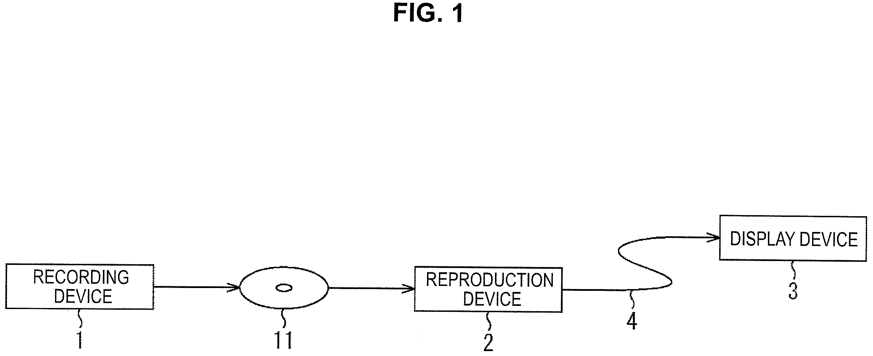

FIG. 1 is a diagram illustrating an exemplary configuration of a recording/reproduction system according to an embodiment of the present technology.

The recording/reproduction system in FIG. 1 includes a recording device 1, a reproduction device 2, and a display device 3. The reproduction device 2 and the display device 3 are connected to each other through a cable 4 that meets a predetermined standard such as a high-definition multimedia interface (HDMI) (registered trademark) or the like. The reproduction device 2 and the display device 3 may be connected to each other through a cable of another standard or may be connected via radio communication.

The recording device 1 records content, and the reproduction device 2 reproduces the content. An optical disc 11 is used to provide the content from the recording device 1 to the reproduction device 2. The optical disc 11 is a disc on which the content is recorded in a Blu-ray (registered trademark) Disc Read-Only (BD-ROM) Format, for example.

The content may be recorded on the optical disc 11 in another format such as a BD-R or BD-RE format. Furthermore, the content may be provided from the recording device 1 to the reproduction device 2 by using a removable media other than an optical disc, such as a memory card mounted with a flash memory.

When the optical disc 11 is a BD-ROM disc, the recording device 1 is a device used by the author of the content, for example. Hereinafter, while a description will be appropriately given assuming that the optical disc 11 on which the content has been recorded with the recording device 1 is provided to the reproduction device 2, in actuality, an optical disc 11 that is one of the optical discs that are copies of a master disc on which the content is recorded with the recording device 1 is provided to the reproduction device 2.

A high dynamic range (HDR) video that is a video having a dynamic range that is equivalent to or greater than a dynamic range (a brightness range) that can be displayed on a monitor having a standard brightness is input to the recording device 1. The standard brightness is 100 cd/m2 (= 100 nit).

The recording device 1 records, on the optical disc 11, the input master HDR video as it is, that is, as a video having a dynamic range that is equivalent to or greater than the dynamic range that can be displayed on a monitor with a standard brightness. In such a case, information representing the brightness characteristic of the master HDR video and, also, information used when converting an HDR video to an STD video are recorded on the optical disc 11.

A standard video (the STD video) is a video having a dynamic range that can be displayed on a monitor having a standard brightness. When the dynamic range of the STD video is 0-100%, the dynamic range of the HDR video is expressed as a range of 0% to 101% or more, such as 0-500% or 0-1000%.

Furthermore, after converting the input master HDR video to an STD video, that is, after converting the input master HDR video to a video that has a dynamic range that is capable of being displayed on a monitor having a standard brightness, the recording device 1 records the video on the optical disc 11. In such a case, information representing the brightness characteristic of the master HDR video and, also, information used when converting an STD video to an HDR video are recorded on the optical disc 11.

The HDR video that the recording device 1 records or the STD video that is obtained by converting the HDR video are videos having a so-called 4K resolution in which the horizontal/vertical resolution is 4096/2160 pixels, 3840/2160 pixels, or the like. For example, High Efficiency Video Coding (HEVC) is used in coding the video data with the recording device 1.

Information representing the brightness characteristic of the master HDR video and information used when converting an HDR video to an STD video or when converting an STD video to an HDR video are inserted into the coded data of the HEVC as supplemental enhancement information (SEI). An HEVC stream, which is coded data of HEVC in which the SEI is inserted, is recorded on the optical disc 11 in BD format.

The reproduction device 2 communicates with the display device 3 through the cable 4 and acquires information related to the display performance of the display device 3. The reproduction device 2 specifies whether the display device 3 is a device having an HDR monitor that is a monitor that is capable of displaying an HDR video or whether the display device 3 is a device having an STD monitor that is a monitor that can only display an STD video.

Furthermore, the reproduction device 2 drives a drive and reads out and decodes the HEVC stream recorded on the optical disc 11.

For example, when the video data obtained through decoding is data of an HDR video and when the display device 3 includes an HDR monitor, the reproduction device 2 outputs the data of the HDR video obtained through decoding the HEVC stream to the display device 3. In such a case, the reproduction device 2 outputs, together with the data of the HDR video, data representing the brightness characteristic of the master HDR video to the display device 3.

On the other hand, when the video data obtained through decoding is data of an HDR video and when the display device 3 includes an STD monitor, the reproduction device 2 converts the HDR video, which has been obtained by decoding the HEVC stream, to an STD video and outputs the data of the STD video. The conversion of the HDR video to an STD video is performed by using information that is recorded on the optical disc 11 and that is used when converting an HDR video to an STD video.

When the video data obtained through decoding is data of an STD video and when the display device 3 includes an HDR monitor, the reproduction device 2 converts the STD video, which has been obtained by decoding the HEVC stream, to an HDR video and outputs the data of the HDR video to the display device 3. The conversion of the STD video to an HDR video is performed by using information that is recorded on the optical disc 11 and that is used when converting an STD video to an HDR video. In such a case, the reproduction device 2 outputs, together with the HDR video, data representing the brightness characteristic of the master HDR video to the display device 3.

On the other hand, when the video data obtained through decoding is data of an STD video and when the display device 3 includes an STD monitor, the reproduction device 2 outputs the data of the STD video obtained through decoding the HEVC stream to the display device 3.

The display device 3 receives video data transmitted from the reproduction device 2 and displays an image of the content on the monitor. Audio data of the content is also transmitted from the reproduction device 2. On the basis of the audio data transmitted from the reproduction device 2, the display device 3 outputs audio of the content from a loudspeaker.

For example, when information representing the brightness characteristic of the master HDR video is transmitted together with the video data, the display device 3 recognizes that the video data transmitted from the reproduction device 2 is data of an HDR video. As described above, information representing the brightness characteristic of the master HDR video is transmitted together with the data of the HDR video to the display device 3 including an HDR monitor.

In such a case, the display device 3 displays the image of the HDR video in accordance with the characteristics specified by the information representing the brightness characteristic of the master HDR video. In other words, when the monitor included in the display device 3 is a monitor having a dynamic range of 0-500% and when the dynamic range of the HDR video is designated to have a predetermined characteristic of 0-500% from the information representing the brightness characteristic of the master HDR video, then in accordance with the predetermined characteristic, the display device 3 displays an image while adjusting the brightness in the range of 0-500%.

By enabling the brightness characteristic of the master HDR video to be designated, the author of the content is capable of displaying an image at an intended brightness.

Typically, a display device such as a TV recognizes the video input from the outside as a video having a dynamic range of 0-100%. Furthermore, when the monitor of the display device has a dynamic range that is wider than the input video, the display device displays the image while disadvantageously extending the brightness in accordance with the characteristics of the monitor. By designating the brightness characteristic and by adjusting the brightness of the HDR video according to the designated characteristic, an adjustment of the brightness unintended by the author can be prevented from being performed on the display device side.

Furthermore, a reproduction device that outputs a video on a display device such as a TV typically outputs the video after converting the brightness in accordance with the characteristics of the transmission line. The display device that has received the video will display the image after converting the brightness of the received video in accordance with the characteristics of the monitor. By not converting the brightness in the reproduction device 2 and by having the HDR video from the reproduction device 2 be output as it is on the display device 3, the number of brightness conversions can be reduced and an image with a brightness that is more close to the master can be displayed on the display device 3.

Meanwhile, when the video data transmitted from the reproduction device 2 is data of an STD video, the display device 3 displays an image of the STD video. An STD video being transmitted from the reproduction device 2 indicates that the display device 3 is a device including an STD monitor.

Hereinafter, as appropriate, a mode in which the master HDR video is recorded on the optical disc 11 as it is will be referred to as mode-i. In mode-i, information representing the brightness characteristic of the master HDR video and information used when converting an HDR video to an STD video are recorded on the optical disc 11.

Furthermore, a mode in which the master HDR video is recorded on the optical disc 11 after being converted to an STD video will be referred to as mode-ii. In mode-ii, information representing the brightness characteristic of the master HDR video and information used when converting an STD video to an HDR video are recorded on the optical disc 11.

### [Signal processing in mode-i]

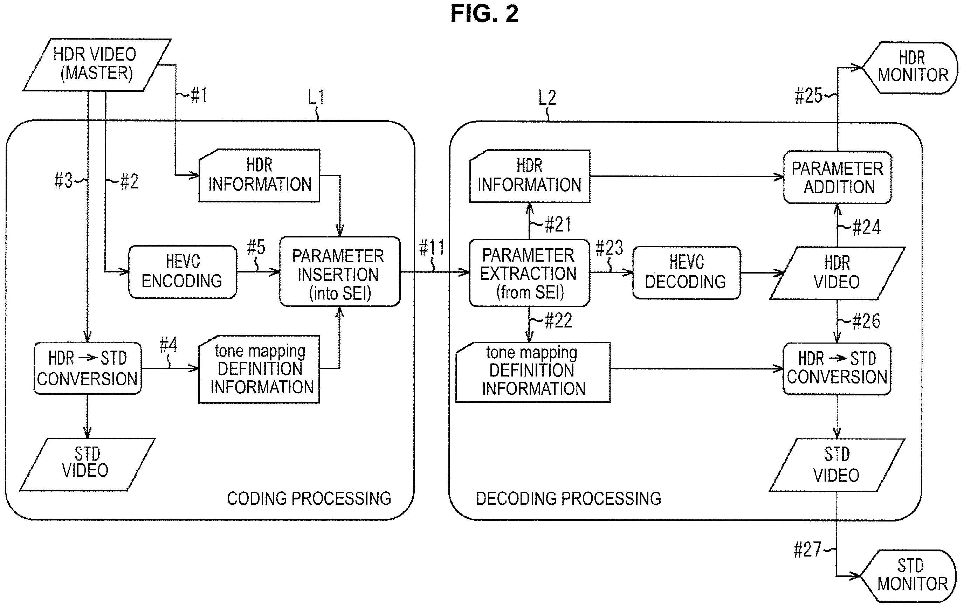

FIG. 2 is a diagram illustrating an example of signal processing in mode-i.

The processing on the left side illustrated by surrounding a solid line L1 illustrates coding processing performed in the recording device 1, and the processing on the right side illustrated by surrounding a solid line L2 illustrates decoding processing performed in the reproduction device 2.

When a master HDR video is input, the recording device 1 detects the brightness of the master HDR video and, as illustrated at the end of arrow #1, HDR information that is information representing the brightness characteristic of the master HDR video is generated. Furthermore, as illustrated at the end of arrow #2, the recording device 1 performs coding on the master HDR video by HEVC.

As illustrated at the end of arrow #3, the recording device 1 converts the master HDR video to an STD video. An image of the STD video obtained by the conversion is displayed on a monitor (not shown). The conversion of the HDR video to the STD video is carried out, as appropriate, while the author visually checks the image of the STD video after the conversion and while adjusting the conversion parameter.

As illustrated at the end of arrow #4, on the basis of the adjustment performed by the author, the recording device 1 generates tone mapping definition information for HDR-STD conversion that is used when converting an HDR video to an STD video.

The tone mapping definition information is information that defines the correlation between each pixel representing the brightness of the dynamic range of 0-400% or the like that is a dynamic range that is wider than the standard dynamic range and each pixel representing the brightness of the dynamic range of 0-100% that is the standard dynamic range.

As illustrated at the end of arrow #5, the recording device 1 generates an HEVC stream by inserting the HDR information and the tone mapping definition information as SEI into the coded data of the HEVC. The recording device 1 records the generated HEVC stream on the optical disc 11 in BD format and, as illustrated by arrow #11, provides the HEVC stream to the reproduction device 2.

As described above, information representing the brightness characteristic of the master HDR video and information used when converting an HDR video to an STD video are provided to the reproduction device 2 in the form of insertion into the stream by using the SEI of the HEVC.

The reproduction device 2 reads out the HEVC stream from the optical disc 11 and, as illustrated at the ends of arrows #21 and #22, extracts the HDR information and the tone mapping definition information from the SEI of the HEVC stream.

Furthermore, as illustrated at the end of arrow #23, the reproduction device 2 decodes the coded data of the HEVC. As illustrated at the end of arrow #24, when the display device 3 includes an HDR monitor, the reproduction device 2 adds the HDR information to the data of the HDR video obtained by decoding the coded data and, as illustrated at the end of arrow #25, outputs the data to the display device 3.

On the other hand, as illustrated at the end of arrow #26, when the display device 3 includes an STD monitor, the reproduction device 2 converts the HDR video, which has been obtained by decoding the coded data, to an STD video by using the tone mapping definition information for HDR-STD conversion extracted from the HEVC stream. As illustrated at the end of arrow #27, the reproduction device 2 outputs the data of the STD video, which has been obtained by the conversion, to the display device 3.

As described above, the HDR video data obtained by decoding the coded data of the HEVC is, together with the HDR information, output to the display device 3 including an HDR monitor. Furthermore, the HDR video data obtained by decoding the coded data of the HEVC is, after being converted to an STD video, output to the display device 3 including an STD monitor.

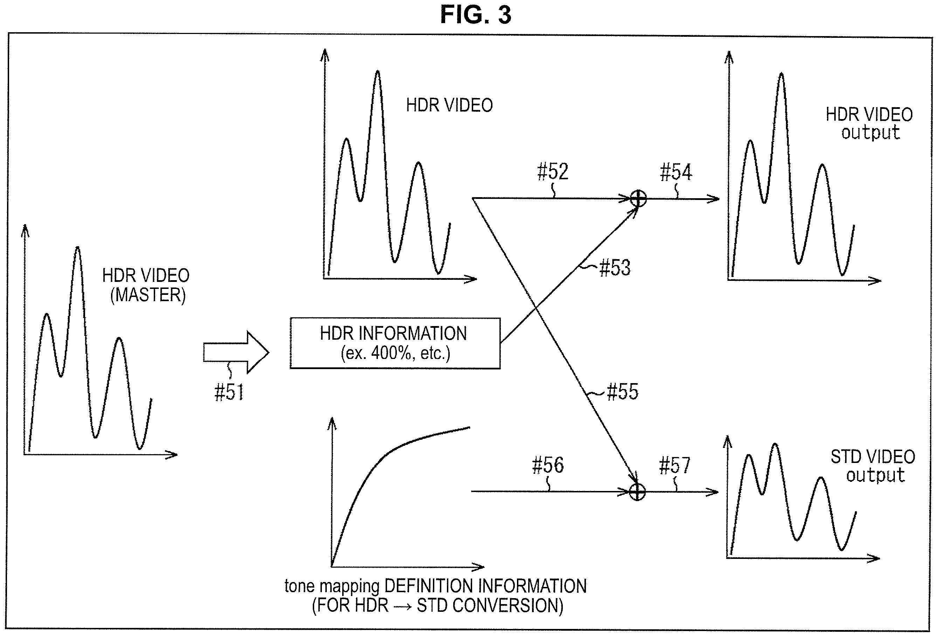

FIG. 3 is a diagram illustrating a flow of a process from when the master HDR video is input to the recording device 1 until the video data is output from the reproduction device 2.

As illustrated at the end of hollow arrow #51, the master HDR video is provided to the reproduction device 2 together with the HDR information and the tone mapping definition information for HDR-STD conversion that are generated in the recording device 1 on the basis of the master HDR video. Information representing that the dynamic range is extended to a range of 0-400%, for example, is included in the HDR information.

When the display device 3 includes an HDR monitor, as illustrated at the ends of arrows #52 and #53, in the reproduction device 2, the HDR information is added to the HDR video data that has been obtained by decoding the coded data of the HEVC. Furthermore, as illustrated at the end of arrow #54, the HDR video data to which the HDR information has been added is output to the display device 3.

On the other hand, when the display device 3 includes an STD monitor, as illustrated at the ends of arrows #55 and #56, in the reproduction device 2, the HDR video that has been obtained by decoding the coded data of the HEVC is converted to an STD video by using the tone mapping definition information for HDR-STD conversion. Furthermore, as illustrated at the end of arrow #57, the STD video data obtained by the conversion is output to the display device 3. In FIG. 3, the waveform amplitude representing the HDR video and the waveform amplitude representing the STD video each represents a dynamic range.

As described above, in mode-i, the master HDR video is recorded on the optical disc 11 as it is. Furthermore, switching between outputting the HDR video, which has been obtained by decoding the coded data, as it is after adding the HDR information, and outputting the HDR video after converting to an STD video can be performed according to the performance of the display device 3 serving as an output destination.

### [Signal processing in mode-ii]

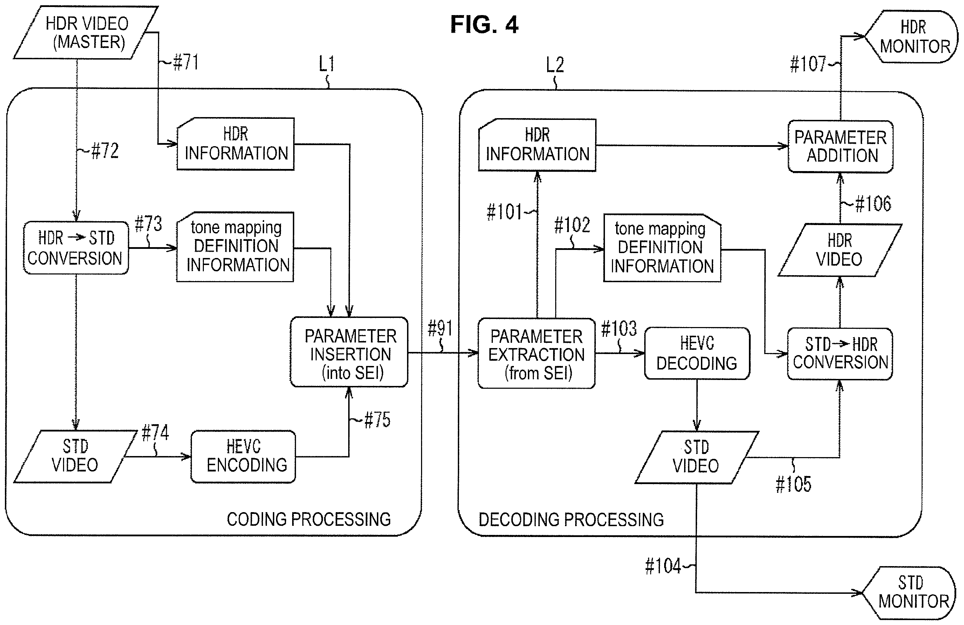

FIG. 4 is a diagram illustrating an example of a flow of signal processing in mode-ii.

When a master HDR video is input, the recording device 1 detects the brightness of the master HDR video and, as illustrated at the end of arrow #71, HDR information is generated.

As illustrated at the end of the arrow #72, the recording device 1 converts the master HDR video to an STD video. An image of the STD video obtained by the conversion is displayed on a monitor (not shown).

As illustrated at the end of arrow #73, on the basis of the adjustment performed by the author, the recording device 1 generates tone mapping definition information for STD-HDR conversion that is used when converting an STD video to an HDR video.

Furthermore, as illustrated at the end of the arrow #74, the recording device 1 performs coding on the STD video, which has been obtained by converting the master HDR video, by HEVC.

As illustrated at the end of arrow #75, the recording device 1 generates an HEVC stream by inserting the HDR information and the tone mapping definition information as SEI into the coded data of the HEVC. The recording device 1 records the generated HEVC stream on the optical disc 11 in BD format and, as illustrated by arrow #91, provides the HEVC stream to the reproduction device 2.

The reproduction device 2 reads out the HEVC stream from the optical disc 11 and, as illustrated at the ends of arrows #101 and #102, extracts the HDR information and the tone mapping definition information from the SEI of the HEVC stream.

Furthermore, as illustrated at the end of arrow #103, the reproduction device 2 decodes the coded data of the HEVC. As illustrated at the end of arrow #104, when the display device 3 includes an STD monitor, the reproduction device 2 outputs the STD video data obtained by decoding the coded data to the display device 3.

On the other hand, as illustrated at the end of arrow #105, when the display device 3 includes an HDR monitor, the reproduction device 2 converts the STD video, which has been obtained by decoding the coded data, to an HDR video by using the tone mapping definition information for STD-HDR conversion extracted from the HEVC stream. As illustrated at the end of arrow #106, the reproduction device 2 adds the HDR information to the data of the HDR video obtained by the conversion and, as illustrated at the end of arrow #107, outputs the data to the display device 3.

As described above, the STD video data obtained by decoding the coded data of the HEVC is, after being converted to an HDR video, output to the display device 3 including an HDR monitor together with the HDR information. Furthermore, the STD video data obtained by decoding the coded data of the HEVC is output as it is to the display device 3 including an STD monitor.

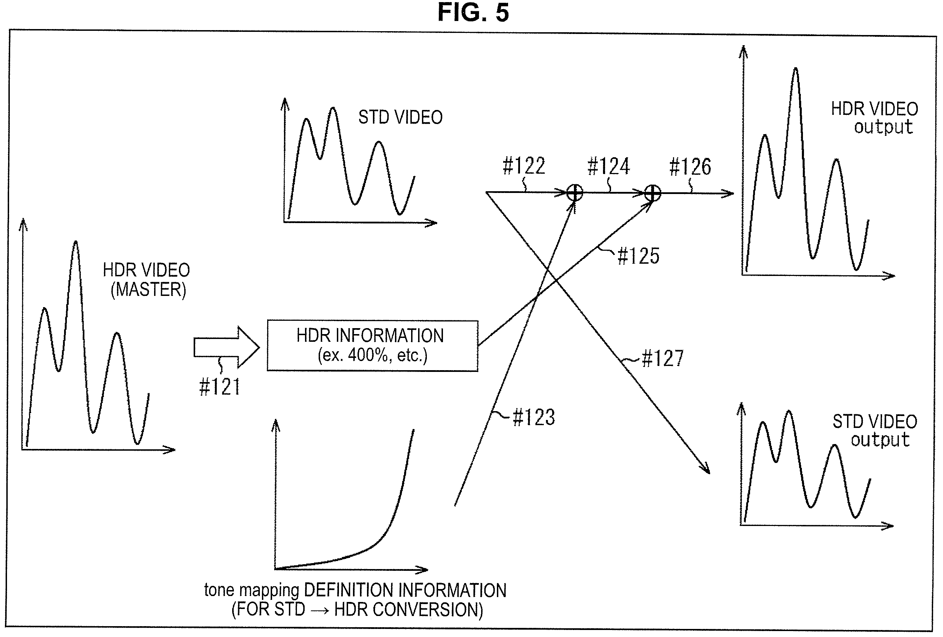

FIG. 5 is a diagram illustrating a flow of a process from when the master HDR video is input to the recording device 1 until the video data is output from the reproduction device 2.

As illustrated at the end of hollow arrow #121, after being converted to an STD video, the master HDR video is provided to the reproduction device 2 together with the HDR information and the tone mapping definition information for STD-HDR conversion that are generated in the recording device 1 on the basis of the master HDR video.

When the display device 3 includes an HDR monitor, as illustrated at the ends of arrows #122 and #123, in the reproduction device 2, the STD video that has been obtained by decoding the coded data of the HEVC is converted to an HDR video by using the tone mapping definition information for STD-HDR conversion. Furthermore, as illustrated at the ends of arrows #124 and #125, the HDR information is added to the data of the HDR video obtained by the conversion of the STD video and, as illustrated at the end of arrow #126, the data is output to the display device 3.

On the other side, when the display device 3 includes an STD monitor, as illustrated at the end of arrows #127, in the reproduction device 2, the STD video data that has been obtained by decoding the coded data of the HEVC is output to the display device 3.

As described above, in mode-ii, the master HDR video is converted to an STD video and is recorded on the optical disc 11. Furthermore, switching between outputting the STD video, which has been obtained by decoding the coded data, after converting the STD video to an HDR video and adding HDR information, and outputting the STD video as it is is performed according to the performance of the display device 3 serving as an output destination.

Detailed configurations and operations of such recording device 1 and reproduction device 2 will be described later.

### <2. HEVC>

Herein, a description of the HEVC will be given.

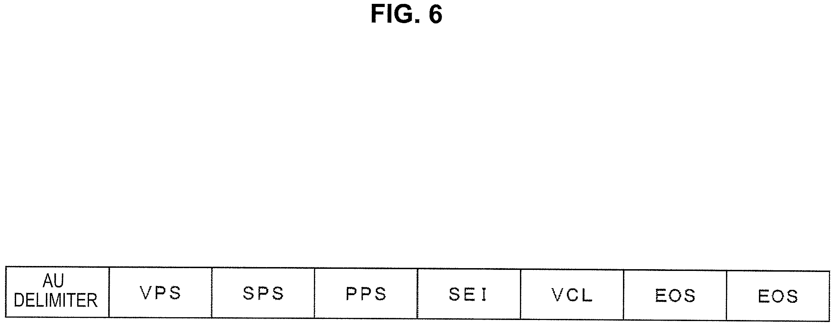

FIG. 6 is a diagram illustrating a configuration of an access unit of the HEVC.

An HEVC stream is configured of an access unit that is a group of network abstraction layer (NAL) units. Video data of a single picture is included in a single access unit.

As illustrated in FIG. 6, a single access unit is configured of an access unit delimiter (AU delimiter), a video parameter set (VPS), a sequence parameter set (SPS), a picture parameter set (PPS), an SEI, a video coding layer (VCL), an end of sequence (EOS), and an end of stream (EOS).

The AU delimiter represents the head of the access unit. The VPS includes metadata representing the content of the bitstream. The SPS includes information, such as the picture size, the coding tree block (CTB) size, and the like that the HEVC decoder needs to refer to through the decoding processing of the sequence. The PPS includes information that needs to be referred to in order for the HEVC decoder to execute the decoding processing of the picture. The VPS, the SPS, and the PPS are used as the header information.

The SEI is auxiliary information including information related to timing information and random access of each picture, and the like. The HDR information and the tone mapping definition information are included in Tone mapping information that is one of the SEIs. The VCL is data of a single picture. The end of sequence (EOS) represents the end position of the sequence and the end of stream (EOS) represents the end position of the stream.

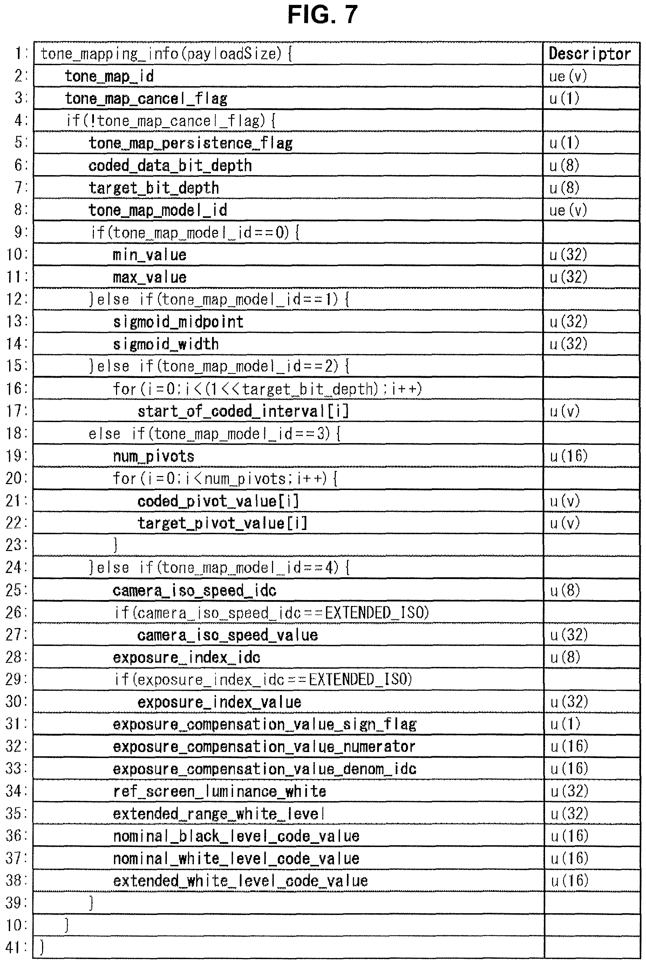

FIG. 7 is a diagram illustrating syntax of the Tone mapping information.

The brightness and the color of the picture obtained by decoding are converted in accordance with the performance of the monitor serving as an output destination of the picture by using the Tone mapping information. Note that the line numbers and the colons (:) on the left side in FIG. 7 are described for convenience of description and are not information included in the Tone mapping information. Main information included in the Tone mapping information will be described.

Tone_map_id on the second line is identification information of the Tone mapping information. An object of the Tone mapping information is identified by the tone_map_id.

For example, an ID for mode-i and an ID for mode-ii are secured. When the recording mode is mode-i, an ID for mode-i is set in the tone_map_id of the Tone mapping information that is inserted into the SEI of the coded data of the HDR video. Furthermore, when the recording mode is mode-ii, an ID for mode-ii is set in the tone_map_id of the Tone mapping information that is inserted into the SEI of the coded data of the STD video. In the optical disc 11, either of the IDs among the ID for mode-i and the ID for mode-ii is set in the tone_map_id.

Tone_map_model_id on the eighth line represents a model of the tone map used to convert the coded data.

In the recording device 1, a single Tone mapping information in which either one of 0, 2, and 3 is set as the value of the tone_map_model_id, and a single Tone mapping information in which 4 is set as the value of the tone_map_model_id are generated.

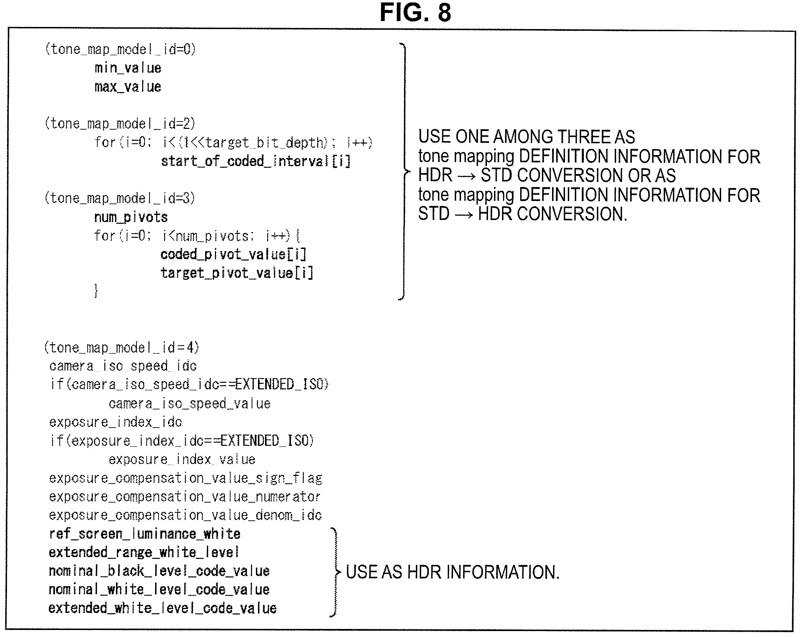

As illustrated in FIG. 8, the Tone mapping information in which either one of the values 0, 2, and 3 is set as the tone_map_model_id is used as the tone mapping definition information for HDR-STD conversion or for STD-HDR conversion. Furthermore, information included in the Tone mapping information in which 4 is set as the value of the tone_map_model_id is used as the HDR information.

Lines 9 to 11 in FIG. 7 are a description relating to tone_map_model_id = 0. When tone_map_model_id = 0, min_value and max_value are described.

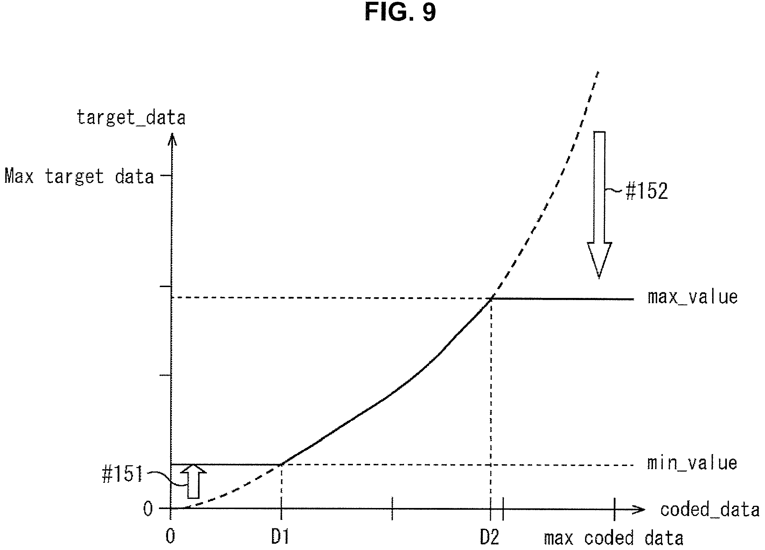

FIG. 9 is a diagram illustrating an example of a tone curve drawn with the Tone mapping information of tone_map_model_id = 0.

The axis of abscissas in FIG. 9 represents coded_data (an RGB value before conversion) and the axis of ordinates represents target_data (an RGB value after conversion). When the tone curve in FIG. 9 is used, as indicated by hollow arrow #151, the RGB value equivalent to or below coded_data D1 is converted to an RGB value expressed by min_value. Furthermore, as indicated by hollow arrow #152, the RGB value equivalent to or above coded_data D2 is converted to an RGB value expressed by max_value.

The tone mapping information of tone_map_model_id = 0 is used as the tone mapping definition information for HDR-STD conversion. When the Tone mapping information of tone_map_model_id = 0 is used, the brightness (the brightness expressed by RGB values) equivalent to or above max_value and equivalent to or below min_value are lost; however, the load on the conversion processing becomes lighter.

Lines 15 to 17 in FIG. 7 are a description relating to tone_map_model_id = 2. Tone_map_model_id = 2 draws a step function and the number of start_of_coded_interval[i] that is the same as the number of max_target_data is described.

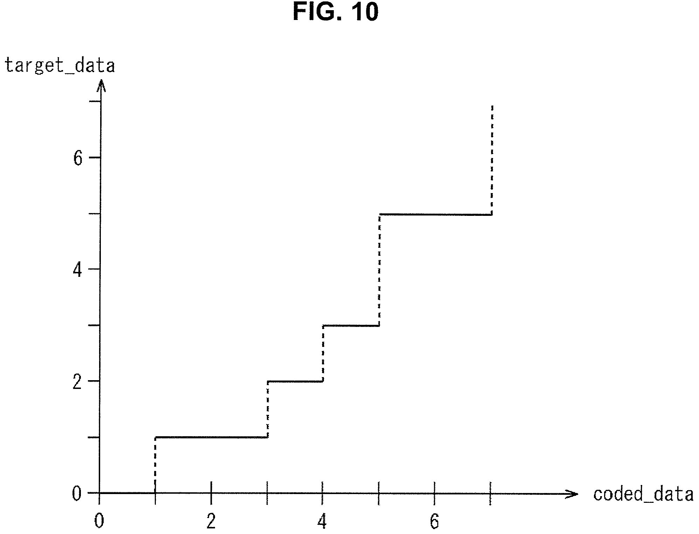

FIG. 10 is a diagram illustrating an example of a step function drawn with the Tone mapping information of tone_map_model_id = 2.

When the step function in FIG. 10 is used, coded_data = 5 is converted to target_data = 3, for example. When start_of_coded_interval[i] is {1, 3, 4, 5, 5, 5, 7, 7 ...}, a conversion table of the coded_data_target_data is expressed as {0, 1, 1, 2, 3, 5,5...}.

The tone mapping information of tone_map_model_id = 2 is used as the tone mapping definition information for STD-HDR conversion or for HDR-STD conversion. Since the amount of data of the Tone mapping information of tone_map_model_id = 2 is large, when creating the tone_map_model_id = 2, convolution with the conversion table needs to be performed; however, the load on the conversion processing is light.

Lines 18 to 23 in FIG. 7 are a description relating to tone_map_model_id = 3. When tone_map_model_id = 3, the coded_pivot_value[i] and target_pivot_value[i], the numbers of which are designated by num_pivots, that draw a polygonal line function are described.

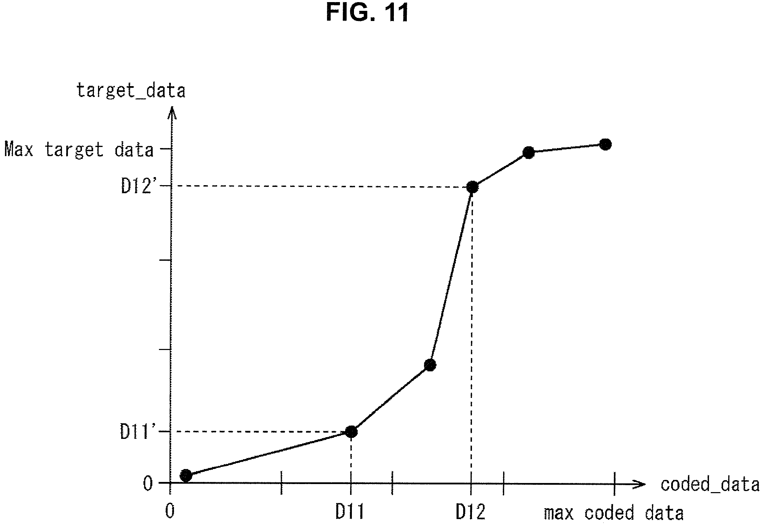

FIG. 11 is a diagram illustrating an example of a polygonal line function drawn with the Tone mapping information of tone_map_model_id = 3.

When the polygonal line function in FIG. 11 is used, the coded_data = D11 is converted to target_data = D11', and the coded_data = D12 is converted to target_data = D12', for example. The tone mapping information of tone_map_model_id = 3 is used as the tone mapping definition information for STD-HDR conversion or for HDR-STD conversion.

As described above, the Tone mapping information in which either one of the values 0, 2, and 3 is set as the tone_map_model_id is used as the tone mapping definition information for STD-HDR conversion or for HDR-STD conversion and is transmitted to the reproduction device 2 from the recording device 1.

Lines 24 to 39 in FIG. 7 are a description relating to tone_map_model_id = 4. Among the information related to tone_map_model_id = 4, ref_ screen_luminance_white, extended_range_white_level, nominal_black_level_code_value, nominal_white_level_code_value, and extended_white_level_code_value are parameters configuring the HDR information.

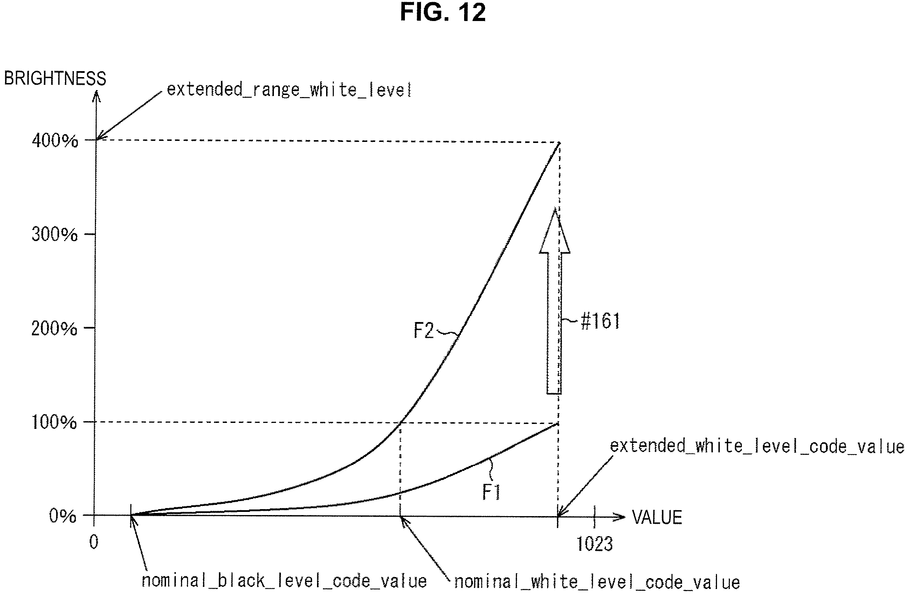

FIG. 12 is a diagram illustrating an example of each pieces of information included in the HDR information.

The axis of abscissas in FIG. 12 represents each of the pixel values of the RGB. When the bit length is 10 bits, each pixel value is a value in the range of 0-1023. The axis of ordinates in FIG. 12 represents brightness. Function F1 is a gamma function that indicates the relationship between the pixel value and the brightness in a monitor with a standard brightness. The dynamic range of the monitor with a standard brightness is 0-100%.

The ref_screen_luminance_white represents the brightness (cd/m²) of the monitor that is to be the standard. The extended_range_white_level represents the maximum value of the brightness of the dynamic range after extension. In the case of FIG. 12, 400 is set as the value of the extended_range_white_level.

The nominal_black_level_code_value represents the pixel value of black (brightness 0%), and the nominal_white_level_code_value represents the pixel value of white (brightness 100%) in a monitor having a standard brightness. The extended_white_level_code value represents the pixel value of white in the dynamic range after extension.

In the case of FIG. 12, as illustrated by hollow arrow #161, the dynamic range of 0-100% is extended to a dynamic range of 0-400% in accordance with the value of the extended_range_white_level. Furthermore, a pixel value corresponding to the brightness of 400% is designated by the extended_white_level_code_value.

The brightness characteristics of the HDR video are characteristics in which the values of the nominal_black_level_code_value, the nominal_white_level_code_value, and the extended_white_level_code_value represent brightness of 0%, 100%, and 400%, respectively. The brightness characteristics of the HDR video is represented by function F2 that is a gamma function of the HDR video.

As described above, with the Tone mapping information in which 4 is set as the value of the tone_map_model_id, the brightness characteristic of the master HDR video is represented and is transmitted to the reproduction device 2 from the recording device 1.

### <3. BD format>

Herein, description of a BD-ROM format will be given.

### [Data management structure]

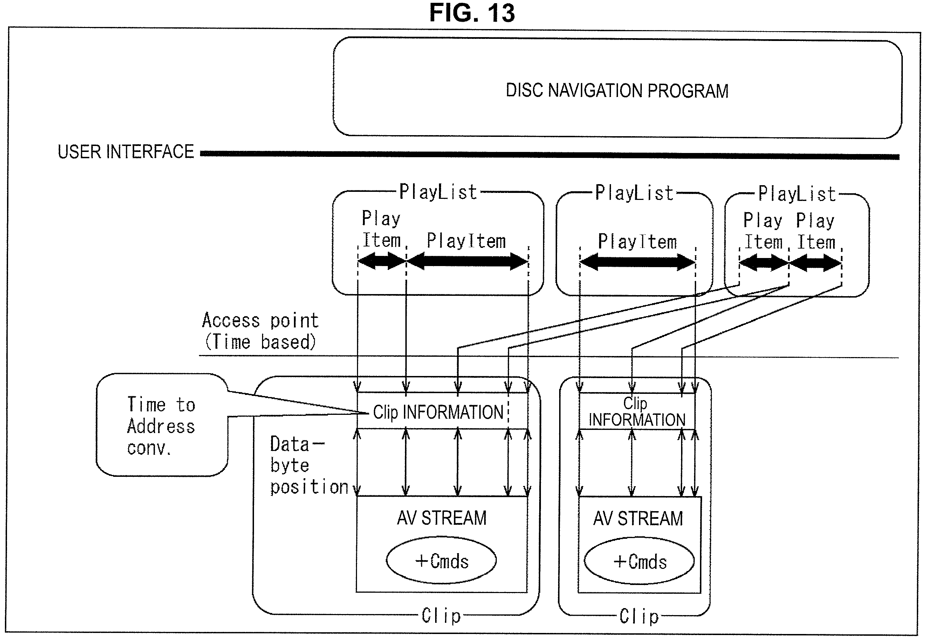

FIG. 13 is a diagram illustrating an example of a management structure of an AV stream in BD-ROM format.

The management of the AV stream including the HEVC stream is performed using two layers, namely, PlayList and Clip. The AV stream may, in some cases, be recorded not only on an optical disc 11 but also in a local storage of the reproduction device 2.

A pair of a single AV stream and Clip Information, which is information associated with the AV stream, is managed as a single object. A pair of the AV stream and the Clip Information is referred to as a Clip.

The AV stream is developed on a time axis and an access point of each Clip is, mainly, designated in the PlayList with a time stamp. The Clip Information is used to, for example, find the address to start decoding in the AV stream.

The PlayList is a group of reproduction sections of the AV stream. A single reproduction section in the AV stream is referred to as a PlayItem. The PlayItem is expressed by a pair of an IN point and an OUT point in the reproduction section on the time axis. As illustrated in FIG. 13, the PlayList is configured of a single or a plurality of PlayItems.

The first PlayList from the left in FIG. 13 is configured of two PlayItems, and with the two PlayItems, reference is made to a former portion and a latter portion of the AV stream included in the Clip on the left side.

The second PlayList from the left is configured of a single PlayItem, and with the PlayItem, reference is made to the entire AV stream included in the Clip on the right side.

The third PlayList from the left is configured of two PlayItems, and with the two PlayItems, reference is made to a certain portion of the AV stream included in the Clip on the left side and a certain portion of the AV stream included in the Clip on the right side.

For example, when the PlayItem on the left side included in the first PlayList from the left is designated as a target to be reproduced by a disc navigation program, reproduction of the former portion of the AV stream included in the clip on the left side, which the PlayItem refers to, is performed. As described above, the PlayList is used as reproduction control information for controlling the reproduction of the AV stream.

In the PlayList, a reproduction path formed of a line of one or more PlayItems is referred to as a Main Path. Furthermore, in the PlayList, a reproduction path that runs parallel to the Main Path and that is formed of a line of one or more SubPlayItems is referred to as a Sub Path.

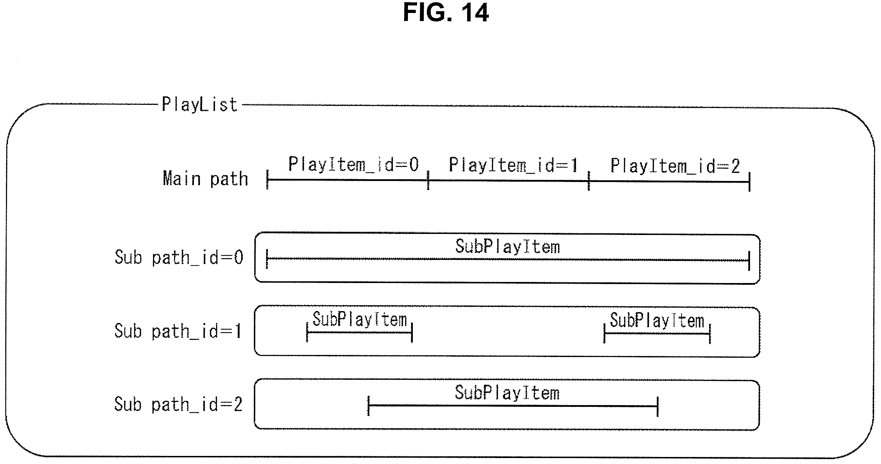

FIG. 14 is a diagram illustrating structures of the Main Path and the Sub Paths.

A PlayList includes a single Main Path and one or more Sub Paths. The PlayList in FIG. 14 is formed of a line of three PlayItems including a single Main Path and three Sub Paths.

The PlayItems configuring the Main Path are each set with an ID in order from the top. The Sub Pathes are also set with IDs, namely, Subpath_id = 0, Subpath_id = 1, and Subpath_id = 2, in order from the top.

In the example in FIG. 14, a single SubPlayItem is included in the Sub Path of SubPath_id = 0, and two SubPlayItems are included in the Sub Path of SubPath_id = 1. Furthermore, a single SubPlayItem is included in the Sub Path of SubPath_id = 2.

The AV stream that a single PlayItem refers to at least includes a video stream (a main image data). The AV stream may include one or more audio streams that are reproduced at the same timing (in synchronization) with the video stream included in the AV stream or may not include any audio stream.

The AV stream may include one or more streams of bitmap caption data (presentation graphics (PG)) that are reproduced in synchronization with the video stream included in the AV stream or may not include any stream of caption data.

The AV stream may include one or more streams of interactive graphics (IG) that are reproduced in synchronization with the video stream included in the AV stream file or may not include any stream of interactive graphics. The IG stream is used for displaying graphics such as a button that is operated by the user.

In the AV stream referred to by a single PlayItem, an video stream and an audio steam, a PG stream, and an IG stream that synchronize with the video steam are multiplexed.

Furthermore, one SubPlayItem refers to a video steam, an audio stream, a PG stream, and the like that are different from the streams of the AV stream referred to by the PlayItem.

As described above, the reproduction of the AV stream including the HEVC stream is performed using the PlayList and the Clip Information. The PlayList and the Clip Information including the information related to the reproduction of the AV stream will be referred to as Data Base information, as appropriate.

### [Directory structure]

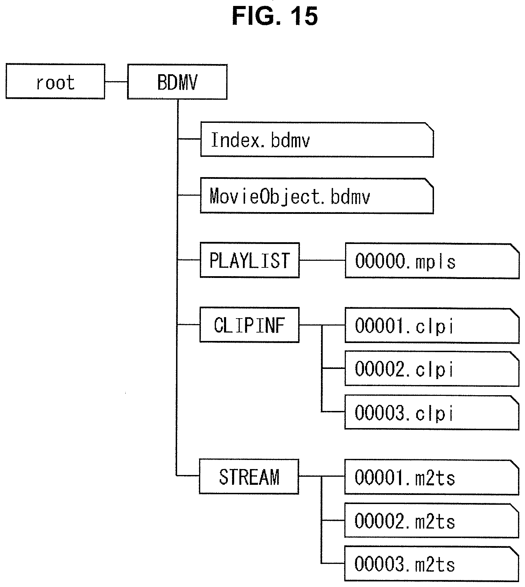

FIG. 15 is a diagram illustrating a structure in which the file that is recorded in the optical disc 11 is managed.

Each of the files that is recorded on the optical disc 11 is managed in a hierarchical manner with the directory structure. A single root directory is created on the optical disc 11.

A BDMV directory is located under the root directory.

An Index file that is a file set with a name "Index.bdmv" and a MovieObject file that is a file set with a name "MovieObject.bdmv" are stored under the BDMV directory.

A PLAYLIST directory, a CLIPINF directory, a STREAM directory, or the like are provided under the BDMV directory.

The PLAYLIST directory stores PlayList files in which PlayLists are described. Each PlayList is named with a combination of a five-digit number and an extension ".mpls". One of the PlayList files illustrated in FIG. 15 is set with a file name of "00000.mpls".

The CLIPINF directory stores Clip Information files. Each Clip Information file is named with a combination of a five-digit number and an extension ".clpi". The three Clip Information files in FIG. 15 are set with file names of "00001.clpi", "00002.clpi", and "00003.clpi".

Stream files are stored in the STREAM directory. Each stream file is named with a combination of a five-digit number and an extension ".m2ts ". The three stream files in FIG. 15 are set with file names of "00001.m2ts", "00002.m2ts", and "00003.m2ts".

The Clip Information file and the stream file that have the same five-digit numbers set in the file names are files that constitute a single Clip. When reproducing the stream file "00001.m2ts", the Clip Information file "00001.clpi" is used, and when reproducing the stream file "00002.m2ts", the Clip Information file "00002.clpi" is used. As will be described later, information related to HDR video processing is included in the Clip Information file used to reproduce the AV stream including the HEVC stream.

### [Syntax of Each File]

Herein, main descriptions of the syntax of each file will be described.

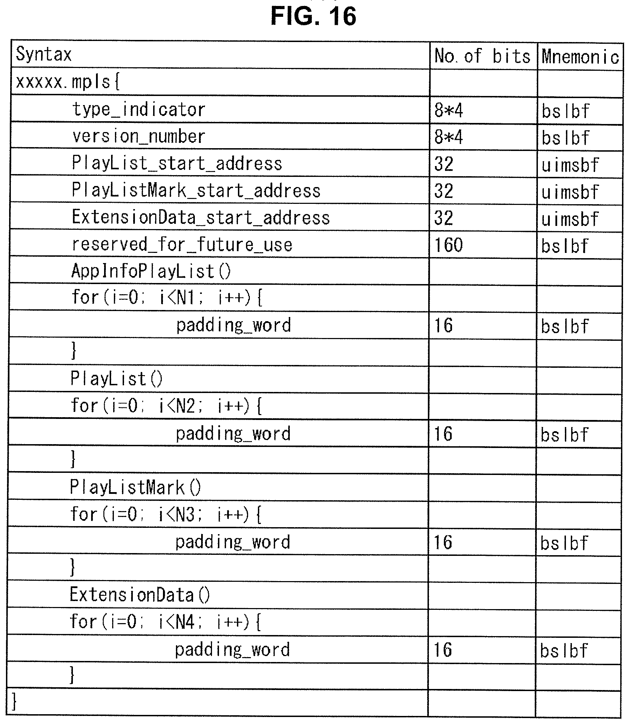

FIG. 16 is a diagram illustrating syntax of the PlayList file.

The PlayList file is stored in the PLAYLIST directory in FIG. 15 and is a file that is set with the extension ".mpls".

AppInfoPlayList () stores parameters that is related to the reproduction control of the PlayList, such as a reproduction restriction.

PlayList () stores parameters related to the Main Path and the Sub Path.

PlayListMark () stores mark information of the PlayList, in other words, the PlayListMark () stores information related to marks that are jump destinations (jump points) in an user operation, a command, or the like commanding a chapter jump.

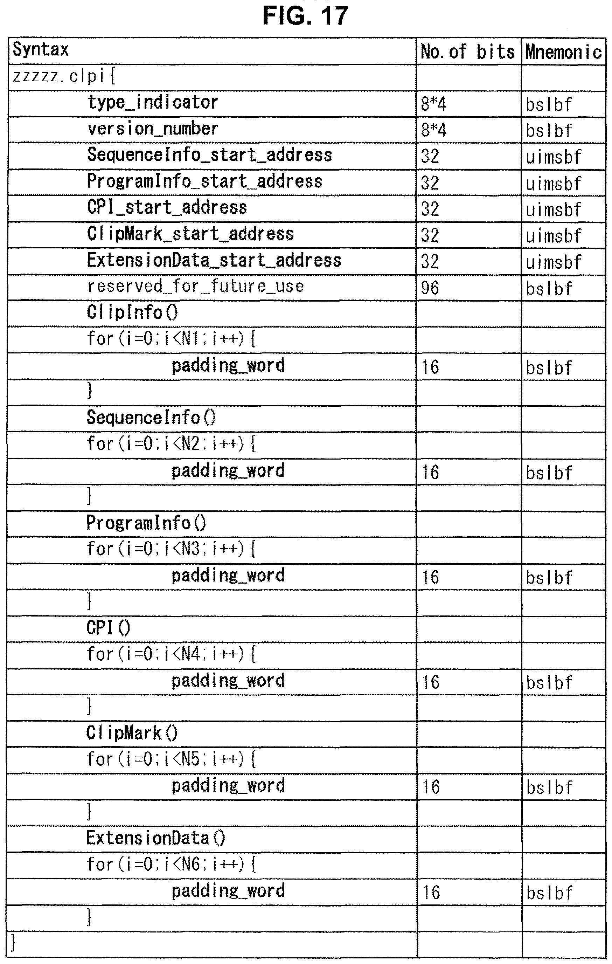

FIG. 17 is a diagram illustrating syntax of the Clip Information file.

The Clip Information file is stored in the CLIPINF directory in FIG. 15 and is a file that is set with the extension ".clpi".

Cliplnfo () stores information, such as information representing the type of AV stream configuring the Clip, information representing the recording rate of the AV stream, and the like.

Sequencelnfo () includes information representing, on the time axis, the position of the source packet configuring the AV stream, information representing the displayed clock time, and the like.

ProgramInfo () includes information related to the PID of the AV stream configuring the Clip, information related to coding of the AV stream, and the like.

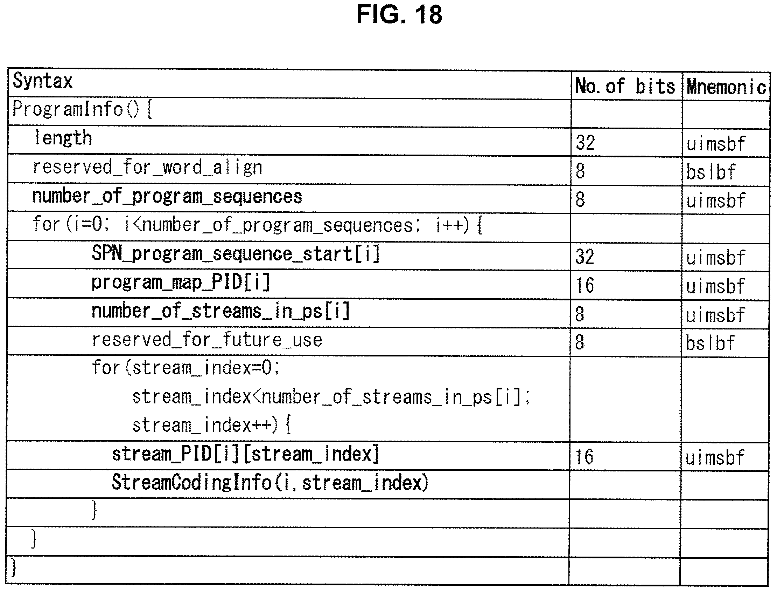

FIG. 18 is a diagram illustrating syntax of the Programlnfo () in FIG. 17.

Number_of_program_sequences represents the number of program sequences described in the Programlnfo (). A program sequence is constituted by a line of source packets constituting a program.

SPN_program_sequence_start[i] represents the source packet number at the head of the program sequence.

StreamCodinglnfo includes information related to coding of the AV stream configuring the Clip.

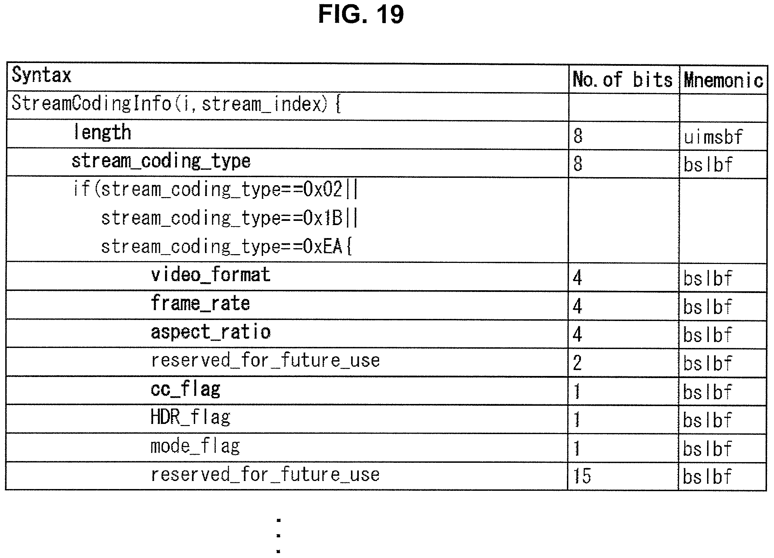

FIG. 19 is a diagram illustrating syntax of the StreamCodinglnfo in FIG. 18.

Stream_coding_type represents the coding method of an elementary stream included in the AV stream. For example, in the StreamCodingInfo of the Clip Information used for reproduction of the HEVC stream, a value representing that the coding method is HEVC is set as stream_coding_type.

Video_format represents the video scanning method. In the video_format used to reproduce the HEVC stream, a value representing a 4K scanning method such as 2160p (2160 line progressive) is set as stream_coding_type.

Frame_rate represents the frame rate of the video stream.

Aspect_ratio represents the aspect ratio of the video.

Cc_flag is a one-bit flag and represents whether closed caption data is included in the video stream.

HDR_flag is a one-bit flag and represents whether an HDR video is recorded as a master. For example, HDR_flag = 1 represents that recoding of an HDR video as a master is being performed. Furthermore, HDR_flag = 0 represents that recoding of an STD video as a master is being performed.

Mode_flag is a one-bit flag and represents the recording mode of the HEVC stream. The mode_flag becomes valid when HDR_flag = 1. For example, mode_flag = 1 represents that the recording mode is mode-i. Furthermore, mode_flag = 0 represents that the recording mode is mode-ii.

As described above, the Clip Information includes a flag representing whether the HEVC stream included in the AV stream in which reproduction is performed using the Clip Information is a stream in which the master is the HDR video, and a flag representing the recording mode of the HEVC stream.

By referring to the flag included in the Clip Information, the reproduction device 2 is capable of specifying whether the master video is an HDR video without actually analyzing the HEVC stream.

### <4. Configuration of each device>

Herein, a configuration of each device will be described.

### [Configuration of recording device 1]

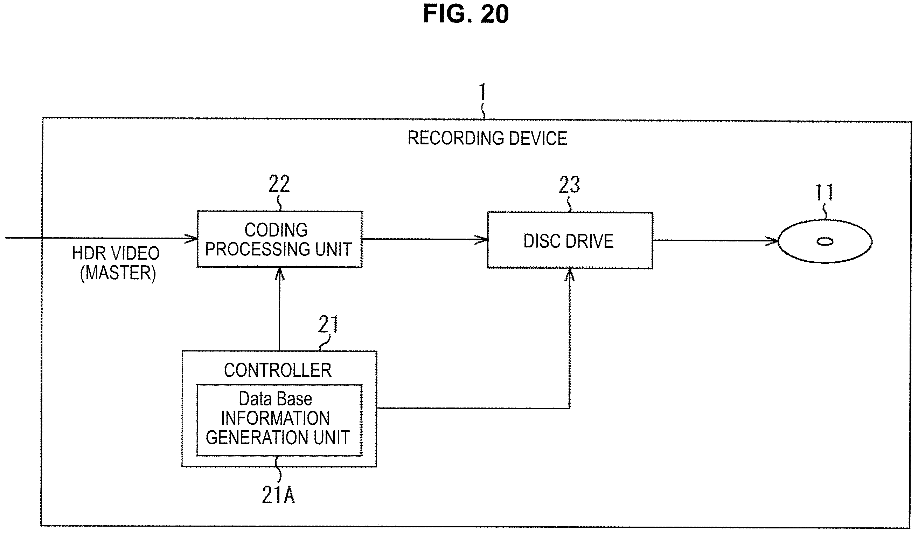

FIG. 20 is a block diagram illustrating an exemplary configuration of the recording device 1.

The recording device 1 includes a controller 21, a coding processing unit 22, and a disc drive 23. The master HDR video is input to the coding processing unit 22.

The controller 21 includes a central processing unit (CPU), a read-only memory (ROM), and a random access memory (RAM). The controller 21 executes a predetermined program and controls the overall operation of the recording device 1.

In the controller 21, a Data Base information generation unit 21A is implemented by executing a predetermined program. The Data Base information generation unit 21A generates a PlayList and a Clip that are Data Base information and outputs the PlayList and the Clip to the disc drive 23.

The coding processing unit 22 performs coding on the master HDR video. The coding processing unit 22 outputs the HEVC stream obtained by performing on the coding on the master HDR video to the disc drive 23.

The disc drive 23 records the PlayList and the Clip Information supplied from the controller 21 and the file storing the HEVC stream supplied from the coding processing unit 22 on the optical disc 11 according to the directory structure of FIG. 15.

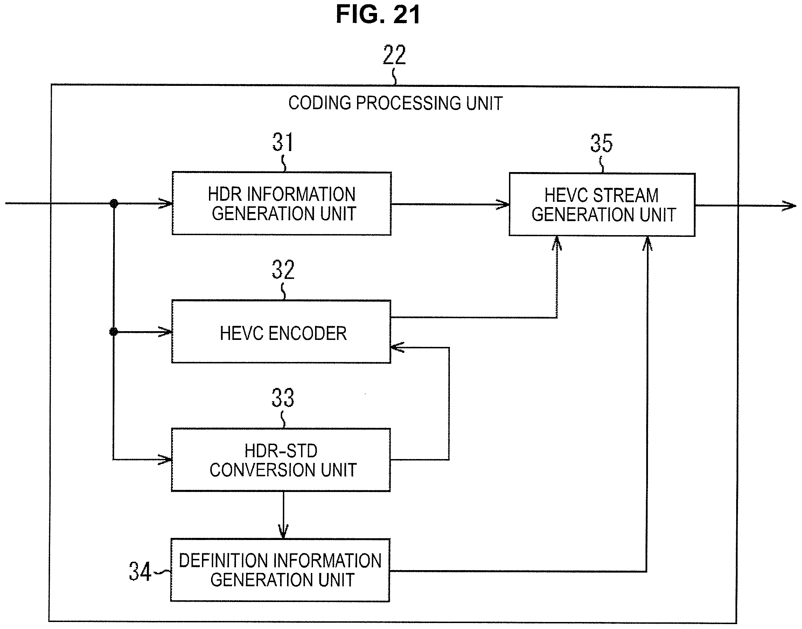

FIG. 21 is a block diagram illustrating an exemplary configuration of the coding processing unit 22 in FIG. 20.

The coding processing unit 22 includes an HDR information generation unit 31, an HEVC encoder 32, an HDR-STD conversion unit 33, a definition information generation unit 34, and an HEVC stream generation unit 35.

The HDR information generation unit 31 detects the brightness of the input master HDR video and generates HDR information including each of the pieces of information that have been described while referring to FIG. 12. The HDR information generation unit 31 outputs the generated HDR information to the HEVC stream generation unit 35.

When the recording mode is mode-i, the HEVC encoder 32 performs coding of the input master HDR video with HEVC. Furthermore, when the recording mode is mode-ii, the HEVC encoder 32 performs coding of the STD video, which has been supplied from the HDR-STD conversion unit 33, with HEVC. The HEVC encoder 32 outputs the coded data of the HDR video or the coded data of the STD video to the HEVC stream generation unit 35.

The HDR-STD conversion unit 33 converts the input master HDR video to an STD video. The conversion by the HDR-STD conversion unit 33 is performed, as appropriate, in accordance with a conversion parameter input by the author. The HDR-STD conversion unit 33 outputs information representing the correlation between an input data, which is the RGB signal of the HDR video, and an output data, which is the RGB signal of the STD video, to the definition information generation unit 34.

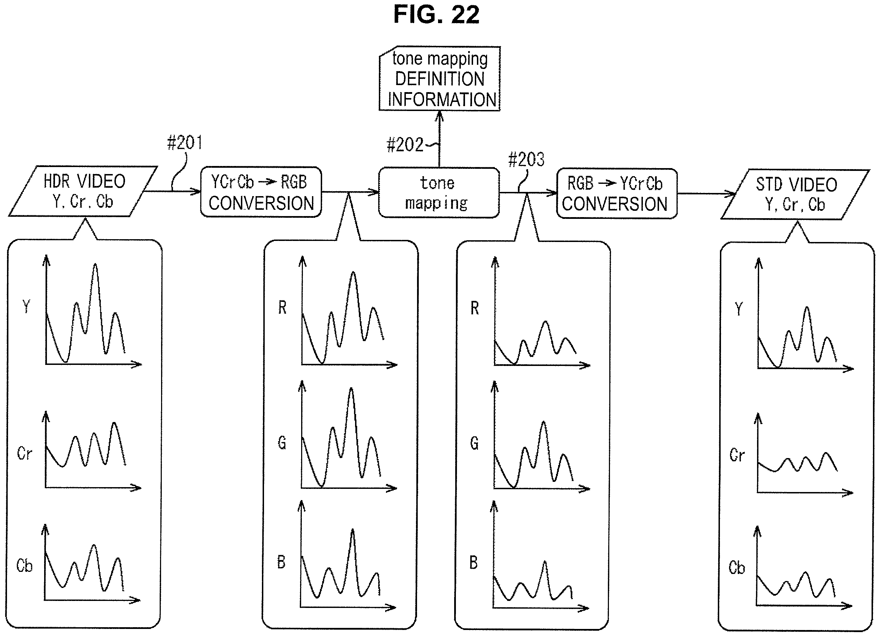

FIG. 22 is a diagram illustrating an example of signal processing performed by the HDR-STD conversion unit 33.

As illustrated at the end of arrow #201, the HDR-STD conversion unit 33 converts an YCrCb signal of the input master HDR video to an RGB signal, and performs conversion (tone mapping) of each RGB signal to the corresponding RGB signal of the STD video.

The HDR-STD conversion unit 33 outputs information representing a correlation between the RGB signal of the HDR video, which is the input data, and the RGB signal of the STD video, which is the output data, to the definition information generation unit 34. The information output to the definition information generation unit 34 is used to generate tone mapping definition information, as illustrated at the end of arrow #202.

Furthermore, as illustrated at the end of #203, the HDR-STD conversion unit 33 converts the RGB signal of the STD video to an YCrCb signal and outputs the YCrCb signal.

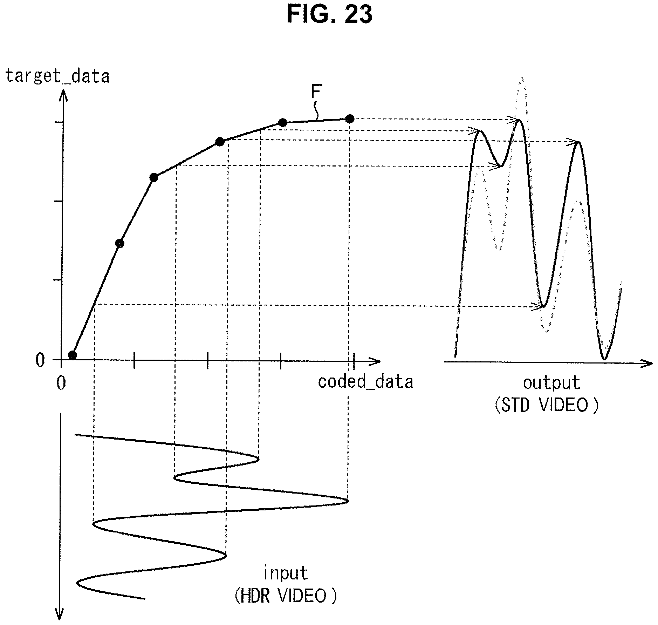

FIG. 23 is a diagram illustrating an example of tone mapping.

As illustrated in FIG. 23, for example, the RGB signal of the HDR video is converted to the RGB signal of the STD video by compressing the high brightness components and by extending the intermediate and low brightness components. Information expressing a function F that correlates the RGB signal of the HDR video and the RGB signal of the STD video is, as illustrated in FIG. 23, generated by the definition information generation unit 34. Note that the function F illustrated in FIG. 23 is the Tone mapping information of tone_map_model_id = 3 that draws a relationship between the coded_data and the target_data with a polygonal line function that have been described while referring to FIG. 11.

Returning back to the description of FIG. 21, when the recording mode is mode-ii, the HDR-STD conversion unit 33 outputs the STD video that has been obtained by converting the HDR video to the HEVC encoder 32.

On the basis of the information supplied from the HDR-STD conversion unit 33, the definition information generation unit 34 generates tone mapping definition information for HDR-STD conversion or STD-HDR conversion.

For example, when tone_map_model_id = 0 is used, the definition information generation unit 34 generates Tone mapping information including the values min_value and max_value in FIG. 9 as tone mapping definition information.

Furthermore, when tone_map_model_id = 2 is used, the definition information generation unit 34 generates Tone mapping information including start_of_coded_interval[i] in FIG. 10 as tone mapping definition information.

Furthermore, when tone_map_model_id = 3 is used, the definition information generation unit 34 generates Tone mapping information including coded_pivot_value[i] and target_pivot_value[i], the numbers of which are designated by the num_pivots in FIG. 11, as tone mapping definition information.

In accordance with the recording mode, the HEVC stream generation unit 35 sets the same value to the Tone mapping information including HDR information supplied from the HDR information generation unit 31 and to the tone_map_id of the Tone mapping information including the tone mapping definition information supplied from the definition information generation unit 34. Furthermore, the HEVC stream generation unit 35 inserts, as SEI, the Tone mapping information including the HDR information and the Tone mapping information including the tone mapping definition information into the coded data and generates the HEVC stream. The HEVC stream generation unit 35 outputs the generated HEVC stream to the disc drive 23.

### [Configuration of reproduction device 2]

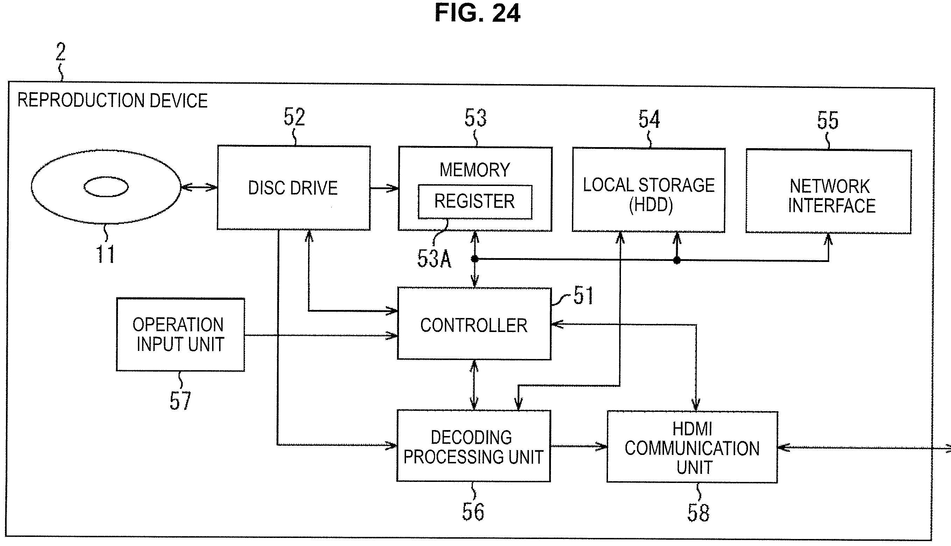

FIG. 24 is a block diagram illustrating an exemplary configuration of the reproduction device 2.

The reproduction device 2 includes a controller 51, a disc drive 52, a memory 53, a local storage 54, a network interface 55, a decoding processing unit 56, an operation input unit 57, and an HDMI communication unit 58.

The controller 51 includes a CPU, a ROM, and a RAM. The controller 51 executes a predetermined program and controls the overall operation of the reproduction device 2.

The disc drive 52 reads data from the optical disc 11 and outputs the read data to the controller 51, the memory 53, or the decoding processing unit 56. For example, the disc drive 52 outputs the Data Base information read from the optical disc 11 to the controller 51 and outputs the HEVC stream to the decoding processing unit 56.

The memory 53 stores data that is needed by the controller 51 to execute various processing. A register 53A that is a player status register (PSR) is formed in the memory 53. Various information that the reproduction device 2, which is the BD Player, refers to when reproducing the optical disc 11 is stored in the register 53A.

The local storage 54 includes, for example, a hard disk drive (HDD). A stream and the like downloaded from a server is recorded in the local storage 54.

The network interface 55 communicates with the server through a network such as the Internet and supplies the data downloaded from the server to the local storage 54.

The decoding processing unit 56 decodes the HEVC stream supplied from the disc drive 52 and outputs the data of the HDR video or the STD video to the HDMI communication unit 58. When the decoding processing unit 56 outputs the HDR video, the decoding processing unit 56 outputs the HDR information together with the data of the HDR video to the HDMI communication unit 58.

The operation input unit 57 includes an input device such as a button, a key, or a touch panel or a reception unit that receives a signal such as infrared rays transmitted from a predetermined remote commander. The operation input unit 57 detects a user operation and supplies a signal representing content of the detected operation to the controller 51.

The HDMI communication unit 58 performs communication with the display device 3 through the cable 4. For example, the HDMI communication unit 58 acquires information regarding the performance of a monitor included in the display device 3 and outputs the information to the controller 51. The HDMI communication unit 58 outputs the data of the HDR video or the STD video supplied from the decoding processing unit 56 to the display device 3.

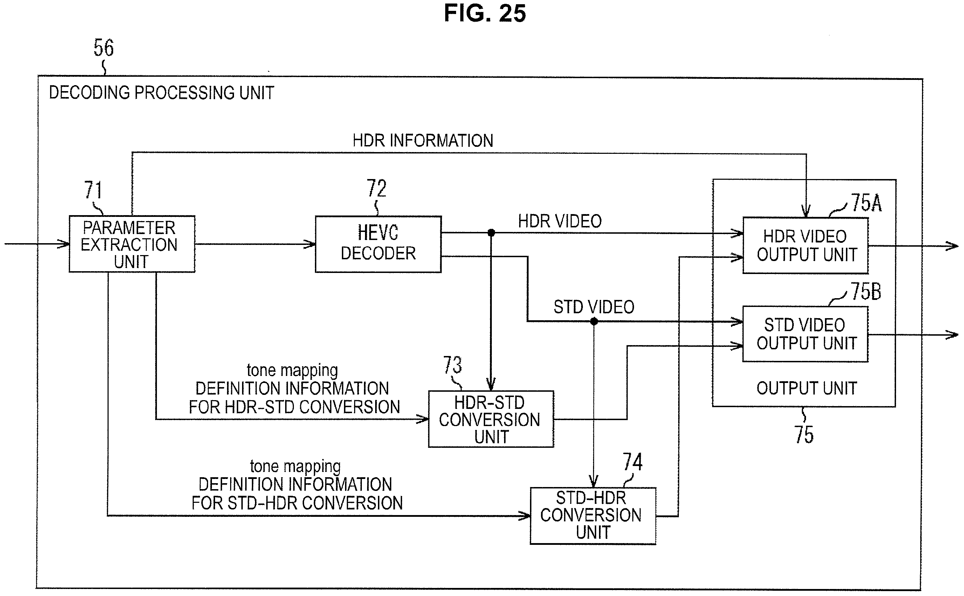

FIG. 25 is a block diagram illustrating an exemplary configuration of the decoding processing unit 56 in FIG. 24.

The video decoding processing unit 56 includes a parameter extraction unit 71, an HEVC decoder 72, an HDR-STD conversion unit 73, an STD-HDR conversion unit 74, and an output unit 75. The output unit 75 includes an HDR video output unit 75A and an STD video output unit 75B.

The HEVC stream read by the disc drive 52 is input to the parameter extraction unit 71. The controller 51 supplies the decoding processing unit 56 with, for example, information representing the recording mode specified by mode_flag including the Clip Information and information regarding the performance of the monitor included in the display device 3 and specified by the information acquired from the display device 3.

The parameter extraction unit 71 extracts the HDR information and the tone mapping definition information from the SEI of the HEVC stream. For example, when the recording mode is mode-i and the HDR video is output to the display device 3, the parameter extraction unit 71 outputs the HDR information to the HDR video output unit 75A. When the recording mode is mode-i and the STD video is output to the display device 3, the parameter extraction unit 71 outputs the tone mapping definition information for HDR-STD conversion to the HDR-STD conversion unit 73.

On the other hand, when the recording mode is mode-ii and the HDR video is output to the display device 3, the parameter extraction unit 71 outputs the HDR information to the HDR video output unit 75A and outputs the tone mapping definition information for STD-HDR conversion to the STD-HDR conversion unit 74. When the recording mode is mode-ii and the STD video is output to the display device 3, the extracted HDR information and tone mapping definition information are not used.

Furthermore, the parameter extraction unit 71 outputs the coded data included in the HEVC stream to the HEVC decoder 72.

The HEVC decoder 72 decodes the coded data of the HEVC supplied from the parameter extraction unit 71. When the recording mode is mode-i, the HEVC decoder 72 outputs the HDR video, which has been obtained by decoding, to the HDR-STD conversion unit 73 and the HDR video output unit 75A. Furthermore, when the recording mode is mode-ii, the HEVC decoder 72 outputs the STD video, which has been obtained by decoding, to the STD-HDR conversion unit 74 and the STD video output unit 75B.

The HDR-STD conversion unit 73 converts the HDR video, which has been supplied from the HEVC decoder 72, to an STD video on the basis of the tone mapping definition information for HDR-STD conversion supplied from the parameter extraction unit 71. The HDR-STD conversion unit 73 outputs the STD video obtained by conversion to the STD video output unit 75B.

The STD-HDR conversion unit 74 converts the STD video supplied from the HEVC decoder 72 to an HDR video on the basis of the tone mapping definition information for STD-HDR conversion supplied from the parameter extraction unit 71. The STD-HDR conversion unit 74 outputs the HDR video obtained by conversion to the HDR video output unit 75A.

When the HDR video is output to the display device 3, the HDR video output unit 75A of the output unit 75 outputs the HDR video supplied from the HEVC decoder 72 or the HDR video supplied from the STD-HDR conversion unit 74 together with the HDR information supplied from the parameter extraction unit 71.

When outputting the STD video to the display device 3, the STD video output unit 75B outputs the STD video supplied from the HEVC decoder 72 or the STD video supplied from the HDR-STD conversion unit 73.

The data output from the HDR video output unit 75A and the STD video output unit 75B is transmitted to the display device 3 by the HDMI communication unit 58.

### [Configuration of display device 3]

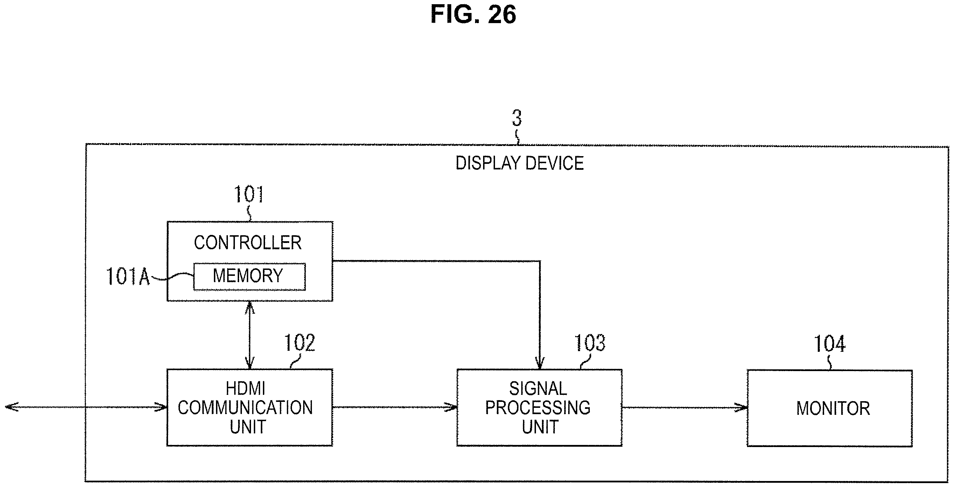

FIG. 26 is a block diagram illustrating an exemplary configuration of the display device 3.

The display device 3 includes a controller 101, an HDMI communication unit 102, a signal processing unit 103, and a monitor 104. The controller 101 includes a memory 101A.

The controller 101 includes a CPU, a ROM, and a RAM. The controller 101 executes a predetermined program and controls the overall operation of the display device 3.

For example, the controller 101 makes the memory 101A store extended display identification data (EDID) that represents the performance of the monitor 104 and performs management. When performing authentication between the reproduction device 2, the controller 101 outputs the EDID that is stored in the memory 101A to the HDMI communication unit 102 and transmits the EDID to the reproduction device 2. On the basis of the EDID, the reproduction device 2 specifies the performance of the monitor 104 of the display device 3.

The HDMI communication unit 102 performs communication with the reproduction device 2 through the cable 4. The HDMI communication unit 102 receives video data transmitted from the reproduction device 2 and outputs the data to the signal processing unit 103. Furthermore, the HDMI communication unit 102 transmits the EDID supplied from the controller 101 to the reproduction device 2.

The signal processing unit 103 performs processing on the video data supplied from the HDMI communication unit 102 and displays an image on the monitor 104.

### <5. Operation of each device>

Herein, an operation of each device having the above-described configuration will be described.

### [Recording processing]

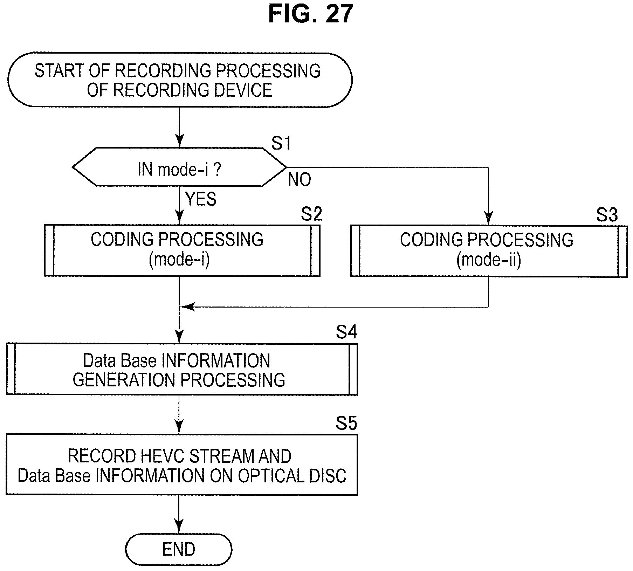

Referring first to the flowchart in FIG. 27, recording processing of the recording device 1 will be described. The processing in FIG. 27 starts when the master HDR video is input to the recording device 1.

In step S1, the controller 21 of the recording device 1 determines whether the recording mode is mode-i. The recording mode is set by the author, for example.

When it is determined that the recording mode is mode-i in step S1, the coding processing unit 22 performs the coding processing in mode-i in step S2. The HEVC stream generated through the coding processing in mode-i is supplied to the disc drive 23.

On the other hand, when it is determined that the recording mode is mode-ii in step S1, the coding processing unit 22 performs the coding processing in mode-ii in step S3. The HEVC stream generated through the coding processing in mode-ii is supplied to the disc drive 23.

In step S4, the Data Base information generation unit 21A performs Data Base information generation processing. The PlayList file and the Clip Information file generated by the Data Base information generation processing are supplied to the disc drive 23.

In step S5, the disc drive 23 records the PlayList file, the Clip Information file, and the stream file storing the HEVC stream on the optical disc 11. Subsequently, the processing ends.

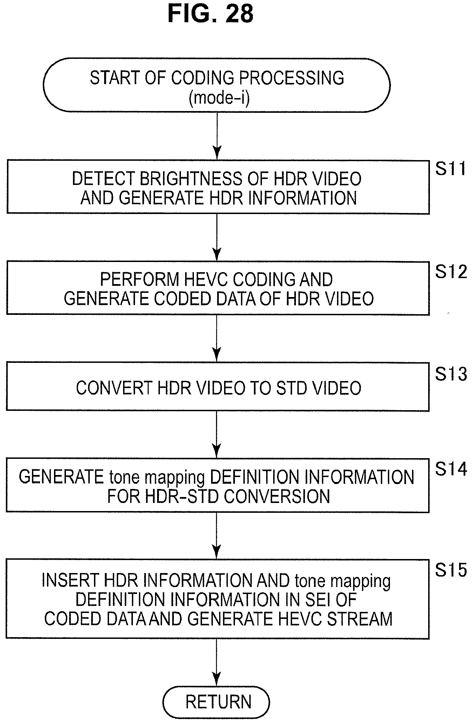

Referring next to the flowchart in FIG. 28, the coding processing in mode-i performed in step S2 in FIG. 27 will be described.

In step S11, the HDR information generation unit 31 of the coding processing unit 22 detects the brightness of the master HDR video and generates HDR information

In step S12, the HEVC encoder 32 performs coding on the master HDR video by HEVC and generates coded data of the HDR video.

In step S13, the HDR-STD conversion unit 33 converts the input master HDR video to an STD video. Information representing the correlation between an input data, which is the RGB signal of the HDR video, and an output data, which is the RGB signal of the STD video, is supplied to the definition information generation unit 34.

In step S14, on the basis of the information supplied from the HDR-STD conversion unit 33, the definition information generation unit 34 generates tone mapping definition information for HDR-STD conversion.

In step S15, the HEVC stream generation unit 35 sets an ID for mode-i to the Tone mapping information including the HDR information generated by the HDR information generation unit 31 and to the tone_map_id of the Tone mapping information including the tone mapping definition information generated by definition information generation unit 34. Furthermore, the HEVC stream generation unit 35 inserts the Tone mapping information including the HDR information and the Tone mapping information including the tone mapping definition information in the coded data and generates an HEVC stream. Subsequently, the process returns to step S2 in FIG. 27 and the processing thereafter is performed.

Referring next to the flowchart in FIG. 2, the coding processing in mode-ii performed in step S3 in FIG. 27 will be described.

In step S21, the HDR information generation unit 31 of the coding processing unit 22 detects the brightness of the master HDR video and generates HDR information.

In step S22, the HDR-STD conversion unit 33 converts the input master HDR video to an STD video. Information representing the correlation between an input data, which is the RGB signal of the HDR video, and an output data, which is the RGB signal of the STD video, is supplied to the definition information generation unit 34.

In step S23, on the basis of the information supplied from the HDR-STD conversion unit 33, the definition information generation unit 34 generates tone mapping definition information for STD-HDR conversion.

In step S24, the HEVC encoder 32 performs, by HEVC, coding on the STD video obtained by converting the master HDR video and generates coded data of the STD video.

In step S25, the HEVC stream generation unit 35 sets an ID for mode-ii to the Tone mapping information including the HDR information generated by the HDR information generation unit 31 and to the tone_map _id of the Tone mapping information including the tone mapping definition information generated by definition information generation unit 34. Furthermore, the HEVC stream generation unit 35 inserts the Tone mapping information including the HDR information and the Tone mapping information including the tone mapping definition information in the coded data and generates an HEVC stream. Subsequently, the process returns to step S3 in FIG. 27 and the processing thereafter is performed.

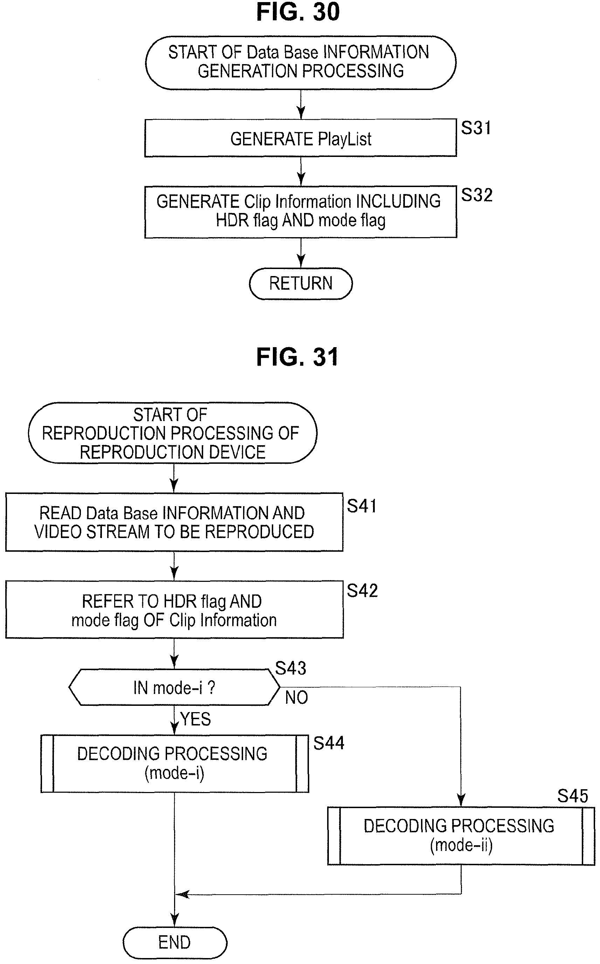

Referring next to the flowchart in FIG. 30, the Data Base information generation processing performed in step S4 in FIG. 27 will be described.

In step S31, the Data Base information generation unit 21A of the controller 21 generates a PlayList including various information described while referring to FIG. 16. The PlayList that the Data Base information generation unit 21A generates includes information relating to a PlayItem that designates the HEVC stream as a reproduction section.

In step S32, the Data Base information generation unit 21A generates Clip Information including the HDR_flag and the mode_flag in the StreamCodinglnfo of the ProgramInfo (). In the present example, since the master video is an HDR video, the Data Base information generation unit 21A sets 1 that represents that the master video is an HDR video as a value of the HDR_flag.

Furthermore, in step S2 in FIG. 27, when the coding processing is performed in mode-i, the Data Base information generation unit 21A sets 1 that represents that the recording mode is mode-i as a value of the mode_flag. On the other hand, in step S3 in FIG. 27, when the coding processing is performed in mode-ii, the Data Base information generation unit 21A sets 0 that represents that the recording mode is mode-ii as a value of the mode_flag. Subsequently, the process returns to step S4 in FIG. 27 and the processing thereafter is performed.

In the recording device 1, the HEVC stream and the Data Base information generated with the above processing are recorded on the optical disc 11.

### [Reproduction Processing]

Referring next to the flowchart in FIG. 31, reproduction processing of the reproduction device 2 will be described.

At a predetermined timing such as when starting reproduction of the optical disc 11, the controller 51 of the reproduction device 2 controls the HDMI communication unit 58 and communicates with the display device 3 to read out the EDID from the memory 101A of the display device 3. The controller 51 stores the information representing the performance of the monitor included in the display device 3 in the register 53A and performs management.

In step S41, the controller 51 controls the disc drive 52 and reads the Clip Information and the PlayList which are the Data Base information from the optical disc 11. Furthermore, the controller 51 specifies the HEVC stream to be reproduced based on the information included in the PlayList and reads the AV stream including the specified HEVC stream from the optical disc 11 by controlling the disc drive 52.

In step S42, the controller 51 refers to the HDR_flag and the mode_flag included in the Clip Information. In the present example, the HDR_flag is set with a value that represents that recording of the HDR video as a master is being performed. With the above, the recording device 1 is brought into a state in which reproduction of the HDR video or the STD video obtained by converting the HDR video can be performed.

In step S43, the controller 51 determines whether the recording mode is mode-i on the basis of the value of the mode_flag.

When it is determined that the recording mode is mode-i in step S43, in step S44, the decoding processing unit 56 performs decoding processing in mode-i.

On the other hand, when it is determined that the recording mode is mode-ii in step S43, in step S45, the decoding processing unit 56 performs decoding processing in mode-ii.

After the decoding processing is performed in step S44 or step S45, the process is ended.

Note that, herein, while the determination on whether the recording mode is mode-i is made on the basis of the value of the mode_flag, the determination may be made on the basis of the tone_map _id of the Tone mapping information inserted into the HEVC stream.

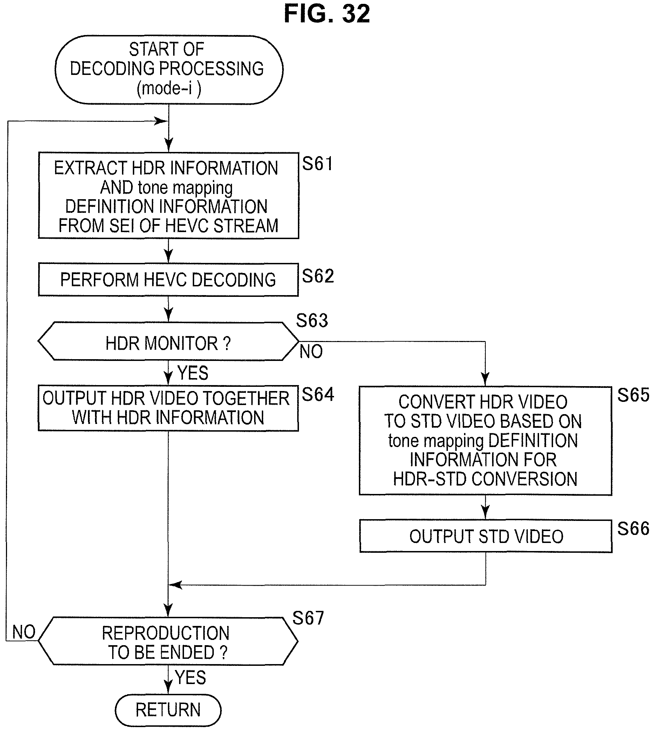

Referring next to the flowchart in FIG. 32, the decoding processing in mode-i performed in step S44 in FIG. 31 will be described.

In step S61, the parameter extraction unit 71 of the decoding processing unit 56 extracts HDR information and tone mapping definition information from the SEI of the HEVC stream. The parameter extraction unit 71 outputs the coded data of the HEVC included in the HEVC stream to the HEVC decoder 72.

In step S62, the HEVC decoder 72 decodes the coded data of the HEVC and outputs the HDR video obtained by decoding to the HDR-STD conversion unit 73 and the HDR video output unit 75A.

In step S63, on the basis of the information stored in the register 53A, the controller 51 determines whether the monitor included in the display device 3 is an HDR monitor. As described above, information related to the performance of the monitor included in the display device 3 is stored in the register 53A on the basis of the EDID of the HDMI read out from the display device 3.

When it is determined that the monitor included in the display device 3 is the HDR monitor in step S63, in step S64, the HDR video output unit 75A outputs the HDR video supplied from the HEVC decoder 72 together with the HDR information supplied from the parameter extraction unit 71.

On the other hand, when it is determined that the monitor included in the display device 3 is not an HDR monitor but is an STD monitor in step S63, in step S65, the HDR-STD conversion unit 73 converts the HDR video supplied from the HEVC decoder 72 to an STD video on the basis of the tone mapping definition information for HDR-STD conversion supplied from the parameter extraction unit 71.

In step S66, the STD video output unit 75B outputs the STD video obtained by performing conversion in the HDR-STD conversion unit 73.

After the HDR video is output in step S64 or after the STD video is output in step S66, the controller 51 determines whether the production ends in step S67.

When it is determined in step S67 that the reproduction is not to be ended, the controller 51 returns the process to step S61 and performs repetition of the above processing. When it is determined in step S67 that the reproduction is to be ended, the process returns to step S44 in FIG. 31 and the processing thereafter is performed.

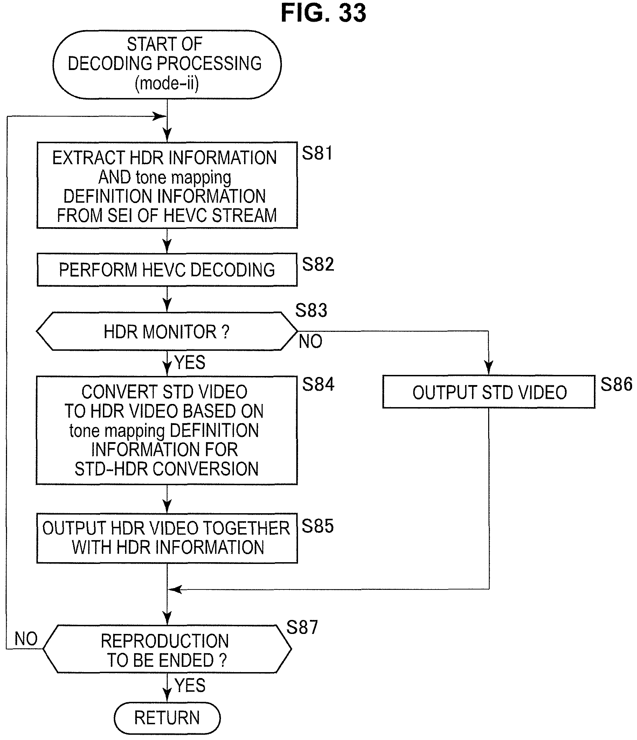

Referring next to the flowchart in FIG. 33, the decoding processing in mode-ii performed in step S45 in FIG. 31 will be described.

In step S81, the parameter extraction unit 71 of the decoding processing unit 56 extracts HDR information and tone mapping definition information from the SEI of the HEVC stream. The parameter extraction unit 71 outputs the coded data of the HEVC included in the HEVC stream to the HEVC decoder 72.

In step S82, the HEVC decoder 72 decodes the coded data of the HEVC and outputs the STD video obtained by decoding to the STD-HDR conversion unit 74 and the STD video output unit 75B.

In step S83, on the basis of the information stored in the register 53A, the controller 51 determines whether the monitor included in the display device 3 is an HDR monitor.

When it is determined that the monitor included in the display device 3 is an HDR monitor in step S83, in step S84, the STD-HDR conversion unit 74 converts the STD video supplied from the HEVC decoder 72 to an HDR video on the basis of the tone mapping definition information for STD-HDR conversion supplied from the parameter extraction unit 71.

In step S85, the HDR video output unit 75A outputs the HDR video obtained through the conversion by the STD-HDR conversion unit 74 along with the HDR information supplied from the parameter extraction unit 71.

On the other hand, when it is determined that the monitor included in the display device 3 is an STD monitor in step S83, in step S86, the STD video output unit 75B outputs the STD video supplied from the HEVC decoder 72.

After the HDR video is output in step S85 or after the STD video is output in step S86, the controller 51 determines whether the production ends in step S87.

When it is determined in step S87 that the reproduction is not to be ended, the controller 51 returns the process to step S81 and performs repetition of the above processing. When it is determined in step S87 that the reproduction is to be ended, the process returns to step S45 in FIG. 31 and the processing thereafter is performed.

### [Display Processing]

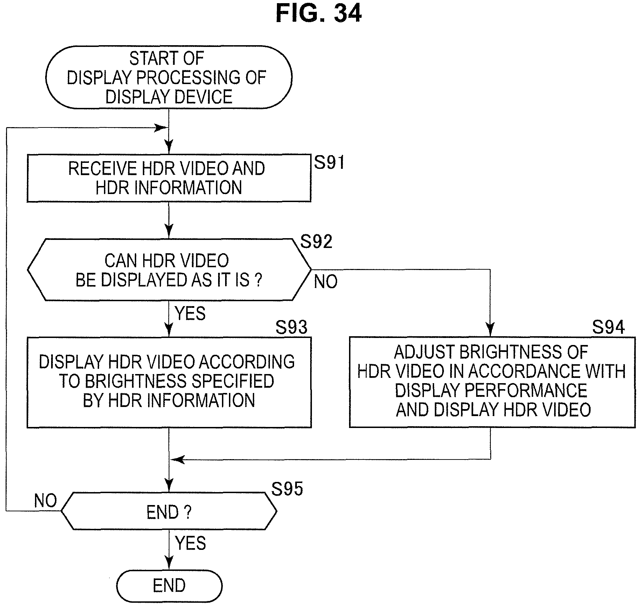

Referring next to the flowchart in FIG. 34, display processing of the display device 3 will be described.

Herein, a case in which the monitor 104 included in the display device 3 is an HDR monitor will be described. An HDR video to which HDR information is added is transmitted to the display device 3 including an HDR monitor from the reproduction device 2.

In step S91, the HDMI communication unit 102 of the display device 3 receives the HDR video and the HDR information transmitted from the reproduction device 2.

In step S92, the controller 101 refers to the HDR information and determines whether the HDR video transmitted from the reproduction device 2 can be displayed as it is. The HDR information includes information of the master HDR video, that is, information representing the brightness characteristic of the HDR video transmitted from the reproduction device 2. The determination in step S92 is performed by comparing the brightness characteristic of the HDR video specified by the HDR information and the display performance of the monitor 104 with each other.

For example, in a case in which the dynamic range of the HDR video specified by the HDR information is 0-400% and the dynamic range of the monitor 134 is 0-500% (500cd/m² assuming that the brightness of 100% is 100cd/m², for example), it is determined that the HDR video can be displayed as it is. On the other hand, in a case in which the dynamic range of the HDR video specified by the HDR information is 0-400% and the dynamic range of the monitor 104 is 0-300%, it is determined that the HDR video cannot be displayed as it is.

When it is determined that the HDR video can be displayed as it is in step S92, the signal processing unit 103 causes the monitor 104 to display an image of the HDR video according to the brightness designated by the HDR information in step S93. For example, when the brightness characteristic represented by function F2 in FIG. 12 is designated by the HDR information, each brightness value represents brightness in a range of 0% to 400% represented by function F2.

On the other hand, when it is determined that the HDR video may not be displayed as it is in step S92, the signal processing unit 103 adjusts the brightness of the monitor 104 in accordance with the display performance of the monitor 104 and displays the image of the HDR video with the adjusted brightness in step S94. For example, when the brightness characteristic represented by function F2 in FIG. 12 is designated by the HDR information and the dynamic range of the monitor 104 is 0% to 300%, the compression is performed so that each brightness value represents the brightness in the range of 0% to 300%.

After the image of the HDR video has been displayed in step S93 or in step S94, in step S95, the controller 101 determines whether the display is to be ended and when it is determined that the display is not to be ended, processing from step S91 and after is repeated. When determination is made to end the display in step S95, the controller 101 ends the processing.

With the above sequential processing, the recording device 1 can record the master HDR video on the optical disc 11 as it is and have the reproduction device 2 perform reproduction so that the image of the HDR video is displayed on the display device 3.

Furthermore, the recording device 1 can convert the master HDR video to an STD video, record the STD video on the optical disc 11, and have the reproduction device 2 restore the STD video into an HDR video so that the image of the HDR video is displayed on the display device 3.

When reproducing the HDR video, by enabling the brightness characteristic of the master HDR video to be designated with the HDR information, the author of the content is capable of displaying an image of the HDR video at an intended brightness.

### <6. Example in which tone mapping table is prepared in server>

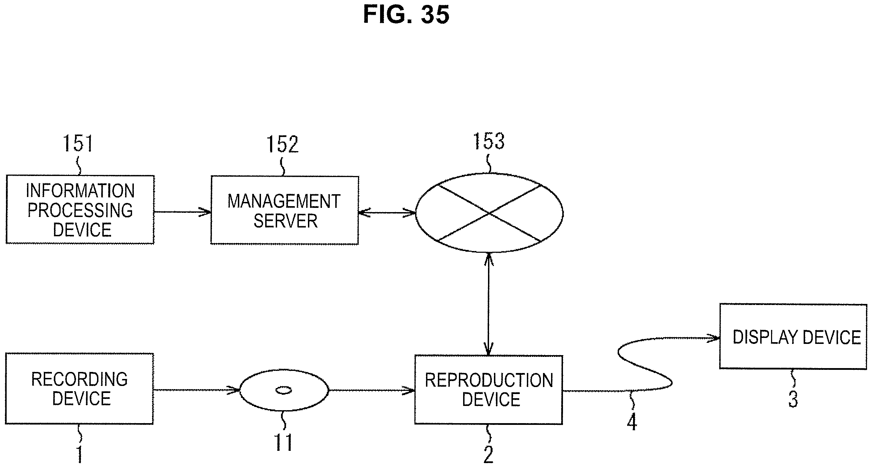

FIG. 35 is a diagram illustrating another exemplary configuration of the recording/reproduction system.

The recording/reproduction system in FIG. 35 includes an information processing device 151 and a management server 152 in addition to the recording device 1, the reproduction device 2, and the display device 3. The management server 152 is connected to a network 153 formed by the Internet or the like. The reproduction device 2 is considered to be able to perform communication with the management server 152 through the network 153.

In the recording/reproduction system in FIG. 35, when the HDR video is output to the display device 3 and the recording mode of the optical disc 11 is mode-i, the HDR video of which brightness is adjusted according to the specification of the display device 3 is output. When the recording mode of the optical disc 11 is mode-ii, the HDR video generated using the tone mapping definition information according to the specification of the display device 3 is output. Hereinafter, the monitor 104 included in the display device 3 is assumed to be an HDR monitor in the description.

The information processing device 151 acquires the master HDR video and specification information which is information indicating the specification of each display device and generates brightness adjustment data or tone mapping definition information for STD-HDR conversion according to the specification of each display device for each HDR video.

The brightness adjustment data is data used to adjust the brightness of the HDR video. The brightness characteristic of the monitor such as the maximum brightness differs for each display device which is an output destination of the HDR video, and thus information for outputting the optimum HDR video according to the specification of each display device from the reproduction device 2 is generated by the information processing device 151. The information processing device 151 is a device that is managed by an author of content.

When the master HDR video is recorded in mode-i, the information processing device 151 generates the brightness adjustment data according to the specification of each display device. When the master HDR video is recorded in mode-ii, the information processing device 151 generates the tone mapping definition information according to the specification of each display device. In the latter case, a video actually recorded on the optical disc 11 is the STD video obtained by converting the master HDR video.

When it is not necessary to distinguish the brightness adjustment data generated by the information processing device 151 from the tone mapping definition information, the brightness adjustment data and the tone mapping definition information are collectively called a tone mapping table.

The information processing device 151 outputs the generated tone mapping table together with a disc ID, a monitor ID, and the specification information to the management server 152.

The disc ID is identification information of the optical disc 11. As the disc ID, for example, a Content Certificate ID of an advanced access content system (AACS) is used. The Content Certificate ID can be assigned to the optical disc 11 which is an optical disc of a BD-ROM standard.

The monitor ID is identification information of the display device. As the monitor ID, for example, a Vendor/Product ID defined in CEA-861 is used. Extended display identification data (EDID) storing the Vender/Product ID or EDID storing the specification information is maintained in the display device 3 corresponding to communication of an HDMI standard.

The information processing device 151 appropriately generates the HDR information and outputs the HDR information to the management server 152. Transmission and reception of data between the information processing device 151 and the management server 152 may be performed through the network 153 or may be performed through wired communication or removable media.

The management server 152 manages a database in which the tone mapping table generated by the information processing device 151 is associated with the disc ID, the monitor ID, and the specification information. The HDR information is also appropriately registered in the database. In response to a request from the reproduction device 2, for example, the management server 152 transmits the tone mapping table managed in the database in association with the disc ID of the optical disc 11 and the monitor ID of the display device 3 which is an output destination of the HDR video to the reproduction device 2. The request from the reproduction device 2 includes the disc ID of the optical disc 11 and the monitor ID of the display device 3.

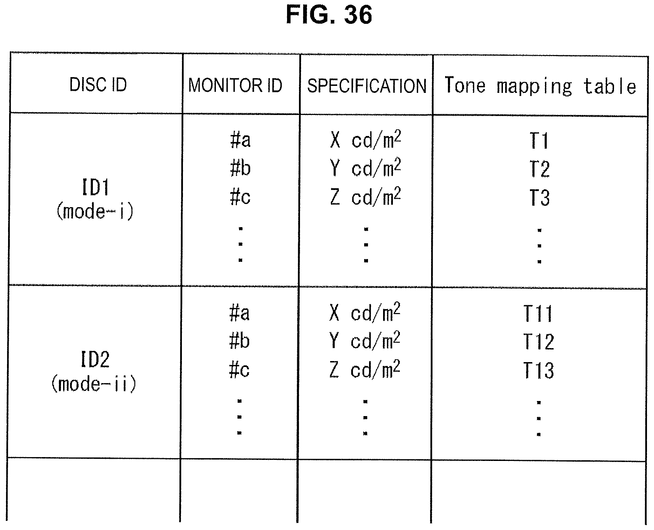

FIG. 36 is a diagram illustrating an example of the database managed by the management server 152.

In the database managed by the management server 152, the disc ID, the monitor ID, the specification information, and the tone mapping table are associated for management.

In the example of FIG. 36, an optical disc to which a disc ID of ID1 is assigned is an optical disc on which content is recorded in mode-i. With ID1, tone mapping tables T1, T2, and T3 which are brightness adjustment data are associated as data for display devices identified by monitor IDs of #a, #b, #c, etc. for management.

On the other hand, an optical disc to which a disc ID of ID2 is assigned is an optical disc on which content is recorded in mode-ii. With ID2, tone mapping tables T11, T12, and T13 which are the tone mapping definition information are associated as data for the display devices identified by the monitor IDs of #a, #b, #c, etc. for management.

The maximum brightness of the display devices identified by the monitor IDs of #a, #b, #c, etc. is set to X cd/m², Y cd/m², Z cd/m², etc.

For example, when the disc ID of the optical disc 11 is ID1 and the monitor ID of the display device 3 is #a, tone mapping table T1 which is the brightness adjustment data is supplied to the reproduction device 2. When the HDR information is associated with the disc ID of ID1 for management, the HDR information is also supplied to the reproduction device 2.

On the other hand, when the disc ID of the optical disc 11 is ID2 and the monitor ID of the display device 3 is #b, tone mapping table T12 which is the tone mapping definition information is supplied to the reproduction device 2. When the HDR information is associated with the disc ID of ID2 for management, the HDR information is also supplied to the reproduction device 2.

Returning back to the description of FIG. 35, when the recording mode of the optical disc 11 is mode-i, the reproduction device 2 adjusts the brightness of the HDR video obtained by decoding the HEVC stream recorded on the optical disc 11 using the brightness adjustment data transmitted from the management server 152. The reproduction device 2 outputs the HDR video after the brightness adjustment together with the HDR information transmitted from the management server 152 to the display device 3.

The HDR video output to the display device 3 is the HDR video of which brightness is adjusted based on the brightness adjustment data for the display device 3. The reproduction device 2 can cause the HDR video to be displayed with the optimum brightness according to the monitor 104.

On the other hand, when the recording mode of the optical disc 11 is mode-ii, the reproduction device 2 converts the STD video obtained by decoding the HEVC stream recorded on the optical disc 11 into the HDR video using the tone mapping definition information transmitted from the management server 152. The reproduction device 2 outputs the HDR video obtained by the conversion together with the HDR information transmitted from the management server 152 to the display device 3.

The HDR video output to the display device 3 is the HDR video obtained based on the tone mapping definition information for the display device 3. Even in this case, the reproduction device 2 can cause the HDR video to be displayed with the optimum brightness according to the monitor 104.

### [Signal processing in mode-i]

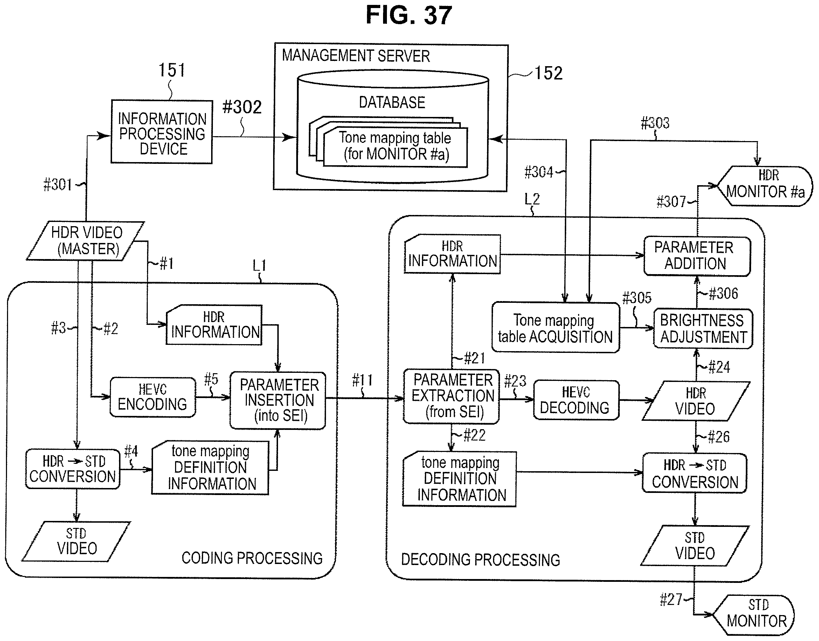

FIG. 37 is a diagram illustrating an example of processing when the recording mode is mode-i. In the processing illustrated in FIG. 37, the description of the same processing as the processing described with reference to FIG. 2 and the like will be appropriately omitted.

As illustrated at the end of arrow #301, the same HDR video as the master HDR video input to the recording device 1 is input to the information processing device 151 by, for example, an author. The disc ID of the optical disc on which the master HDR video is recorded, the monitor ID and the specification information of each display device, and the like are also input to the information processing device 151.

The information processing device 151 generates the brightness adjustment data based on the specification of each display device. Furthermore, the information processing device 151 detects the brightness of the HDR video and generates the HDR information as in the recording device 1. As illustrated at the end of arrow #302, the information processing device 151 outputs the generated brightness adjustment data and the HDR information together with the disc ID, the monitor ID, and the specification information to the management server 152 for registration in the database.

As illustrated at the end of arrow #303, the reproduction device 2 performs communication with the display device 3 including the HDR monitor (the monitor 104) when reproducing the optical disc 11 and acquires the monitor ID and the specification information of the display device 3. In the example of FIG. 37, the monitor ID of the display device 3 is set to #a.

As illustrated at the end of arrow #304, the reproduction device 2 accesses the management server 152 through the network 153 and requests the management server 152 to transmit the tone mapping table by transmitting the acquired disc ID and monitor ID. The reproduction device 2 acquires the brightness adjustment data and the HDR information transmitted from the management server 152 in response to the request. Of the data registered in the database, the brightness adjustment data and the HDR information registered in association with the disc ID and the monitor ID #a transmitted by the reproduction device 2 are transmitted from the management server 152.

As illustrated at the end of arrow #305, the reproduction device 2 adjusts the brightness of the HDR video obtained by decoding the coded data of the HEVC based on the brightness adjustment data acquired from the management server 152. The reproduction device 2 adds the HDR information to the data of the HDR video after the brightness adjustment, as illustrated at the end of arrow #306, and outputs the data of the HDR video to the display device 3, as illustrated at the end of arrow #307.

For example, when the HDR information is transmitted as the HDR information added to the data of the HDR video from the management server 152, the HDR information is used. When the HDR information is not transmitted, the HDR information extracted from the HEVC stream is used.

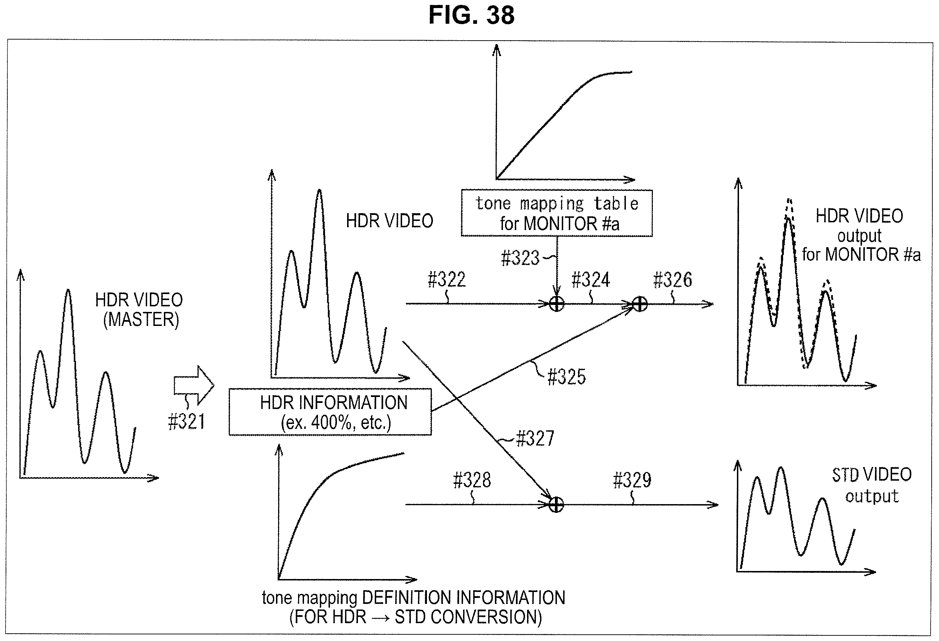

FIG. 38 is a diagram illustrating an example of each piece of information when the recording mode is mode-i.

As illustrated at the end of hollow arrow #321, the master HDR video is provided to the reproduction device 2 together with the HDR information and the tone mapping definition information for HDR-STD conversion that are generated in the recording device 1 on the basis of the master HDR video.

In the reproduction device 2, as illustrated at the heads of arrows #322 and #323, the brightness of the HDR video obtained by decoding the coded data of the HEVC is adjusted based on the brightness adjustment data which is the tone mapping table acquired from the management server 152.

As illustrated at the top center of FIG. 38, the horizontal axis of the coordinates representing the brightness adjustment data for the display device 3 (monitor ID #a) represents a pixel value before the tone mapping and the vertical axis represents a pixel value after the tone mapping. The brightness adjustment data for the display device 3 serves as a function of performing tone mapping so that the brightness of the data in a high brightness region (data with a large pixel value) is suppressed.

The HDR information is added to the data of the HDR video after the brightness adjustment, as illustrated at the heads of arrows #324 and #325, and the data is output to the display device 3, as illustrated at the end of arrow #326. A process when the STD video is output to the display device including the STD monitor is the same process as the process described with reference to Fig. 3.

As described above, when the recording mode of the optical disc 11 is mode-i, the brightness of the HDR video obtained by decoding the coded data is adjusted according to the specification of the display device 3 which is an output destination and the HDR video after the brightness adjustment is output.

### [Signal processing in mode-ii]

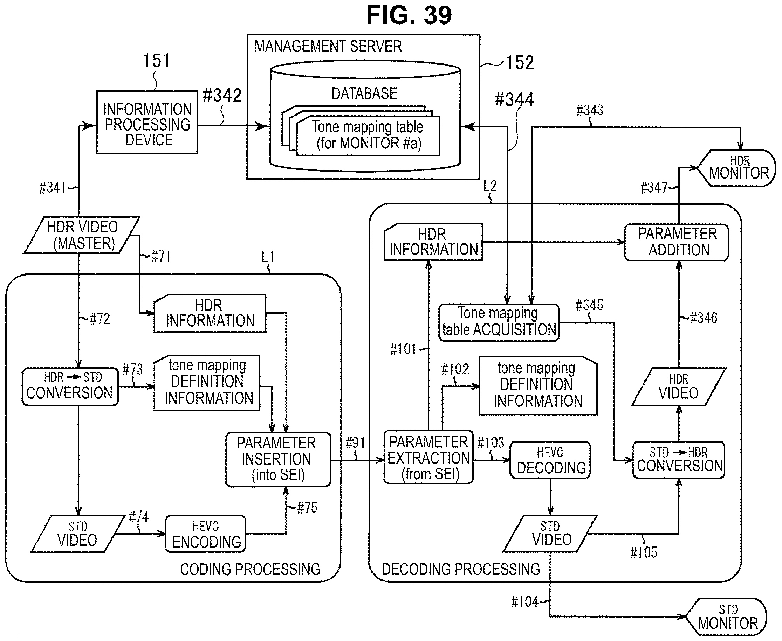

FIG. 39 is a diagram illustrating an example of processing when the recording mode is mode-ii. In the processing illustrated in FIG. 39, the description of the same processing as the processing described with reference to FIG. 4 and the like will be appropriately omitted.

As illustrated at the end of arrow #341, the same HDR video as the master HDR video is input to the information processing device 151. The disc ID of the optical disc on which the master HDR video is recorded, the monitor ID and the specification information of each display device, and the like are also input to the information processing device 151.

The information processing device 151 converts the HDR video into the STD video as in the recording device 1 and generates the tone mapping definition information for the STD-HDR conversion according to the specification of each display device. The information processing device 151 detects the brightness of the HDR video and generates the HDR information. As illustrated at the end of arrow #342, the information processing device 151 outputs the generated tone mapping definition information and HDR information together with the disc ID, the monitor ID, and the specification information to the management server 152 for registration in the database.

As illustrated at the end of arrow #343, the reproduction device 2 performs communication with the display device 3 including the HDR monitor when reproducing the optical disc 11 and acquires the monitor ID and the specification information of the display device 3.

As illustrated at the end of arrow #344, the reproduction device 2 accesses the management server 152 and requests the management server 152 to transmit the tone mapping table by transmitting the acquired disc ID and monitor ID. The reproduction device 2 acquires the tone mapping definition information and the HDR information transmitted from the management server 152 in response to the request. Of the data registered in the database, the tone mapping definition information and the HDR information registered in association with the disc ID and the monitor ID #a transmitted by the reproduction device 2 are transmitted from the management server 152.

As illustrated at the end of arrow #345, the reproduction device 2 converts the STD video obtained by decoding the coded data of the HEVC into the HDR video based on the tone mapping definition information for STD-HDR conversion transmitted from the management server 152. The reproduction device 2 adds the HDR information to the data of the HDR video obtained by performing the conversion, as illustrated at the end of arrow #346, and outputs the data of the HDR video to the display device 3, as illustrated at the end of arrow #347.

Also in the case of mode-ii, when the HDR information is transmitted as the HDR information added to the data of the HDR video from the management server 152, the HDR information is used. When the HDR information is not transmitted, the HDR information extracted from the HEVC stream is used.

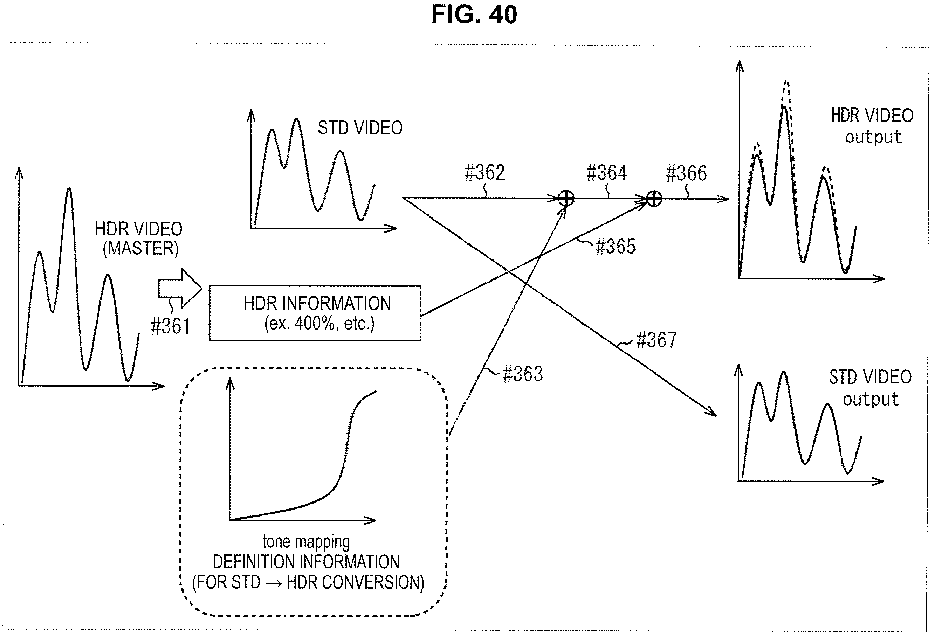

FIG. 40 is a diagram illustrating an example of each piece of information when the recording mode is mode-ii.

As illustrated at the head of hollow arrow #361, after the master HDR video is converted into the STD video, the STD video is supplied together with the HDR information generated in the recording device 1 and the tone mapping definition information for STD-HDR conversion to the reproduction device 2. The tone mapping definition information for STD-HDR conversion supplied from the recording device 1 to the reproduction device 2 is not data for a specific display device but data for general use.

In the reproduction device 2, as illustrated at the heads of arrows #362 and #363, the STD video obtained by decoding the coded data of the HEVC is converted into the HDR video using the tone mapping definition information for STD-HDR conversion acquired from the management server 152.

The tone mapping definition information for STD-HDR conversion surrounded by a dotted line in FIG. 40 is not data for general use extracted from the HEVC stream recorded on the optical disc 11 but data for the display device 3 acquired from the management server 152. The horizontal axis of the coordinates representing the tone mapping definition information for the display device 3 represents a pixel value of the STD video which is an input and the vertical axis represents a pixel value of the HDR video which is an output. The tone mapping definition information for the display device 3 serves as a function of performing tone mapping so that the brightness of the data in a low brightness region is suppressed and the brightness of the data in a high brightness region close to the maximum value is suppressed.

The HDR information is added to the data of the HDR video obtained by converting the STD video, as illustrated at the heads of arrows #364 and #365, and the data is output to the display device 3, as illustrated at the end of arrow #366. A process when the STD video is output to the display device including the STD monitor is the same process as the process described with reference to Fig. 5.

As described above, when the recording mode of the optical disc 11 is mode-ii, the STD video obtained by decoding the coded data is converted into the HDR video using the tone mapping definition information according to the performance of the display device 3 which is an output destination, and the HDR video is output.

### [Exemplary configuration of each device]

Here, the configuration of each device of the recording/reproduction system in FIG. 35 will be described. Descriptions the same as those given above will be appropriately omitted.

### Configuration of information processing device 151

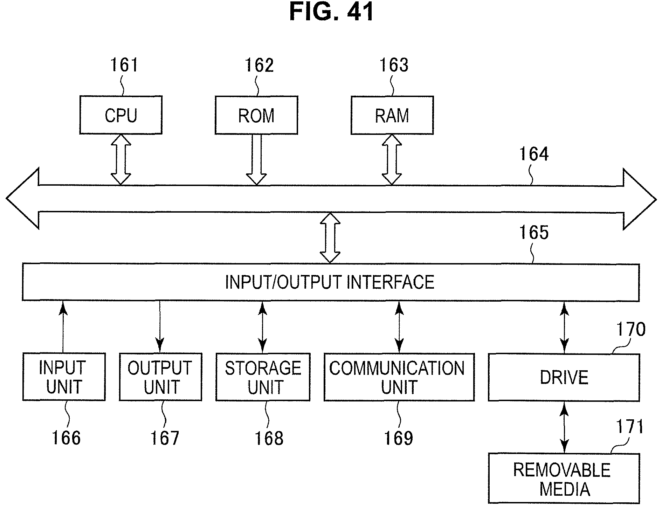

FIG. 41 is a block diagram illustrating an exemplary hardware configuration of the information processing device 151.

A CPU 161, a ROM 162, and a RAM 163 are mutually connected by a bus 164. An input/output interface 165 is connected to the bus 164. An input unit 166 formed by a keyboard, a mouse, or the like and an output unit 167 formed by a display, a speaker, or the like are connected to the input/output interface 165. A storage unit 168 formed by a hard disk, a nonvolatile memory, or the like, a communication unit 169 formed by a network interface or the like, and a drive 170 driving removable media 171 are connected to the input/output interface 165.

The management server 152 has the same configuration as the information processing device 151 illustrated in FIG. 41. Hereinafter, the configuration in FIG. 41 will be described with reference to the configuration of the management server 152.

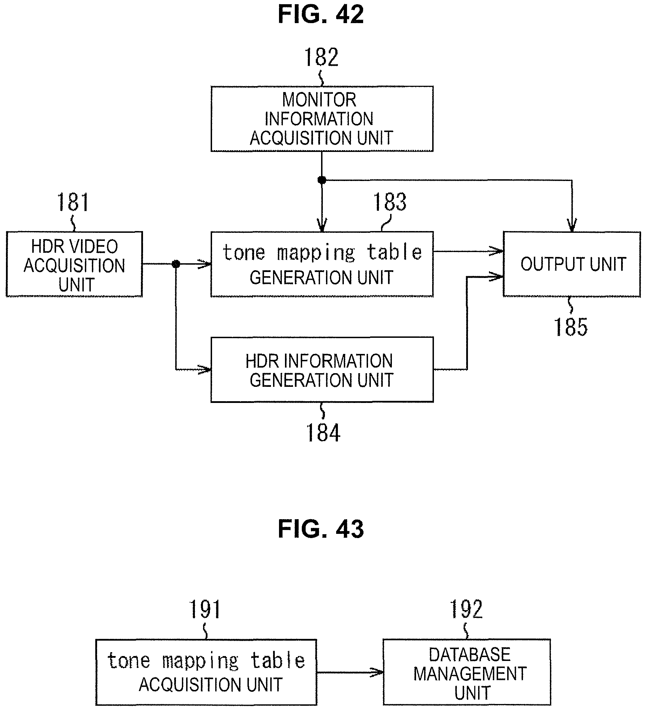

FIG. 42 is a block diagram illustrating an exemplary functional configuration of the information processing device 151. At least some of the functional units illustrated in FIG. 42 are realized when predetermined programs are executed by the CPU 161 in FIG. 41.

In the information processing device 151, an HDR video acquisition unit 181, a monitor information acquisition unit 182, a tone mapping table generation unit 183, an HDR information generation unit 184, and an output unit 185 are realized.

The HDR video acquisition unit 181 controls, for example, the drive 170 and acquires data of the master HDR video input using the removable media 171. For example, the information indicating the recording mode of the HDR video and the disc ID of the HDR video are input together with the HDR video to the information processing device 151.

The HDR video acquisition unit 181 outputs the acquired HDR video to the tone mapping table generation unit 183 and the HDR information generation unit 184.

The monitor information acquisition unit 182 acquires information regarding a plurality of display devices sold by different manufacturers, such as monitor IDs and specification information, and outputs the information to the tone mapping table generation unit 183 and the output unit 185.

The tone mapping table generation unit 183 generates the tone mapping table according to the recording mode of the HDR video acquired by the HDR video acquisition unit 181 and outputs the tone mapping table to the output unit 185.

That is, when the recording mode is mode-i, the tone mapping table generation unit 183 generates the brightness adjustment data for each display device based on the specification of each display device indicated by the specification information acquired by the monitor information acquisition unit 182. When the recording mode is mode-ii, the tone mapping table generation unit 183 generates the tone mapping definition information for STD-HDR conversion for each display device based on the specification of each display device indicated by the specification information acquired by the monitor information acquisition unit 182.

The HDR information generation unit 184 detects the brightness of the HDR video acquired by the HDR video acquisition unit 181 and generates the HDR information including each piece of information described with reference to FIG. 12. The HDR information generation unit 184 outputs the generated HDR information to the output unit 185. The specification information of each display device is supplied to the HDR information generation unit 184 so that the HDR information according to the specification of each display device can be generated.

The output unit 185 performs communication with the management server 152 by controlling the communication unit 169. The output unit 185 outputs the tone mapping table together with the disc ID, the monitor ID, the specification information, and the HDR information to the management server 152.

### • Configuration of management server 152

FIG. 43 is a block diagram illustrating an exemplary functional configuration of the management server 152. At least some of the functional units illustrated in FIG. 43 are realized when predetermined programs are executed by the CPU 161 (FIG. 41) of the management server 152.

In the management server 152, a tone mapping table acquisition unit 191 and a database management unit 192 are realized.

The tone mapping table acquisition unit 191 controls, for example, the communication unit 169 and acquires information transmitted from the information processing device 151. The tone mapping table acquisition unit 191 outputs the acquired tone mapping table, the disc ID, the monitor ID, the specification information, and the HDR information to the database management unit 192.

The database management unit 192 stores the database formed from the information supplied from the tone mapping table acquisition unit 191 and illustrated in FIG. 36 in the storage unit 168 for management. The database management unit 192 transmits, for example, the tone mapping table and the HDR information registered in the database in association with the disc ID and the monitor ID transmitted from the reproduction device 2 to the reproduction device 2 in response to a request from the reproduction device 2.

### • Configuration of reproduction device 2

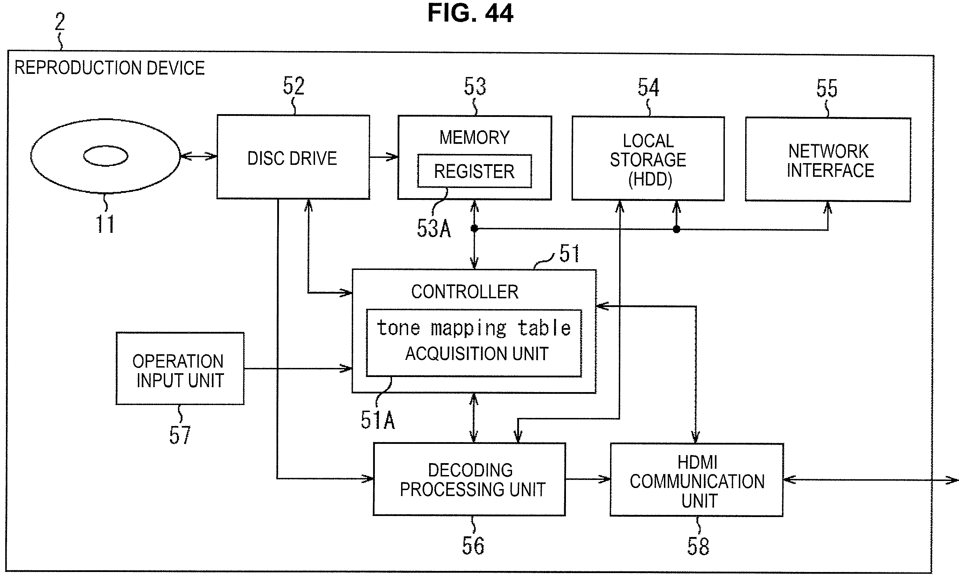

FIG. 44 is a block diagram illustrating an exemplary configuration of the reproduction device 2.

The configuration of the reproduction device 2 illustrated in FIG. 44 is the same as the configuration illustrated in FIG. 24 except that a tone mapping table acquisition unit 51A is realized in the controller 51.

The tone mapping table acquisition unit 51A controls the disc drive 52 and reads the disc ID from the optical disc 11 when reproducing the optical disc 11. The tone mapping table acquisition unit 51A acquires the monitor ID and the specification information included in the EDID acquired from the display device 3 by the HDMI communication unit 58.

The tone mapping table acquisition unit 51A controls the network interface 55, accesses the management server 152, and transmits the acquired disc ID, monitor ID, and specification information to the management server 152. As will be described below, in the management server 152, the tone mapping table is selected based on the specification information of the display device. The tone mapping table acquisition unit 51A acquires the tone mapping table transmitted from the management server 152 and outputs the tone mapping table to the decoding processing unit 56.

The HDMI communication unit 58 performs communication with the display device 3 through the cable 4. The HDMI communication unit 58 acquires the EDID including the specification information of the display device 3 which includes information indicating the maximum brightness of the monitor and information indicating the maximum extension level, and the EDID including the monitor ID of the display device 3 and outputs the information included in each EDID to the controller 51. The HDMI communication unit 58 has a function of an acquisition unit for information regarding the display device 3 which is an output destination of the HDR video. The EDID which includes the information indicating the maximum brightness of the monitor and the information indicating the maximum extension level is a newly defined EDID.

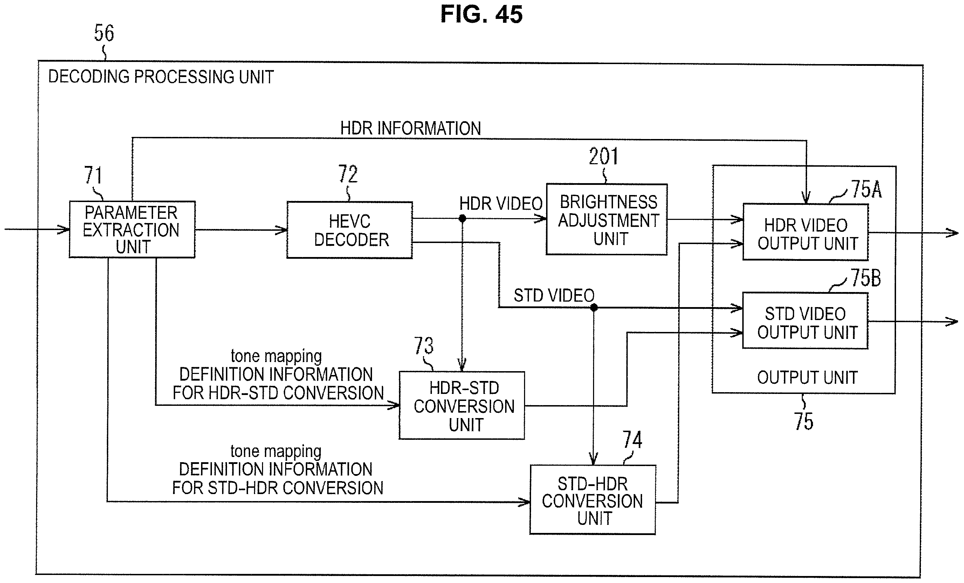

FIG. 45 is a block diagram illustrating an exemplary configuration of the decoding processing unit 56 in FIG. 44.

The configuration illustrated in FIG. 45 is the same as the configuration illustrated in FIG. 25 except that a brightness adjustment unit 201 is provided between the HEVC decoder 72 and the HDR video output unit 75A. When the recording mode of the optical disc 11 is mode-i, brightness adjustment data supplied as the tone mapping table from the tone mapping table acquisition unit 51A is input to the brightness adjustment unit 201. When the recording mode of the optical disc 11 is mode-ii, the tone mapping definition information supplied as the tone mapping table from the tone mapping table acquisition unit 51A is input to the STD-HDR conversion unit 74.

The brightness adjustment unit 201 adjusts the brightness of the HDR video supplied from the HEVC decoder 72 based on the brightness adjustment data supplied from the tone mapping table acquisition unit 51A. The brightness adjustment unit 201 outputs the HDR video after the brightness adjustment to the HDR video output unit 75A.

The STD-HDR conversion unit 74 converts the STD video supplied from the HEVC decoder 72 into the HDR video based on the tone mapping definition information supplied from the tone mapping table acquisition unit 51A. In this case, the tone mapping definition information extracted by the parameter extraction unit 71 is not used. The STD-HDR conversion unit 74 outputs the HDR video obtained by the conversion to the HDR video output unit 75A.

### [Operation of each device]

Here, an operation of each device in FIG. 35 will be described.

### • Process of information processing device 151

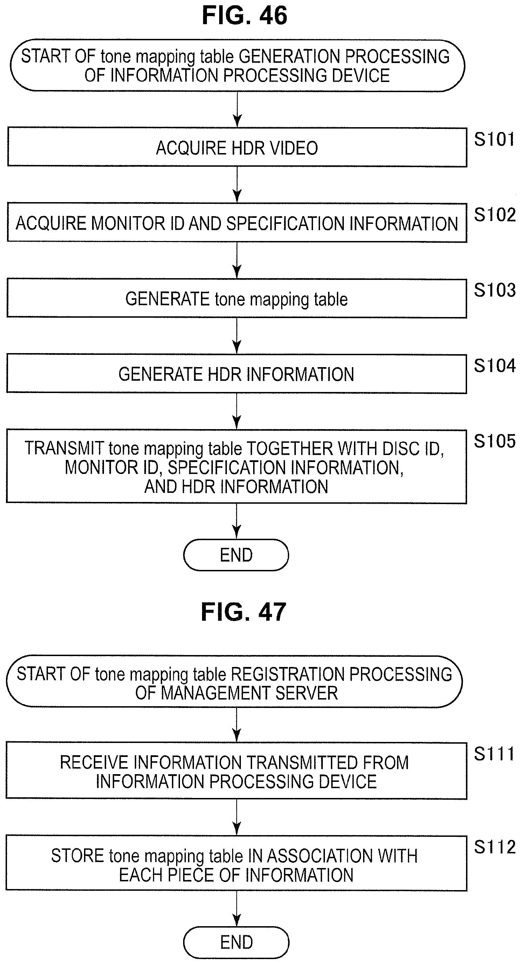

Referring first to the flowchart in FIG. 46, a process of the information processing device 151 generating the tone mapping table will be described.

In step S101, the HDR video acquisition unit 181 of the information processing device 151 acquires data of the master HDR video.

In step S102, the monitor information acquisition unit 182 acquires the monitor ID and the specification information of each display device.

In step S103, the tone mapping table generation unit 183 generates the tone mapping table for each display device based on the specification of each display device. The tone mapping table generation unit 183 generates the brightness adjustment data when the recording mode of the HDR video acquired by the HDR video acquisition unit 181 is mode-i, and generates the tone mapping definition information when the recording mode is mode-ii. The tone mapping table generation unit 183 outputs the generated tone mapping table to the output unit 185.

In step S104, the HDR information generation unit 184 generates the HDR information, for example, by detecting the brightness of the HDR video.

In step S105, the output unit 185 transmits the tone mapping table together with the disc ID, the monitor ID, the specification information, and the HDR information to the management server 152, and then the process ends. For example, the process of FIG. 27 is performed in parallel with the process of the information processing device 151 in the recording device 1.

### • Process of management server 152

Referring next to the flowchart in FIG. 47, a process of the management server 152 registering the tone mapping table in the database will be described.

In step S111, the tone mapping table acquisition unit 191 of the management server 152 receives the information transmitted from the information processing device 151.

In step S112, the database management unit 192 stores the tone mapping table received by the tone mapping table acquisition unit 191 in association with the disc ID, the monitor ID, the specification information, and the HDR information and ends the processing. The tone mapping table registered in the database is supplied in response to a request form the reproduction device 2 reproducing the optical disc 11.

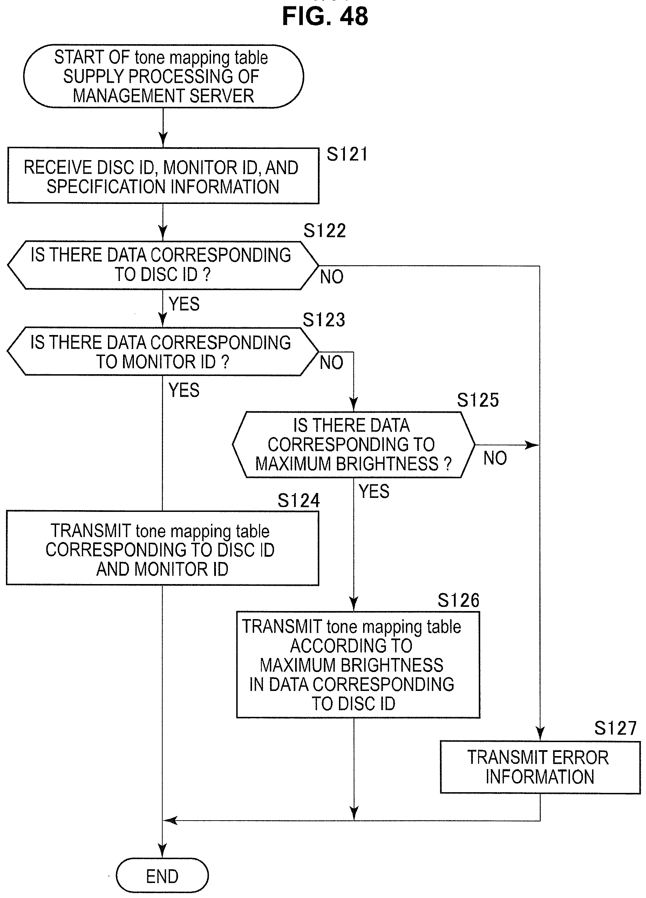

Referring next to the flowchart in FIG. 48, a process of the management server 152 supplying the tone mapping table will be described.

In step S121, the database management unit 192 receives the disc ID, the monitor ID, and the specification information transmitted from the reproduction device 2. The specification information includes information indicating the maximum brightness of the display device 3.

In step S122, the database management unit 192 determines whether there is data corresponding to (data registered in association with) the disc ID transmitted from the reproduction device 2 with reference to the database of the storage unit 168.

When it is determined in step S122 that there is such data, the database management unit 192 determines whether there is data corresponding to the monitor ID transmitted from the reproduction device 2 in the data corresponding to the disc ID in step S123.

When it is determined in step S123 that there is data corresponding to the monitor ID, the database management unit 192 transmits the tone mapping table corresponding to the disc ID and the monitor ID to the reproduction device 2 in step S124. When the recording mode of the optical disc 11 is mode-i, the brightness adjustment data is transmitted. When the recording mode is mode-ii, the tone mapping definition information is transmitted.

On the other hand, when it is determined in step S123 that there is no data corresponding to the monitor ID in the data corresponding to the disc ID, the database management unit 192 determines in step S125 whether there is data corresponding to the maximum brightness of the display device 3.

When it is determined in step S125 that there is data corresponding to the maximum brightness, the database management unit 192 transmits the tone mapping table corresponding to the maximum brightness of the display device 3 in the data corresponding to the disc ID in step S126 to the reproduction device 2. Even when the monitor ID of the display device 3 is not registered in the database, the display device 3 is supplied with the tone mapping table for the display device of the same maximum brightness as the display device 3.

After the tone mapping table is transmitted in step S124 or step S126, the process ends. When the HDR information is registered together with the tone mapping table generated by the information processing device 151, the HDR information is also transmitted to the reproduction device 2.

On the other hand, when it is determined in step S122 that there is no data corresponding to the disc ID, error information is transmitted in step S127. Thereafter, the process ends. The error information indicates that there is no corresponding data. Even when it is determined in step S125 that there is no data corresponding to the maximum brightness of the display device 3, error information is similarly transmitted in step S127 and the process ends.

### • Process of Reproduction Device 2

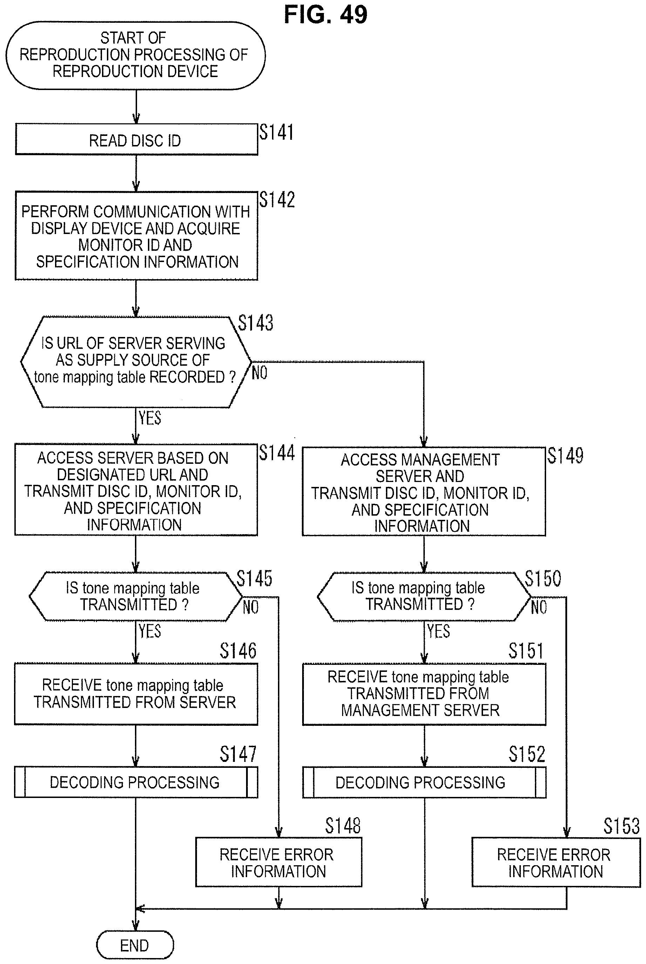

Referring next to the flowchart in FIG. 49, reproduction processing of the reproduction device 2 will be described.

In step S141, the tone mapping table acquisition unit 51A of the reproduction device 2 controls the disc drive 52 and reads the disc ID from the optical disc 11.

In step S142, the HDMI communication unit 58 performs communication with the display device 3 and acquires the EDID including the monitor ID and the EDID including the specification information. The specification information of the display device 3 also includes information indicating the maximum brightness.

In step S143, the tone mapping table acquisition unit 51A determines whether the URL of the server serving as a supply source of the tone mapping table is recorded on the optical disc 11. In this example, as an alternative to the management server 152, a server serving as the supply source of the tone mapping table can be prepared arbitrarily by the author. The server prepared arbitrarily by the author can perform the same process as the management server 152 and the tone mapping table can be considered to be supplied to the accessed reproduction device.

The URL of the server serving as the supply source of the tone mapping table is described in, for example, the PlayList file. The URL may be described in another file recorded on the optical disc 11.

When it is determined in step S143 that the URL of the server is recorded, the tone mapping table acquisition unit 51A accesses the server based on the URL recorded on the optical disc 11 in step S144. The tone mapping table acquisition unit 51A transmits the disc ID, the monitor ID, and the specification information.

In step S145, the tone mapping table acquisition unit 51A determines whether the tone mapping table is transmitted from the server. The server accessed by the reproduction device 2 performs the same process as the process in FIG. 48.

When it is determined in step S145 that the tone mapping table is transmitted, the tone mapping table acquisition unit 51A receives the tone mapping table transmitted from the server in step S146. When the HDR information is transmitted together with the tone mapping table, the tone mapping table acquisition unit 51A receives the HDR information.

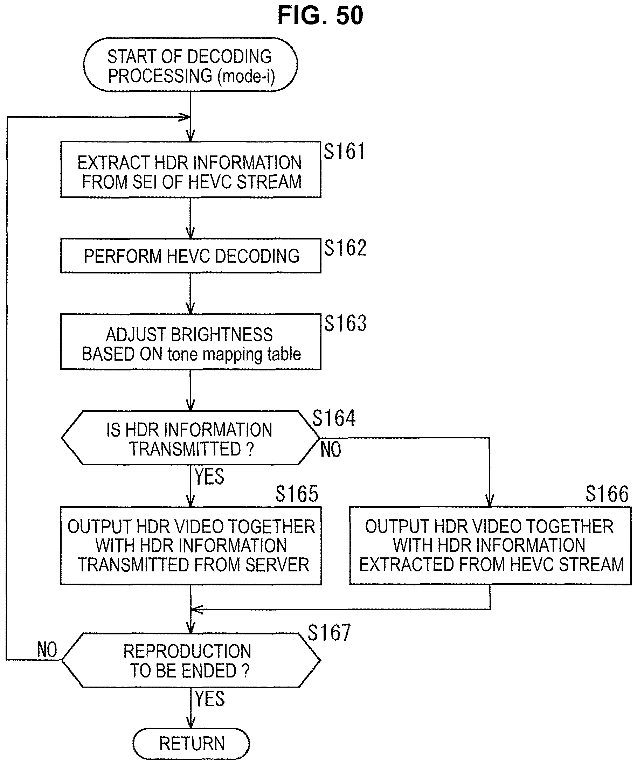

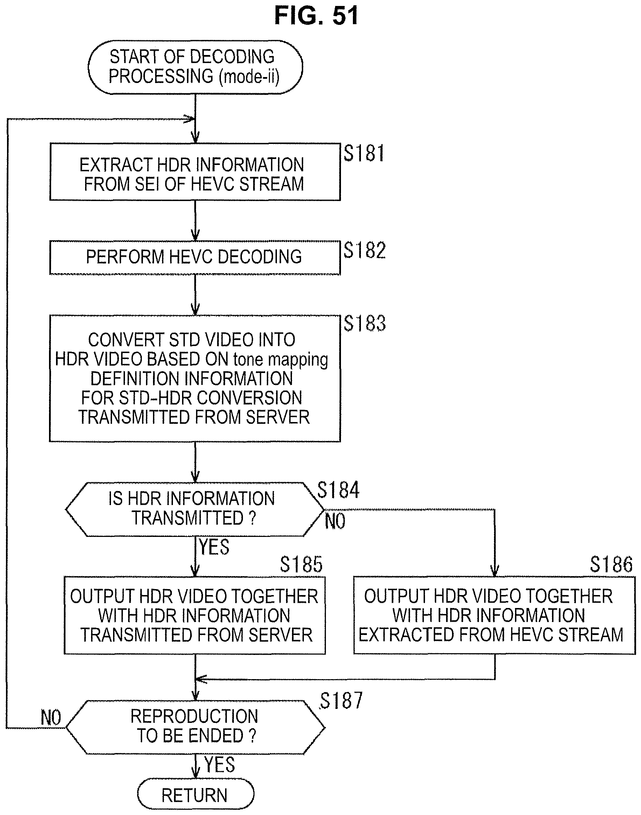

After the tone mapping table is received, decoding processing is performed in step S147, and then the processing ends. In the decoding processing, the tone mapping table and the HDR information transmitted from the server are used. The details of the decoding processing will be described below with reference to the flowcharts in FIGS. 50 and 51.

When it is determined in step S145 that the tone mapping table is not transmitted, the tone mapping table acquisition unit 51A receives the error information transmitted from the server in step S148. When the error information is transmitted, the reproduction device 2 performs the same processing as the processing of FIG. 32 or 33 and the HDR video is output to the display device 3. Thereafter, the process ends.

On the other hand, when it is determined in step S143 that the URL of the server is not recorded, the tone mapping table acquisition unit 51A accesses the management server 152 in step S149. The tone mapping table acquisition unit 51A transmits the disc ID, the monitor ID, and the specification information and requests the management server 152 to transmit the tone mapping table.

The management server 152 is a default access destination when the URL of the server arbitrarily prepared by the author is not recorded on the optical disc 11. The URL of the management server 152 which is the default access destination may be described in a file inside the optical disc 11, such as the PlayList file.

In step S150, the tone mapping table acquisition unit 51A determines whether the tone mapping table is transmitted from the management server 152.

When it is determined in step S150 that the tone mapping table is transmitted, the tone mapping table acquisition unit 51A receives the tone mapping table transmitted from the management server 152 in step S151. When the HDR information is transmitted together with the tone mapping table, the tone mapping table acquisition unit 51A receives the HDR information.

After the tone mapping table is received, the decoding processing is performed in step S152, the processing ends. In the decoding processing, the tone mapping table and the HDR information transmitted from the management server 152 are used.

On the other hand, when it is determined in step S150 that the tone mapping table is not transmitted, the tone mapping table acquisition unit 51A receives the error information transmitted from the management server 152 in step S153. When the error information is transmitted, the reproduction device 2 performs the same processing as the processing of FIG. 32 or 33 and the HDR video is output to the display device 3. Thereafter, the process ends.

Referring next to the flowchart in FIG. 50, the decoding processing performed in steps S147 and S152 in FIG. 49 when the recording mode is mode-i will be described.

In step S161, the parameter extraction unit 71 of the decoding processing unit 56 extracts the HDR information from the SEI of the HEVC stream and outputs the HDR information to the HDR video output unit 75A. The parameter extraction unit 71 outputs the coded data of the HEVC included in the HEVC stream to the HEVC decoder 72.

In step S162, the HEVC decoder 72 decodes the coded data of the HEVC and outputs the HDR video obtained by decoding the coded data to the brightness adjustment unit 201.

In step S163, the brightness adjustment unit 201 adjusts the brightness of the HDR video based on the brightness adjustment data transmitted as the tone mapping table from the management server 152 or the like.

In step S164, the HDR video output unit 75A determines whether the HDR information is transmitted together with the brightness adjustment data from the server. When the HDR information is transmitted, the transmitted HDR information is acquired by the tone mapping table acquisition unit 51A and is supplied to the HDR video output unit 75A.

When it is determined in step S164 that the HDR information is transmitted from the server, the HDR video output unit 75A outputs the HDR information after the brightness adjustment together with the HDR information transmitted from the server in step S165.

On the other hand, when it is determined in step S164 that the HDR information is not transmitted from the server, the HDR video output unit 75A outputs the HDR video after the brightness adjustment together with the HDR information extracted by the parameter extraction unit 71 in step S166.

After the HDR video is output in step S165 or step S166, the controller 51 determines whether the reproduction ends in step S167.

When it is determined in step S167 that the reproduction is not to be ended, the controller 51 returns the process to step S161 and performs repetition of the above processing. When it is determined in step S167 that the reproduction is to be ended, the process returns to step S147 or S152 in FIG. 49 and the processing thereafter is performed.

Referring next to the flowchart in FIG. 51, the decoding processing performed in steps S147 and S152 in FIG. 49 in the case where the recording mode is mode-ii will be described.

In step S181, the parameter extraction unit 71 of the decoding processing unit 56 extracts HDR information and from the SEI of the HEVC stream. The parameter extraction unit 71 outputs the coded data of the HEVC included in the HEVC stream to the HEVC decoder 72.

In step S182, the HEVC decoder 72 decodes the coded data of the HEVC and outputs the STD video obtained by decoding to the STD-HDR conversion unit 74.

In step S183, the STD-HDR conversion unit 74 converts the STD video supplied from the HEVC decoder 72 into the HDR video based on the tone mapping definition information for STD-HDR conversion transmitted as the tone mapping table from the server.

In step S184, the HDR video output unit 75A determines whether the HDR information is transmitted together with the tone mapping definition information from the server.

When it is determined in step S184 that the HDR information is transmitted from the server, the HDR video output unit 75A outputs the HDR information obtained by conversion together with the HDR information transmitted from the server in step S185.

On the other hand, when it is determined in step S184 that the HDR information is not transmitted from the server, the HDR video output unit 75A outputs the HDR video obtained by conversion together with the HDR information extracted by the parameter extraction unit 71 in step S186.

After the HDR video is output in step S185 or step S186, the controller 51 determines whether the reproduction ends in step S187.

When it is determined in step S187 that the reproduction is not to be ended, the controller 51 returns the process to step S181 and performs repetition of the above processing. When it is determined in step S187 that the reproduction is to be ended, the process returns to step S147 or S152 in FIG. 49 and the processing thereafter is performed.

### • Process of Display Device 3

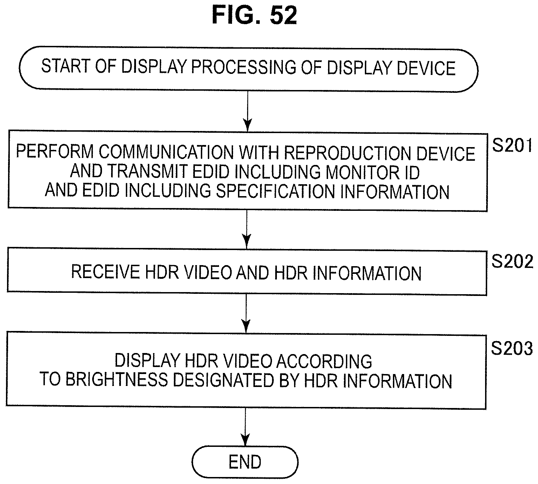

Referring next to the flowchart in FIG. 52, display processing of the display device 3 will be described.

In step S201, the controller 101 (FIG. 26) controls the HDMI communication unit 102 to perform communication with the reproduction device 2 and transmits the EDID including the monitor ID and the EDID including the specification information. Thereafter, the reproduction device 2 performs the processing described with reference to FIG. 49 and the like and outputs the HDR video to the display device 3.

In step S202, the HDMI communication unit 102 receives the HDR video and the HDR information transmitted from the reproduction device 2.

In step S203 the signal processing unit 103 causes the monitor 104 to display the image of the HDR video according to the brightness designated by the HDR information and ends the processing. That is, in this case, the brightness adjustment or the like is not performed in the display device 3.

With the above sequential processing, the reproduction device 2 can reproduce the HDR video with the optimum brightness for the display device 3 connected to the reproduction device 2.

### <7. Example in which tone mapping table is prepared on optical disc>

### [Signal processing in mode-i]

In the above description, the tone mapping table for each display device is supplied from the management server 152, but the tone mapping table may be supplied to the reproduction device 2 in a form in which it is recorded on the optical disc 11. The reproduction device 2 selects the tone mapping table for the display device 3 from the plurality of tone mapping tables recorded on the optical disc 11.

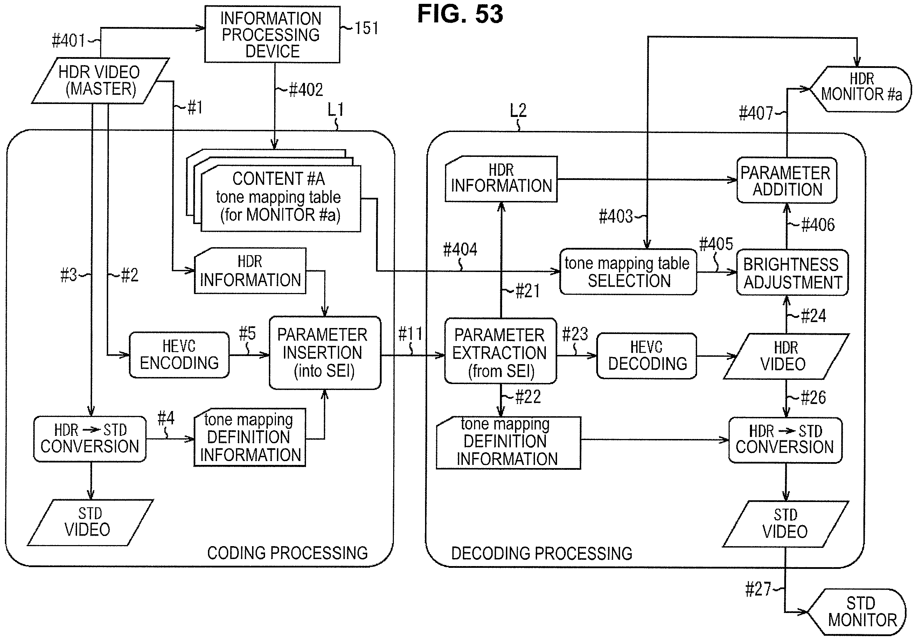

FIG. 53 is a diagram illustrating an example of processing when the recording mode is mode-i. In the processing illustrated in FIG. 53, the description of the same processing as the processing described with reference to FIG. 37 and the like will be appropriately omitted.

As illustrated at the end of arrow #401, the master HDR video is input to the information processing device 151. The monitor ID, the specification information, and the like of each display device are input to the information processing device 151 by the author. The information processing device 151 generates the brightness adjustment data based on the specification of each display device and outputs the brightness adjustment data to the recording device 1, as illustrated at the end of arrow #402.

The recording device 1 records the brightness adjustment data for each display device supplied from the information processing device 151 together with the HDR information and the HEVC stream obtained by coding the HDR video on the optical disc 11.

As illustrated at the end of arrow #403, the reproduction device 2 performs communication with the display device 3 and acquires monitor ID #a and the specification information of the display device 3 when reproducing the optical disc 11.

As illustrated at the end of arrow #404, the reproduction device 2 selects the brightness adjustment data corresponding to monitor ID #a of the display device 3 from the brightness adjustment data supplied in the form in which it is recorded on the optical disc 11. When the content recorded on the optical disc 11 is content #A, the brightness adjustment data or each display device used at the time of the reproduction of content #A is recorded on the optical disc 11. The reproduction device 2 selects the brightness adjustment data recorded in association with monitor ID #a among the recorded brightness adjustment data.

As illustrated at the end of arrow #405, the reproduction device 2 adjusts the brightness of the HDR video obtained by decoding the coded data of the HEVC based on the brightness adjustment data for the display device 3 selected and read from the optical disc 11. The reproduction device 2 adds the HDR information to the data of the HDR video after the brightness adjustment, as illustrated at the end of arrow #406, and outputs the data of the HDR video to the display device 3, as illustrated at the end of arrow #407.

### [Signal processing in mode-ii]

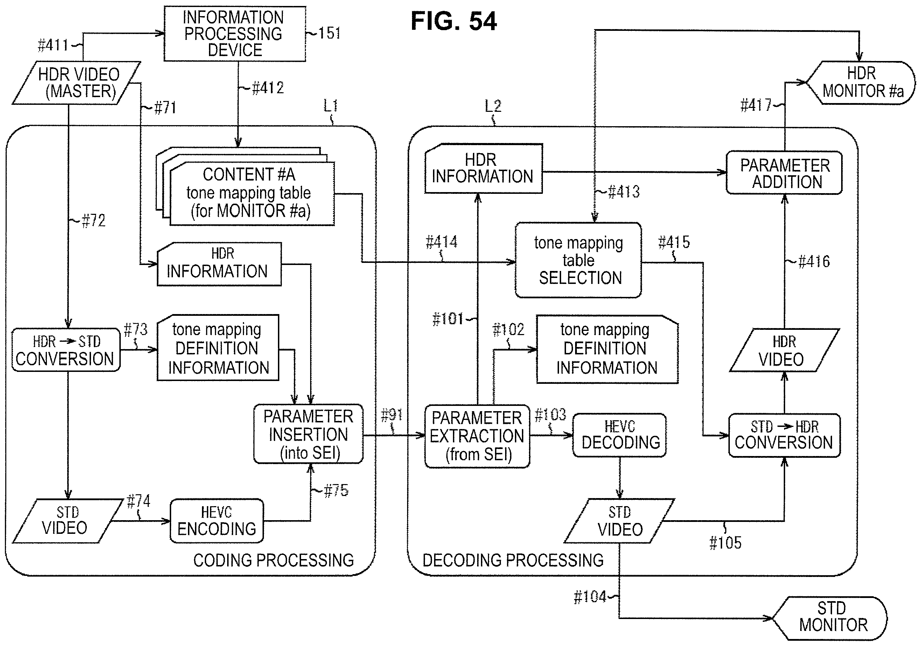

FIG. 54 is a diagram illustrating an example of processing when the recording mode is mode-ii. In the processing illustrated in FIG. 54, the description of the same processing as the processing described with reference to FIG. 39 and the like will be appropriately omitted.

As illustrated at the end of arrow #411, the master HDR video is input to the information processing device 151. The monitor ID, the specification information, and the like of each display device are input to the information processing device 151 by the author. The information processing device 151 generates the tone mapping definition information for STD-HDR conversion according to the specification of each display device by converting the HDR video into the STD video and outputs the tone mapping definition information to the recording device 1, as illustrated at the end of arrow #412.

The recording device 1 records the tone mapping definition information for each display device supplied from the information processing device 151 together with the HDR information and the HEVC stream obtained by coding the STD video on the optical disc 11.

As illustrated at the end of arrow #413, the reproduction device 2 performs communication with the display device 3 when reproducing the optical disc 11 and acquires the monitor ID #a and the specification information of the display device 3.

As illustrated at the end of arrow #414, the reproduction device 2 selects the tone mapping definition information corresponding to monitor ID #a of the display device 3 from the tone mapping definition information supplied in the form in which it is recorded on the optical disc 11. The tone mapping definition information for each display device used at the time of the reproduction of content #A is recorded on the optical disc 11. The reproduction device 2 selects the tone mapping definition information recorded in association with monitor ID #a among the recorded tone mapping definition information.

As illustrated at the end of arrow #415, the reproduction device 2 converts the STD video obtained by decoding the coded data into the HDR video using the tone mapping definition information selected and read from the optical disc 11. The reproduction device 2 adds the HDR information to the data of the HDR video obtained by performing the conversion, as illustrated at the end of arrow #416, and outputs the data of the HDR video to the display device 3, as illustrated at the end of arrow #417.

In the case of FIGS. 53 and 54, the HDR information for each display device generated by the information processing device 151 may be recorded together with the tone mapping table on the optical disc 11. In this case, the reproduction device 2 adds the HDR information for the display device 3 specified based on monitor ID #a among the HDR information recorded on the optical disc 11 to the data of the HDR video after the brightness adjustment and outputs the data of the HDR video to the display device 3.

### [Exemplary configuration of recording device]

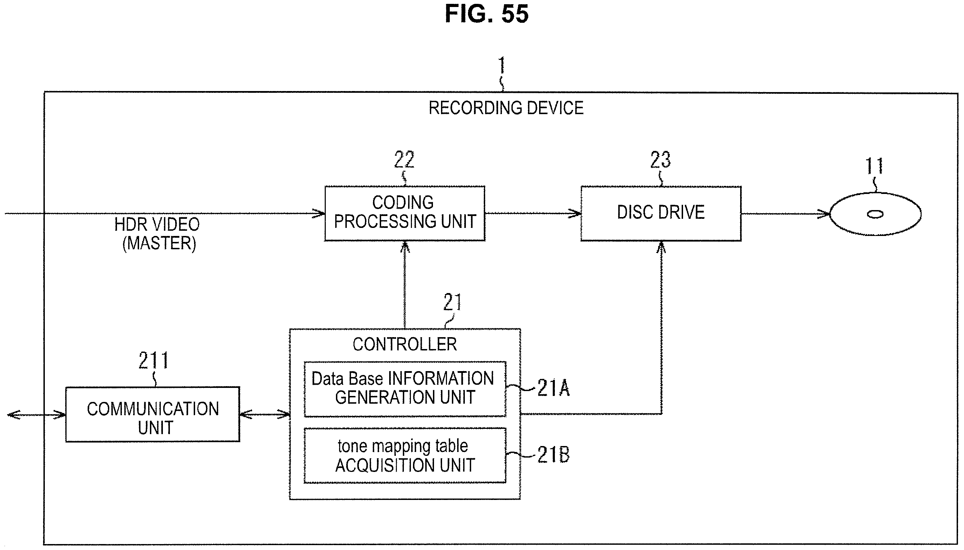

FIG. 55 is a block diagram illustrating an exemplary configuration of the recording device 1 in the recording/reproduction system illustrated in FIGS. 53 and 54.

The configuration of the recording device 1 illustrated in FIG. 55 is the same configuration of FIG. 20 except that a tone mapping table acquisition unit 21B is realized in the controller 21 and a communication unit 211 is provided.

The tone mapping table acquisition unit 21B performs communication with the information processing device 151 by controlling the communication unit 211 and acquires the tone mapping table for each display device generated by the information processing device 151. The tone mapping table acquisition unit 21B outputs the acquired tone mapping table to the disc drive 23 and records the tone mapping table together with the HEVC stream and the Data Base information on the optical disc 11.

### [Operation of each device]

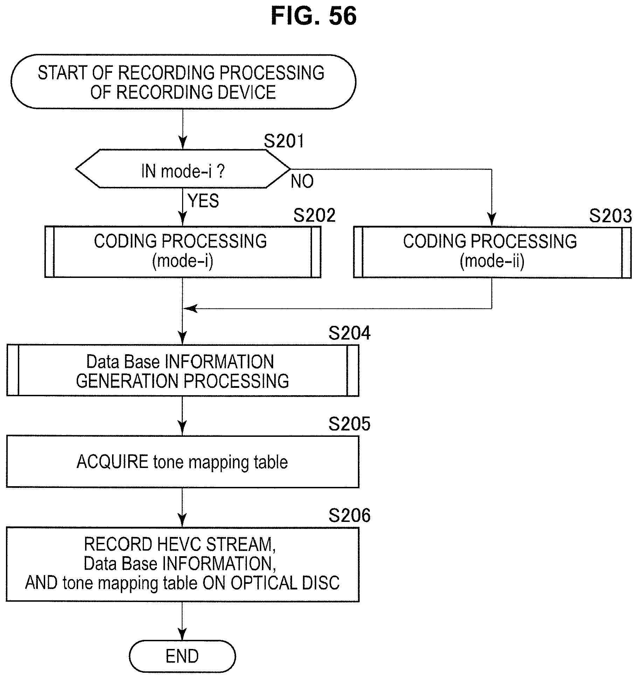

Referring next to the flowchart in FIG. 56, recording processing of the recording device 1 having the configuration illustrated in FIG. 55 will be described. The processing in FIG. 56 is basically the same as the processing in FIG. 27.

In step S201, the controller 21 of the recording device 1 determines whether the recoding mode is mode-i.

When it is determined in step S201 that the recording mode is mode-i, the coding processing unit 22 performs the coding processing in mode-i in step S202. The HEVC stream generated in the coding processing in mode-i, as described with reference to FIG. 28, is supplied to the disc drive 23.

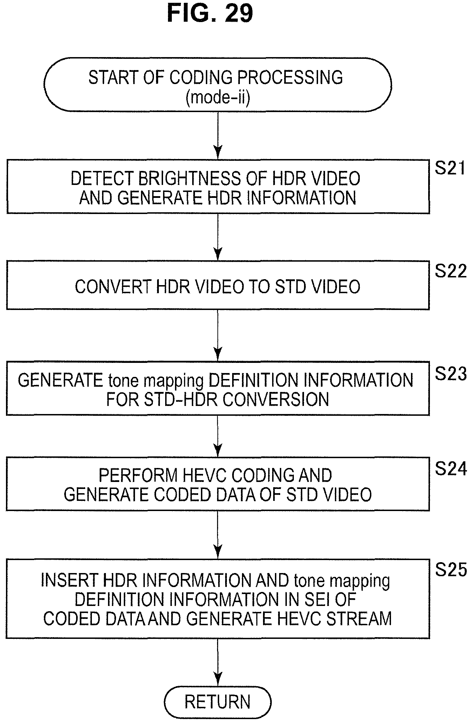

On the other hand, when it is determined that the recording mode is mode-ii in step S201, the coding processing unit 22 performs the coding processing in mode-ii in step S203. The HEVC stream generated through the coding processing in mode-ii described with reference to FIG. 29 is supplied to the disc drive 23.

In step S204, the Data Base information generation unit 21A performs Data Base information generation processing. The PlayList file and the Clip Information file generated by the Data Base information generation processing described with reference to FIG. 30 are supplied to the disc drive 23.

In step S205, the tone mapping table acquisition unit 21B controls the communication unit 211 and acquires the tone mapping table generated by the information processing device 151. The tone mapping table of each display device generated in the information processing device 151 is transmitted together with the monitor ID, the specification information, and the like of each display device from the information processing device 151. When the recording mode of the optical disc 11 is mode-i, the brightness adjustment data for each display device is transmitted. When the recording mode is mode-ii, the tone mapping definition information for each display device is transmitted. The tone mapping table acquisition unit 21B outputs a database file in which the tone mapping table for each display device is registered in association with the monitor ID, the specification information, and the like to the disc drive 23.

In step S206, the disc drive 23 records the database file including the PlayList file, the Clip Information file, the HEVC stream file, and the tone mapping table on the optical disc 11. Subsequently, the processing ends.

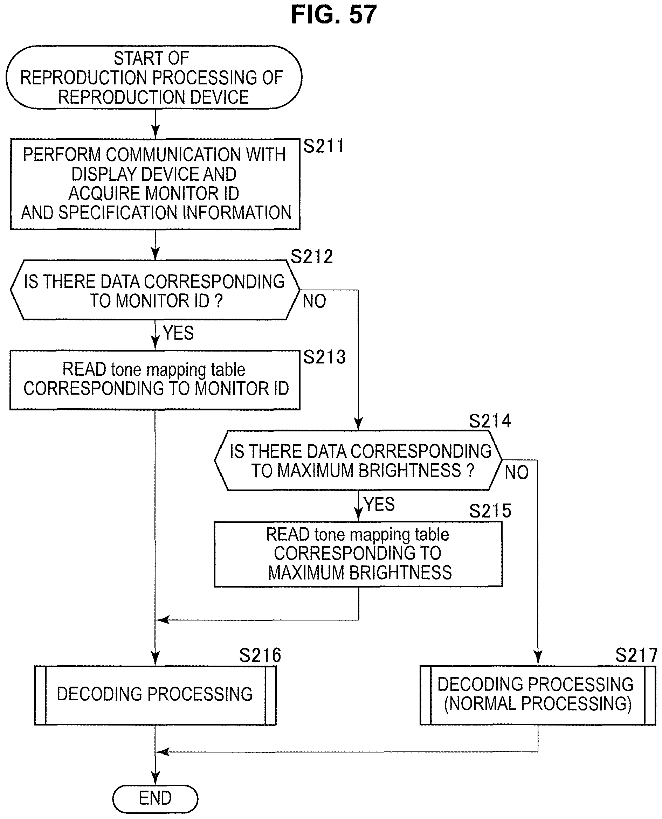

Referring next to the flowchart in FIG. 57, processing of the reproduction device 2 will be described. The processing in FIG. 57 starts, for example, when the optical disc 11 on which the data is recorded through the processing in FIG. 56 is reproduced.

In step S211, the HDMI communication unit 58 performs communication with the display device 3 and acquires the EDID including the monitor ID and the EDID including the specification information. The specification information of the display device 3 also includes information indicating the maximum brightness.

In step S212, the tone mapping table acquisition unit 51A reads the database file recorded on the optical disc 11 and determines whether there is data corresponding to the monitor ID transmitted from the reproduction device 2.

When it is determined in step S212 that there is data corresponding to the monitor ID, the tone mapping table acquisition unit 51A reads the tone mapping table corresponding to the monitor ID from the database file in step S213.

On the other hand, when it is determined in step S212 that there is no data corresponding to the monitor ID, the tone mapping table acquisition unit 51A determines whether there is data corresponding to the maximum brightness of the display device 3 in step S214.

When it is determined in step S214 that there is data corresponding to the maximum brightness, the tone mapping table acquisition unit 51A reads the tone mapping table according to the maximum brightness of the display device 3 from the database file in step S215.

After the tone mapping table is read in step S213 or S215, the decoding processing unit 56 performs the decoding processing in step S216. In the decoding processing, the decoding processing unit 56 performs the same processing as the decoding processing in FIG. 50 when the recording mode is mode-i or the decoding processing in FIG. 51 when the recording mode is mode-ii, using the tone mapping table read from the database file.

On the other hand, when it is determined in step S214 that there is no data corresponding to the maximum brightness, the decoding processing unit 56 performs normal decoding processing in step S217. The decoding processing performed in step S217 is the same as the processing described with reference to FIG. 32 or 33.

That is, when the recoding mode of the optical disc 11 is mode-i, the HDR video obtained by decoding the HEVC stream is output together with the HDR information extracted from the HEVC stream to the display device 3. When the recording mode of the optical disc 11 is mode-ii, the STD video obtained by decoding the HEVC stream is converted into the HDR video based on the tone mapping definition information for STD-HDR conversion extracted from the HEVC stream. The HDR video obtained by the conversion is output together with the HDR information extracted from the HEVC stream to the display device 3.

After the decoding processing is performed in step S216 or step S217, the process is ended.

As described above, the tone mapping table for each display device may be supplied to the reproduction device 2 in the form in which it is recorded on the optical disc 11. Accordingly, the reproduction device 2 can also display the HDR video with the optimum brightness according to the specification of the display device 3.

### <8. Example in which tone mapping table is prepared in management server or on optical disc>

In the above description, the tone mapping table is acquired from the management server 152 or the optical disc 11, but the tone mapping table may be configured to be acquired from both of the management server 152 and the optical disc 11.

For example, when the tone mapping table for the display device 3 which is an output destination of the HDR video is prepared in the management server 152, the reproduction processing is performed using the tone mapping table acquired from the management server 152. When the tone mapping table for the display device 3 is not prepared in the management server 152, the reproduction processing is performed using the tone mapping table for the display device 3 recorded on the optical disc 11.

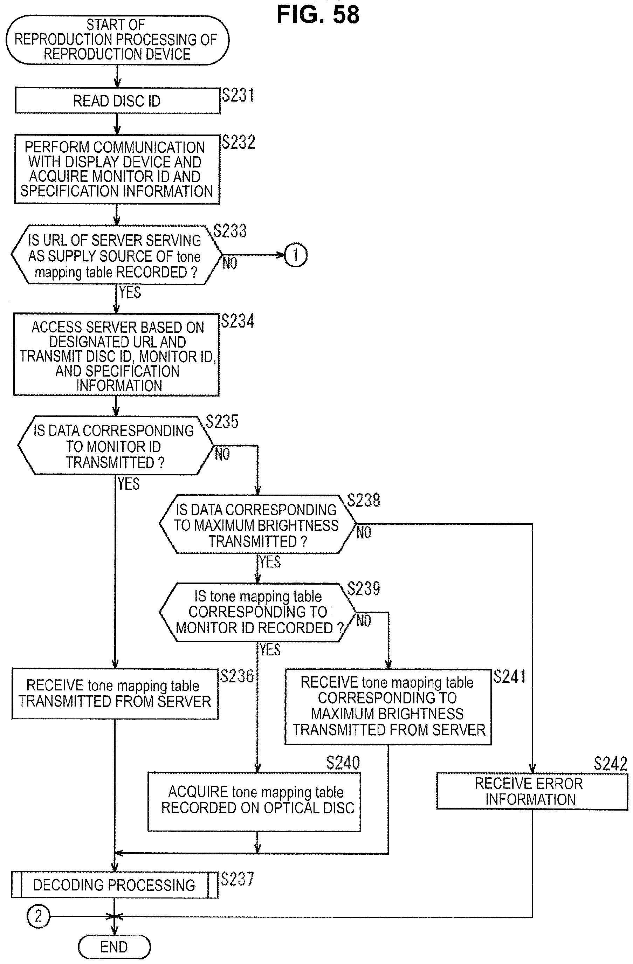

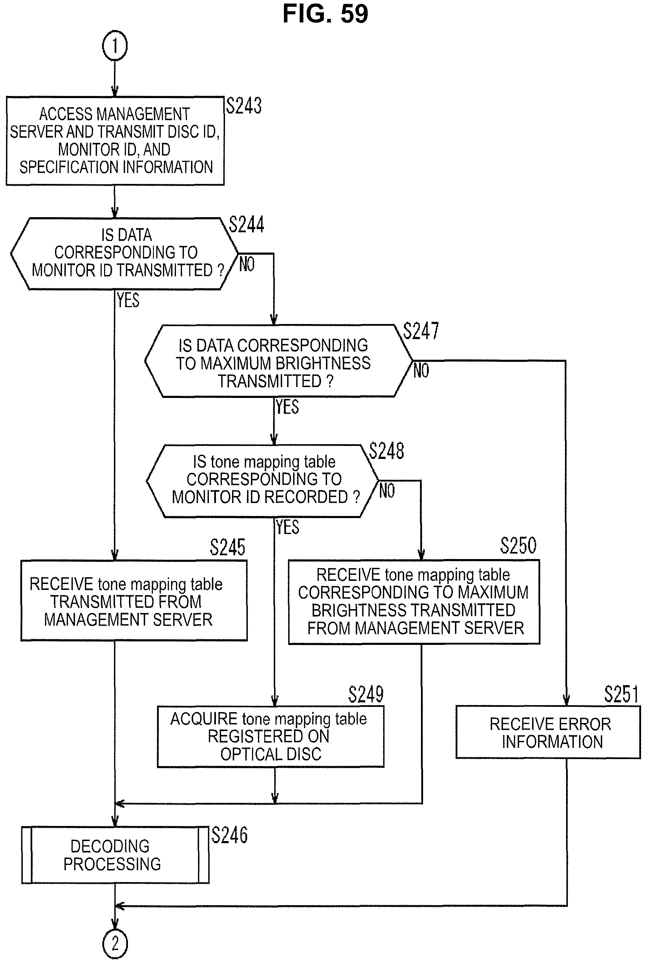

Referring to the flowcharts in FIGS. 58 and 59, processing of the reproduction device 2 reproducing content will be described.

In step S231, the tone mapping table acquisition unit 51A of the reproduction device 2 controls the disc drive 52 and reads the disc ID from the optical disc 11.

In step S232, the HDMI communication unit 58 performs communication with the display device 3 and acquires the EDID including the monitor ID of the display device 3 and the EDID including the specification information. The specification information of the display device 3 also includes information indicating the maximum brightness.

In step S233, the tone mapping table acquisition unit 51A determines whether the URL of the server serving as a supply source of the tone mapping table is recorded on the optical disc 11.

When it is determined in step S233 that the URL of the server is recorded, the tone mapping table acquisition unit 51A accesses the server based on the URL recorded on the optical disc 11 in step S234. The tone mapping table acquisition unit 51A transmits the disc ID, the monitor ID, and the specification information.

In step S235, the tone mapping table acquisition unit 51A determines whether the tone mapping table which is data registered in association with the disc ID and corresponds to the monitor ID is transmitted from the server. In the server accessed by the reproduction device 2, the same process as the process in FIG. 48 is performed. For example, when there is data corresponding to the disc ID, the tone mapping table also corresponding to the monitor ID in the data corresponding to the disc ID or the tone mapping table according to the maximum brightness is transmitted from the server.

When it is determined in step S235 that the data corresponding to the monitor ID is transmitted, the tone mapping table acquisition unit 51A receives the tone mapping table transmitted from the server in step S236. When the HDR information is transmitted together with the tone mapping table, the tone mapping table acquisition unit 51A also receives the HDR information.

After the tone mapping table is received, the decoding processing is performed in step S237, and the processing ends. The decoding processing performed in step S237 is the processing described with reference to FIGS. 50 and 51, and the tone mapping table and the HDR information transmitted from the server are used.

When it is determined in step S235 that the data corresponding to the monitor ID is not transmitted, the tone mapping table acquisition unit 51A determines in step S238 whether the data corresponding to the maximum brightness is transmitted from the server.

When it is determined in step S238 that the data corresponding to the maximum brightness is transmitted, the tone mapping table acquisition unit 51A reads the database file recorded on the optical disc 11 in step S239. The tone mapping table acquisition unit 51A determines whether the tone mapping table corresponding to the monitor ID is recorded in the database file.

When it is determined in step S239 that the tone mapping table is recorded, the tone mapping table acquisition unit 51A reads and acquires the tone mapping table corresponding to the monitor ID from the database file in step S240

On the other hand, when it is determined in step S239 that the tone mapping table corresponding to the monitor ID is not recorded, the tone mapping table acquisition unit 51A receives the tone mapping table corresponding to the maximum brightness and transmitted from the server in step S241.

After the tone mapping table is acquired from the optical disc 11 in step S240 or after the tone mapping table corresponding to the maximum brightness is received in step S241, the decoding processing is performed in step S237. Subsequently, the processing ends. Of the tone mapping table corresponding to the monitor ID acquired from the optical disc 11 and the tone mapping table corresponding to the maximum brightness acquired from the server, the former is preferentially used.

On the other hand, when it is determined in step S238 that the data corresponding to the maximum brightness is not transmitted, the tone mapping table acquisition unit 51A receives error information transmitted from the server in step S242. When the error information is transmitted, the reproduction device 2 performs the same processing as the processing in FIG. 32 or 33 and outputs the HDR video to the display device 3.

On the other hand, when it is determined in step S233 that the URL of the server is not recorded on the optical disc 11, the tone mapping table acquisition unit 51A accesses the management server 152 in step S243 (FIG. 59). The tone mapping table acquisition unit 51A transmits the disc ID, the monitor ID, and the specification information to the management server 152 and requests the management server 152 to transmit the tone mapping table.

In step S244, the tone mapping table acquisition unit 51A determines whether the tone mapping table which is the data registered in association with the disc ID and corresponds to the monitor ID is transmitted from the management server 152. The management server 152 performs the same processing as the processing in FIG. 48.

When it is determined in step S244 that the data corresponding to the monitor ID is transmitted, the tone mapping table acquisition unit 51A receives the tone mapping table transmitted from the management server 152 in step S245. When the HDR information is transmitted together with the tone mapping table, the tone mapping table acquisition unit 51A also receives the HDR information.

After the tone mapping table is received, the decoding processing is performed in step S246, and the processing ends. The decoding processing performed in step S246 is the processing described with reference to FIGS. 50 and 51, and the tone mapping table and the HDR information transmitted from the management server 152 are used.

When it is determined in step S244 that the data corresponding to the monitor ID is not transmitted, the tone mapping table acquisition unit 51A determines in step S247 whether the data corresponding to the maximum brightness is transmitted from the management server 152.

When it is determined in step S247 that the data corresponding to the maximum brightness is transmitted, the tone mapping table acquisition unit 51A reads the database file recorded on the optical disc 11 in step S248. The tone mapping table acquisition unit 51A determines whether the tone mapping table corresponding to the monitor ID is recorded in the database file.

When it is determined in step S248 that the tone mapping table is recorded, the tone mapping table acquisition unit 51A reads and acquires the tone mapping table corresponding to the monitor ID from the database file in step S249

On the other hand, when it is determined in step S248 that the tone mapping table corresponding to the monitor ID is not recorded, the tone mapping table acquisition unit 51A receives the tone mapping table corresponding to the maximum brightness and transmitted from the management server 152 in step S250.

After the tone mapping table is acquired from the optical disc 11 in step S249 or after the tone mapping table corresponding to maximum brightness is received in step S250, the decoding processing is performed in step S246. Subsequently, the processing ends.

On the other hand, when it is determined in step S247 that the data corresponding to the maximum brightness is not transmitted, the tone mapping table acquisition unit 51A receives error information transmitted from the management server 152 in step S251. When the error information is transmitted, the reproduction device 2 performs the same processing as the processing in FIG. 32 or 33 and outputs the HDR video to the display device 3.

As described above, the tone mapping table transmitted from the server and the tone mapping table recorded on the optical disc 11 can also be appropriately used in place of each other.

### <9. Example in which display of HDR video is realized based on data acquired from management server>

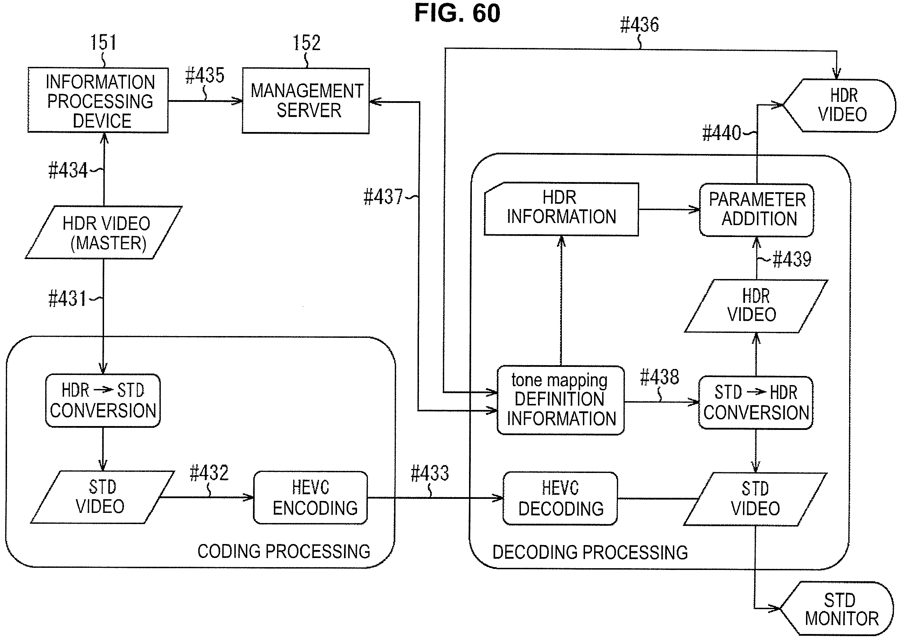

FIG. 60 is a diagram illustrating an example of other processing in the recording/reproduction system.

In the example of FIG. 60, the optical disc 11 recording the STD video is reproduced by the reproduction device 2. The conversion of the STD video into the HDR video is performed using the tone mapping definition information for STD-HDR conversion acquired from the management server 152. That is, in this example, the tone mapping definition information for STD-HDR conversion is not recorded on the optical disc 11, and the HDR video is reproduced using the data of the STD video recorded on the optical disc 11 and information acquired from the management server 152.

When the master HDR video is input, the recording device 1 converts the master HDR video into the STD video, as illustrated at the end of arrow #431. The image of the STD video obtained by the conversion is displayed on a monitor (not illustrated).

Furthermore, as illustrated at the end of the arrow #432, the recording device 1 performs coding on the STD video, which has been obtained by converting the master HDR video, by HEVC.

The recording device 1 records the HEVC stream obtained by the coding with the HEVC on the optical disc 11 in the BD format and supplies the HEVC stream to the reproduction device 2, as illustrated at the end of arrow #433. In the SEI of the HEVC stream, the tone mapping definition information or information regarding the HDR video such as the HDR information are not recorded.

On the other hand, the master HDR video is input to the information processing device 151, as illustrated at the end of arrow #434. The disc ID of the optical disc 11, the monitor ID and the specification information of each display device, and the like are input to the information processing device 151 by the author.

The information processing device 151 converts the HDR video into the STD video and generates the tone mapping definition information for the STD-HDR conversion according to the specification of each display device. The information processing device 151 detects the brightness of the HDR video and generates the HDR information. As illustrated at the end of arrow #435, the information processing device 151 outputs the generated tone mapping definition information and HDR information together with the disc ID, the monitor ID of each display device, and the specification information to the management server 152 for registration in the database.

As illustrated at the end of arrow #436, the reproduction device 2 performs communication with the display device 3 when reproducing the optical disc 11 and acquires the monitor ID and the specification information of the display device 3.

As illustrated by arrow #437, the reproduction device 2 accesses the management server 152 and requests the management server 152 to transmit the tone mapping table by transmitting the disc ID of the optical disc 11 and the monitor ID and the specification information of the display device 3. The reproduction device 2 acquires the tone mapping definition information and the HDR information transmitted from the management server 152 in response to the request. The HDR information and the tone mapping definition information registered in association with, for example, the disc ID and the monitor ID transmitted by the reproduction device 2 among the information registered in the database are transmitted from the management server 152.

As illustrated at the end of arrow #438, the reproduction device 2 converts the STD video obtained by decoding the coded data using the tone mapping definition information for STD-HDR conversion transmitted from the management server 152 into the HDR video. The reproduction device 2 adds the HDR information transmitted from the management server 152 to the data of the HDR video obtained by the conversion, as illustrated at the end of arrow #439, and outputs the data of the HDR video to the display device 3, as illustrated by arrow #440.

Accordingly, even when the information regarding the HDR video is not prepared on the optical disc 11, the HDR video can be displayed based on the STD video recorded on the optical disc 11. Since it is not necessary even for the author to record the HDR video and the information regarding the HDR video on the optical disc 11, the content can be easily supplied using the HDR video.

The tone mapping definition information for STD-HDR conversion and the HDR information may be supplied to the reproduction device 2 based on only the disc ID without using the monitor ID or the specification information of the display device 3. In this case, the management server 152 manages the database in which the disc ID, the tone mapping definition information for STD-HDR conversion, and the HDR information are associated. The HDR information and the tone mapping definition information for STD-HDR conversion corresponding to the disc ID transmitted from the reproduction device 2 are supplied to the reproduction device 2.

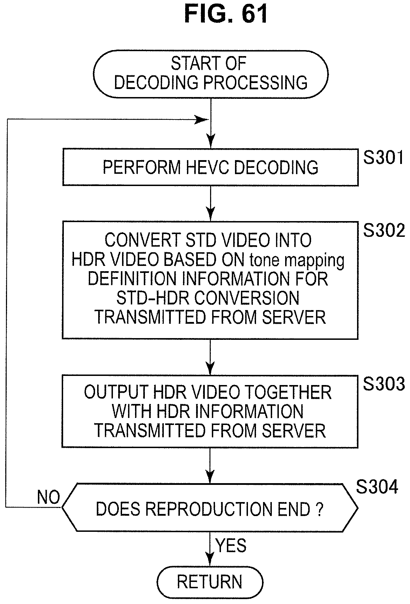

Here, referring to the flowchart in FIG. 61, decoding processing of the reproduction device 2 in the recording/reproduction system in FIG. 60 will be described.

The decoding processing in FIG. 61 is performed in step S147 or S152 in FIG. 49 after the HDR information and the tone mapping definition information for STD-HDR conversion transmitted from the management server 152 are received. The tone mapping definition information for STD-HDR conversion acquired by the tone mapping table acquisition unit 51A (FIG. 44) is output to the STD-HDR conversion unit 74 of the decoding processing unit 56, and the HDR information is output to the HDR video output unit 75A.

In the reproduction device 2 of the recording/reproduction system illustrated in FIG. 60, the same processing as the processing in FIG. 49 is performed except for the decoding processing of step S147 or S152. When error information is transmitted from the server, the STD video recorded on the optical disc 11 is reproduced.

In step S301, the HEVC decoder 72 of the decoding processing unit 56 decodes the coded data of the HEVC read from the optical disc 11 and outputs the STD video obtained by the decoding to the STD-HDR conversion unit 74.

In step S302, the STD-HDR conversion unit 74 converts the STD video supplied from the HEVC decoder 72 into the HDR video based on the tone mapping definition information for STD-HDR conversion transmitted as the tone mapping table from the server.

In step S303, the HDR video output unit 75A outputs the HDR video obtained by the conversion together with the HDR information transmitted from the server.

In step S304, the controller 51 determines whether the reproduction ends. When it is determined that the reproduction does not end, the processing returns to step S301 and the foregoing processing is repeatedly performed. When it is determined in step S304 that the reproduction ends, the processing returns to step S147 or S152 in FIG. 49 and the subsequent processing is performed.

The information processing device 151 performs the processing described with reference to FIG. 46. The management server 152 performs the processing described with reference to FIGS. 47 and 48.

### <10. Modification examples>

The information processing device 151 and the management server 152 are provided as different devices above, but the functions of both the information processing device 151 and the management server 152 may be realized on one device. The function of the recording device 1 and the function of the information processing device 151 can also be realized on one device.

In the above description, the Content Certificate ID of the AACS is used as the disc ID and the Vender/Product ID defined in CEA-861 is used as the monitor ID. However, different types of information may be used.

The sequential processing described above may be implemented by hardware or may be implemented by software. When implementing the sequential processing by software, a program constituting the software is installed to a computer built into a dedicated hardware, a general-use personal computer, or the like.

A program to be installed is recorded on the removable media 171 of FIG. 41 formed as an optical disc (a Compact Disc-Read Only Memory (CD-ROM), a Digital Versatile Disc (DVD), or the like), a semiconductor memory, or the like to be supplied. The program may be supplied through a wired or wireless transmission medium such as a local area network, the Internet, or digital broadcast. The program can be installed in advance in the ROM 162 or the storage unit 168.

Note that the program executed by the computer may be a program in which the processing is performed in time sequence in the order described in the present description or may be program in which the processing is performed in a parallel manner or at a required timing such as when called.

Note that in the present description, a system refers to an assembly of a plurality of components (a device, a module (parts), and the like) regardless of whether all of the components are in the same housing or not. Accordingly, a plurality of devices that are housed in different housings and that are connected to each other through a network, and a single device in which a plurality of modules are housed in a single housing are both a system.

The embodiment of the present technology is not limited to the above-described embodiment and various modifications can be made without departing from the scope of the claims.

For example, the present disclosure can adopt a configuration of cloud computing which processes by allocating and connecting one function by a plurality of apparatuses through a network.

Further, each step described by the above mentioned flow charts can be executed by one apparatus or by allocating a plurality of apparatuses.

In addition, in the case where a plurality of processes is included in one step, the plurality of processes included in this one step can be executed by one apparatus or by allocating a plurality of apparatuses.

Note that the effects described in the present description are merely exemplifications and the effects are not limited to those described in the present description, and there may be other effects.

### (1)

### Reference Signs List

- 1: recording device
- 2: reproduction device
- 3: display device
- 11: optical disc
- 21: controller
- 21A: Data Base information generation unit
- 21B: tone mapping table acquisition unit
- 22: coding processing unit
- 23: disc drive
- 31: HDR information generation unit
- 32: HEVC encoder
- 33: HDR-STD conversion unit
- 34: definition information generation unit
- 35: HEVC stream generation unit
- 51: controller
- 51A: tone mapping table acquisition unit
- 52: disc drive
- 53: memory
- 56: decoding processing unit
- 58: HDMI communication unit
- 71: parameter extraction unit
- 72: HEVC decoder
- 73: HDR-STD conversion unit
- 74: STD-HDR conversion unit
- 75: output unit

## Claims

1. A reproduction device (2) comprising:
a reading unit configured to read second coded data from a recording medium (11) recording the second coded data between first coded data of a standard video which is a video in a first brightness range and the second coded data of an extended video which is a video in a second brightness range broader than the first brightness range;
a first acquisition unit configured to perform communication with a display device (3) capable of displaying the extended video and acquire identification information of the display device;
a second acquisition unit configured to acquire brightness adjustment data according to a specification of the display device (3) used to adjust brightness of the extended video based on the identification information of the display device (3);
a decoding unit (56) configured to decode the second coded data;
an adjustment unit configured to adjust the brightness of the extended video obtained by decoding the second coded data based on the brightness adjustment data; and
an output unit configured to output data of the extended video after the brightness adjustment together with brightness characteristic information representing a characteristic of the brightness of the extended video to the display device;
wherein the second acquisition unit acquires the brightness adjustment data from a server connected through a network,
wherein the reading unit reads identification information of the recording medium (11) from the recording medium, wherein the recording medium is an optical disc (11),
wherein the first acquisition unit acquires specification information indicating the specification of the display device from the display device (3), and
wherein the second acquisition unit transmits, to the server, a request for the brightness adjustment data, the request comprising the identification information of the recording medium, the identification information of the display device, and the specification information of the display device, and the second acquisition unit acquires, from the server, the brightness adjustment data according to the specification of the display device indicated by the specification information among the brightness adjustment data managed in association with the identification information of the recording medium in the server and the identification information.

2. The reproduction device according to claim 1,
wherein the recording medium (11) is a Blu-ray disc, and
wherein a URL of the server is described in a PlayList file or another file recorded on the recording medium.

3. The reproduction device according to claim 1,
wherein the reading unit reads identification information of the recording medium from the recording medium, and
wherein the second acquisition unit transmits the identification information of the recording medium and the identification information of the display device to the server and acquires the brightness adjustment data managed in association with the identification information of the recording medium and the identification information of the display device in the server.

4. The reproduction device according to claim 1,
wherein the second coded data includes the brightness characteristic information as auxiliary information,
wherein the second acquisition unit acquires the brightness characteristic information together with the brightness adjustment data when the brightness characteristic information is managed in the server, and
wherein the output unit outputs the brightness characteristic information acquired by the second acquisition unit when the brightness characteristic information is acquired by the second acquisition unit, and the output unit outputs the brightness characteristic information included in the second coded data when the brightness characteristic information is not acquired by the second acquisition unit.

5. The reproduction device according to claim 1,
wherein the second acquisition unit acquires the brightness adjustment data recorded in association with the identification information of the display device among the plurality of pieces of brightness adjustment data recorded on the recording medium, preferably wherein the first acquisition unit acquires specification information indicating the specification of the display device from the display device, and
wherein the second acquisition unit acquires the brightness adjustment data according to the specification of the display device indicated by the specification information when there is no brightness adjustment data recorded in association with the identification information of the display device.

6. A reproduction method comprising steps of:
reading second coded data from a recording medium recording the second coded data between first coded data of a standard video which is a video in a first brightness range and the second coded data of an extended video which is a video in a second brightness range broader than the first brightness range;
performing communication with a display device capable of displaying the extended video and acquiring identification information of the display device;
acquiring brightness adjustment data according to a specification of the display device used to adjust brightness of the extended video based on the identification information of the display device;
decoding the second coded data;
adjusting the brightness of the extended video obtained by decoding the second coded data based on the brightness adjustment data; and
outputting data of the extended video after the brightness adjustment together with brightness characteristic information representing a characteristic of the brightness of the extended video to the display device;
wherein acquiring brightness adjustment data comprises acquiring the brightness adjustment data from a server connected through a network;
wherein identification information of the recording medium is read from the recording medium, wherein the recording medium is an optical disc,
wherein specification information is acquired indicating the specification of the display device from the display device, and
wherein a request for the brightness adjustment data is transmitted to the server, the request comprising the identification information of the recording medium, the identification information of the display device, and the specification information of the display device, and the brightness adjustment data is acquired from the server according to the specification of the display device indicated by the specification information among the brightness adjustment data managed in association with the identification information of the recording medium in the server and the identification information.

## Patentansprüche

1. Wiedergabevorrichtung (2), umfassend:
eine Leseeinheit, die zum Auslesen von zweiten codierten Daten aus einem Aufzeichnungsmedium (11) konfiguriert ist, das die zweiten codierten Daten zwischen ersten codierten Daten eines Standardvideos, das ein Video in einem ersten Helligkeitsbereich ist, und den zweiten codierten Daten eines erweiterten Videos aufzeichnet, das ein Video in einem zweiten Helligkeitsbereich ist, der breiter als der erste Helligkeitsbereich ist;
eine erste Abrufeinheit, die zum Durchführen von Kommunikation mit einer Anzeigevorrichtung (3), die zum Anzeigen des erweiterten Videos imstande ist, und Abrufen von Identifikationsinformationen der Anzeigevorrichtung konfiguriert ist;
eine zweite Abrufeinheit, die so konfiguriert ist, dass sie Helligkeitseinstellungsdaten gemäß einer Spezifikation der Anzeigevorrichtung (3), die zum Einstellen von Helligkeit des erweiterten Videos verwendet werden, basierend auf den Identifikationsinformationen der Anzeigevorrichtung (3) abruft;
eine Decodiereinheit (56), die zum Decodieren der zweiten codierten Daten konfiguriert ist;
eine Einstelleinheit, die so konfiguriert ist, dass sie die Helligkeit des erweiterten Videos, das durch das Decodieren der zweiten codierten Daten erhalten wird, basierend auf den Helligkeitseinstellungsdaten einstellt; und
eine Ausgabeeinheit, die so konfiguriert ist, dass sie das erweiterte Video nach der Helligkeitseinstellung zusammen mit Helligkeitseigenschaftsinformationen, die eine Eigenschaft der Helligkeit des erweiterten Videos darstellen, an die Anzeigevorrichtung ausgibt;
wobei die zweite Abrufeinheit die Helligkeitseinstellungsdaten von einem Server abruft, der durch ein Netzwerk verbunden ist,
wobei die Leseeinheit Identifikationsinformationen des Aufzeichnungsmediums (11) aus dem Aufzeichnungsmedium ausliest, wobei das Aufzeichnungsmedium eine optische Platte (11) ist,
wobei die erste Abrufeinheit Spezifikationsinformationen, welche die Spezifikation der Anzeigevorrichtung angeben, von der Anzeigevorrichtung (3) abruft, und
wobei die zweite Abrufeinheit eine Anforderung der Helligkeitseinstellungsdaten an den Server sendet, wobei die Anforderung die Identifikationsinformationen des Aufzeichnungsmediums, die Identifikationsinformationen der Anzeigevorrichtung und die Spezifikationsinformationen der Anzeigevorrichtung umfasst, und die zweite Abrufeinheit die Helligkeitseinstellungsdaten gemäß der durch die Spezifikationsinformationen angegebenen Spezifikation der Anzeigevorrichtung unter den Helligkeitseinstellungsdaten, die in Verbindung mit den Identifikationsinformationen des Aufzeichnungsmediums im Server und den Identifikationsinformationen verwaltet werden, vom Server abruft.

2. Wiedergabevorrichtung nach Anspruch 1,
wobei das Aufzeichnungsmedium (11) eine Blu-ray-Disc ist, und
wobei eine URL des Servers in einer PlayList-Datei oder einer anderen Datei beschrieben ist, die auf dem Aufzeichnungsmedium aufgezeichnet ist.

3. Wiedergabevorrichtung nach Anspruch 1,
wobei die Leseeinheit Identifikationsinformationen des Aufzeichnungsmediums aus dem Aufzeichnungsmedium ausliest, und
wobei die zweite Abrufeinheit die Identifikationsinformationen des Aufzeichnungsmediums und die Identifikationsinformationen der Anzeigevorrichtung an den Server sendet und die Helligkeitseinstellungsdaten abruft, die in Verbindung mit den Identifikationsinformationen des Aufzeichnungsmediums und den Identifikationsinformationen der Anzeigevorrichtung im Server verwaltet werden.

4. Wiedergabevorrichtung nach Anspruch 1,
wobei die zweiten codierten Daten die Helligkeitseigenschaftsinformationen als Zusatzinformationen umfassen,
wobei die zweite Abrufeinheit die Helligkeitseigenschaftsinformationen zusammen mit den Helligkeitseinstellungsdaten abruft, wenn die Helligkeitseigenschaftsinformationen im Server verwaltet werden, und
wobei die Ausgabeeinheit die durch die zweite Abrufeinheit abgerufenen Helligkeitseigenschaftsinformationen ausgibt, wenn die Helligkeitseigenschaftsinformationen durch die Abrufeinheit abgerufen werden, und die Ausgabeeinheit die in den zweiten codierten Daten umfassten Helligkeitseigenschaftsinformationen ausgibt, wenn die Helligkeitseigenschaftsinformationen nicht durch die zweite Abrufeinheit abgerufen werden.

5. Wiedergabevorrichtung nach Anspruch 1,
wobei die zweite Abrufeinheit die in Verbindung mit den Identifikationsinformationen der Anzeigevorrichtung aufgezeichneten Helligkeitseinstellungsdaten unter der Mehrzahl von auf dem Aufzeichnungsmedium aufgezeichneten Helligkeitseinstellungsdatenelementen abruft, wobei die erste Abrufeinheit vorzugsweise Spezifikationsinformationen von der Anzeigevorrichtung abruft, welche die Spezifikation der Anzeigevorrichtung angeben, und
wobei die zweite Abrufeinheit die Helligkeitseinstellungsdaten gemäß der durch die Spezifikationsinformationen angegebenen Spezifikation der Anzeigevorrichtung abruft, wenn keine Helligkeitseinstellungsdaten in Verbindung mit den Identifikationsinformationen der Anzeigevorrichtung aufgezeichnet sind.

6. Wiedergabeverfahren, umfassend die folgenden Schritte:
Auslesen von zweiten codierten Daten aus einem Aufzeichnungsmedium, das die zweiten codierten Daten zwischen ersten codierten Daten eines Standardvideos, das ein Video in einem ersten Helligkeitsbereich ist, und den zweiten codierten Daten eines erweiterten Videos aufzeichnet, das ein Video in einem zweiten Helligkeitsbereich ist, der breiter als der erste Helligkeitsbereich ist;
Durchführen von Kommunikation mit einer Anzeigevorrichtung, die zum Anzeigen des erweiterten Videos imstande ist, und Abrufen von Identifikationsinformationen der Anzeigevorrichtung;
Abrufen von Helligkeitseinstellungsdaten gemäß einer Spezifikation der Anzeigevorrichtung, die zum Einstellen von Helligkeit des erweiterten Videos verwendet werden, basierend auf den Identifikationsinformationen der Anzeigevorrichtung;
Decodieren der zweiten codierten Daten;
Einstellen der Helligkeit des erweiterten Videos, das durch das Decodieren der zweiten codierten Daten erhalten wird, basierend auf den Helligkeitseinstellungsdaten; und
Ausgeben des erweiterten Videos nach der Helligkeitseinstellung an die Anzeigevorrichtung zusammen mit Helligkeitseigenschaftsinformationen, die eine Eigenschaft der Helligkeit des erweiterten Videos darstellen;
wobei das Abrufen von Helligkeitseinstellungsdaten ein Abrufen der Helligkeitseinstellungsdaten von einem Server umfasst, der durch ein Netzwerk verbunden ist;
wobei Identifikationsinformationen des Aufzeichnungsmediums aus dem Aufzeichnungsmedium ausgelesen werden, wobei das Aufzeichnungsmedium eine optische Platte ist,
wobei Spezifikationsinformationen, welche die Spezifikation der Anzeigevorrichtung angeben, von der Anzeigevorrichtung abgerufen werden, und
wobei eine Anforderung der Helligkeitseinstellungsdaten an den Server gesendet wird, wobei die Anforderung die Identifikationsinformationen des Aufzeichnungsmediums, die Identifikationsinformationen der Anzeigevorrichtung und die Spezifikationsinformationen der Anzeigevorrichtung umfasst, und die Helligkeitseinstellungsdaten gemäß der durch die Spezifikationsinformationen angegebenen Spezifikation der Anzeigevorrichtung unter den Helligkeitseinstellungsdaten, die in Verbindung mit den Identifikationsinformationen des Aufzeichnungsmediums im Server und den Identifikationsinformationen verwaltet werden, vom Server abgerufen werden.

## Revendications

1. Dispositif de reproduction (2) comprenant :
une unité de lecture configurée pour lire des secondes données codées à partir d'un support d'enregistrement (11) qui enregistre les secondes données codées entre des premières données codées d'une vidéo standard qui est une vidéo dans une première plage de luminance et les secondes données codées d'une vidéo étendue qui est une vidéo dans une seconde plage de luminance plus large que la première plage de luminance ;
une première unité d'acquisition configurée pour réaliser une communication avec un dispositif d'affichage (3) capable d'afficher la vidéo étendue et d'acquérir des informations d'identification du dispositif d'affichage ;
une seconde unité d'acquisition configurée pour acquérir des données de réglage de luminance conformément à une spécification du dispositif d'affichage (3) utilisées pour régler la luminance de la vidéo étendue en fonction des informations d'identification du dispositif d'affichage (3) ;
une unité de décodage (56) configurée pour décoder les secondes données codées ;
une unité de réglage configurée pour régler la luminance de la vidéo étendue obtenue en décodant les secondes données codées en fonction des données de réglage de luminance ; et
une unité de sortie configurée pour délivrer des données de la vidéo étendue après le réglage de luminance avec des informations de caractéristique de luminance représentant une caractéristique de la luminance de la vidéo étendue au dispositif d'affichage ;
dans lequel la seconde unité d'acquisition acquiert les données de réglage de luminance à partir d'un serveur connecté par le biais d'un réseau,
dans lequel l'unité de lecture lit des informations d'identification du support d'enregistrement (11) à partir du support d'enregistrement, le support d'enregistrement étant un disque optique (11),
dans lequel la première unité d'acquisition acquiert des informations de spécification indiquant la spécification du dispositif d'affichage à partir du dispositif d'affichage (3), et
dans lequel la seconde unité d'acquisition transmet, au serveur, une demande portant sur les données de réglage de luminance, la demande comprenant les informations d'identification du support d'enregistrement, les informations d'identification du dispositif d'affichage, et les informations de spécification du dispositif d'affichage, et la seconde unité d'acquisition acquiert, à partir du serveur, les données de réglage de luminance conformément à la spécification du dispositif d'affichage indiquée par les informations de spécification parmi les données de réglage de luminance gérées en association avec les informations d'identification du support d'enregistrement dans le serveur et les informations d'identification.

2. Dispositif de reproduction selon la revendication 1,
dans lequel le support d'enregistrement (11) est un disque Blu-ray, et
dans lequel un URL du serveur est décrit dans un fichier PlayList ou un autre fichier enregistré sur le support d'enregistrement.

3. Dispositif de reproduction selon la revendication 1,
dans lequel l'unité de lecture lit des informations d'identification du support d'enregistrement à partir du support d'enregistrement, et
dans lequel la seconde unité d'acquisition transmet les informations d'identification du support d'enregistrement et les informations d'identification du dispositif d'affichage au serveur et acquiert les données de réglage de luminance gérées en association avec les informations d'identification du support d'enregistrement et les informations d'identification du dispositif d'affichage dans le serveur.

4. Dispositif de reproduction selon la revendication 1,
dans lequel les secondes données codées comportent les informations de caractéristique de luminance comme informations auxiliaires,
dans lequel la seconde unité d'acquisition acquiert les informations de caractéristique de luminance ainsi que les données de réglage de luminance quand les informations de caractéristique de luminance sont gérées dans le serveur, et
dans lequel l'unité de sortie délivre les informations de caractéristique de luminance acquises par la seconde unité d'acquisition quand les informations de caractéristique de luminance sont acquises par la seconde unité d'acquisition, et l'unité de sortie délivre les informations de caractéristique de luminance incluses dans les secondes données codées quand les informations de caractéristique de luminance ne sont pas acquises par la seconde unité d'acquisition.

5. Dispositif de reproduction selon la revendication 1,
dans lequel la seconde unité d'acquisition acquiert les données de réglage de luminance enregistrées en association avec les informations d'identification du dispositif d'affichage parmi la pluralité d'éléments de données de réglage de luminance enregistrés sur le support d'enregistrement, de préférence dans lequel la première unité d'acquisition acquiert des informations de spécification indiquant la spécification du dispositif d'affichage à partir du dispositif d'affichage, et
dans lequel la seconde unité d'acquisition acquiert les données de réglage de luminance conformément à la spécification du dispositif d'affichage indiquée par les informations de spécification quand aucune donnée de réglage de luminance n'est enregistrée en association avec les informations d'identification du dispositif d'affichage.

6. Procédé de reproduction comprenant des étapes de :
lecture de secondes données codées à partir d'un support d'enregistrement qui enregistre les secondes données codées entre des premières données codées d'une vidéo standard qui est une vidéo dans une première plage de luminance et les secondes données codées d'une vidéo étendue qui est une vidéo dans une seconde plage de luminance plus large que la première plage de luminance ;
réaliser une communication avec un dispositif d'affichage capable d'afficher la vidéo étendue et d'acquérir des informations d'identification du dispositif d'affichage ;
acquérir des données de réglage de luminance conformément à une spécification du dispositif d'affichage utilisées pour régler la luminance de la vidéo étendue en fonction des informations d'identification du dispositif d'affichage ;
décoder les secondes données codées ;
régler la luminance de la vidéo étendue obtenue en décodant les secondes données codées en fonction des données de réglage de luminance ; et
délivrer des données de la vidéo étendue après le réglage de luminance avec des informations de caractéristique de luminance représentant une caractéristique de la luminance de la vidéo étendue au dispositif d'affichage ;
dans lequel l'acquisition des données de réglage de luminance comprend l'acquisition des données de réglage de luminance à partir d'un serveur connecté par le biais d'un réseau,
dans lequel des informations d'identification du support d'enregistrement sont lues à partir du support d'enregistrement, le support d'enregistrement étant un disque optique,
dans lequel des informations de spécification sont acquises indiquant la spécification du dispositif d'affichage à partir du dispositif d'affichage, et
dans lequel une demande portant sur les données de réglage de luminance est transmise au serveur, la demande comprenant les informations d'identification du support d'enregistrement, les informations d'identification du dispositif d'affichage, et les informations de spécification du dispositif d'affichage, et les données de réglage de luminance sont acquises à partir du serveur conformément à la spécification du dispositif d'affichage indiquée par les informations de spécification parmi les données de réglage de luminance gérées en association avec les informations d'identification du support d'enregistrement dans le serveur et les informations d'identification.
